(19) Europäisches Patentamt
European Patent Office
Office européen des brevets

(11) EP 4 289 887 B1

(12) **EUROPEAN PATENT SPECIFICATION**

(45) Date of publication and mention of the grant of the patent:
**14.01.2026 Bulletin 2026/03**

(21) Application number: **22749799.7**

(22) Date of filing: **03.02.2022**

(51) International Patent Classification (IPC):
***B29B 7/42*** (2006.01) ***B29B 7/48*** (2006.01)
***B29B 7/72*** (2006.01) ***B29B 7/90*** (2006.01)
***B29B 7/92*** (2006.01) ***B29B 9/12*** (2006.01)
***B29B 9/14*** (2006.01) ***B29B 9/16*** (2006.01)
***B29C 48/40*** (2019.01) ***B29C 48/67*** (2019.01)
***C08J 3/20*** (2006.01) ***C08J 5/04*** (2006.01)
*B29B 9/06* (2006.01)

(52) Cooperative Patent Classification (CPC):
**B29B 7/428; B29B 7/488; B29B 7/726; B29B 7/90; B29B 7/92; B29B 9/12; B29B 9/14; B29B 9/16; B29C 48/40; B29C 48/67; C08J 3/201; C08J 5/045; C08J 5/046;** B29B 9/06; C08J 2323/12; (Cont.)

(86) International application number:
**PCT/JP2022/004323**

(87) International publication number:
**WO 2022/168928 (11.08.2022 Gazette 2022/32)**

(54) **METHOD FOR PRODUCING RESIN COMPOSITION**

VERFAHREN ZUR HERSTELLUNG EINER HARZZUSAMMENSETZUNG

PROCÉDÉ DE FABRICATION D?UNE COMPOSITION DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2021 JP 2021016005**
**03.02.2021 JP 2021016022**
**03.02.2021 JP 2021016020**

(43) Date of publication of application:
**13.12.2023 Bulletin 2023/50**

(73) Proprietor: **Asahi Kasei Kabushiki Kaisha**
**Tokyo 1000006 (JP)**

(72) Inventor: **UENO, Koichi**
**Tokyo 100-0006 (JP)**

(74) Representative: **D Young & Co LLP**
**3 Noble Street**
**London EC2V 7BQ (GB)**

(56) References cited:
**EP-A1- 2 511 323** **EP-A1- 3 447 085**
**JP-A- 2004 142 444** **JP-A- 2004 330 610**
**JP-A- 2005 035 134** **JP-A- 2007 015 382**
**JP-A- 2011 255 652** **JP-A- 2013 127 040**
**JP-A- 2015 227 053** **JP-A- 2016 203 576**
**JP-A- 2016 203 578** **JP-A- 2017 066 206**
**JP-A- 2018 048 227** **JP-A- 2018 177 965**
**JP-A- 2020 147 006** **JP-A- 2020 147 007**
**US-A- 4 708 623** **US-A1- 2006 264 544**
**US-A1- 2009 130 443** **US-A1- 2016 376 407**
**US-B1- 6 280 667** **US-B1- 6 565 348**

- **FORSGREN LILIAN ET AL: "Water-assisted extrusion and injection moulding of composites with surface-grafted cellulose nanocrystals - An upscaling study", COMPOSITES PART B, ELSEVIER, AMSTERDAM, NL, vol. 208, 24 December 2020 (2020-12-24), XP086444992, ISSN: 1359-8368, [retrieved on 20201224], DOI: 10.1016/J.COMPOSITESB.2020.108590**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08J 2329/14; C08J 2377/02; C08J 2401/02;
C08J 2405/08; C08J 2477/06

## Description

FIELD

The present invention relates to a method for producing a resin composition.

BACKGROUND

Thermoplastic resins, which are light and highly workable, are widely used as materials for a variety of purposes such as automobile members, electric and electronic parts, business machine housings and precision parts, but since simple resins often provide insufficient mechanical properties and dimensional stability, it is a common practice to use such resins as composites with dispersion of a filler or formation of a polymer dispersed phase in the polymer continuous phase. The use of organic fibers such as cellulose fibers as fillers has been investigated in recent years. Because cellulose fibers are a kind of material having low environmental load and low specific gravity, while also providing excellent improvement in physical properties for resin compositions, they are promising as fillers for environmentally friendly resin compositions. However, it is not always easy to satisfactorily disperse organic fibers such as cellulose fibers in a polymer (resin). When organic fibers and a resin are melt kneaded using an extruder, for example, it is not possible in some cases to provide the resin composition with the intended improvement in physical properties, depending on the kneading conditions. This also applies when forming a polymer alloy comprising both a polymer continuous phase and a polymer dispersed phase, and depending on the kneading conditions when melt kneading with an extruder, in some cases, it may not be possible to obtain the desired improvement in physical properties.

For resin composition kneading, PTL 1 describes a method for producing a resin composition wherein the resin pressures in the kneading zone and in the full-flight zone during production of a polyamide resin composition using a twin-screw extruder are in a specified relationship. US 4 708 623 A discloses a process and an apparatus for producing resin compositions comprising a thermoplastic resin such as polypropylene and a fibrous organic filler blended therewith suitable for molding interior materials for motorcars, building materials, appliances or other industrial materials, according to extrusion molding process.

[CITATION LIST]

[PATENT LITERATURE]

[PTL 1] Japanese Unexamined Patent Publication No. 2016-108547

SUMMARY

[TECHNICAL PROBLEM]

The method described in PTL 1 is designed to yield molded articles with excellent retention stability, thermal aging resistance and surface appearance, but the method is described in the context of resin compositions comprising a filler such as cellulose or other organic fibers, and/or a polymer dispersed phase, and is not focused on intentionally exhibiting an improving effect on the physical properties by the filler and/or dispersed phase. Resin compositions comprising organic fibers such as cellulose fibers, and/or a polymer dispersed phase, exhibit properties that are advantageous for material compositions (for example, lightweightness and dimensional stability of cellulose fibers), and are therefore being studied for application to a variety of purposes, such as for automobiles. It is desirable to simultaneously and stably exhibit high levels of multiple properties (especially tensile elongation and rigidity) for purposes where high performance is required, including automobiles. However, the prior art has not provided a resin composition that is able to form molded articles with such excellent properties.

It is an object of one aspect of the invention to solve the aforementioned problem by providing alternative methods for producing a resin composition that can form a molded article having excellent tensile elongation and/or rigidity, and more preferably a molded article that stably exhibits both high tensile elongation and rigidity.

[SOLUTION TO PROBLEM]

The present invention is as defined in the appended set of claims.

[ADVANTAGEOUS EFFECTS OF INVENTION]

It is an object of the invention to provide alternative methods for producing a resin composition that can form a molded article having excellent tensile elongation and/or rigidity, and more preferably a molded article stably exhibiting both high tensile elongation and rigidity.

BRIEF DESCRIPTION OF DRAWINGS

Fig. 1 is a diagram illustrating the steps in the method for producing a resin composition according to a first embodiment of aspect A of the invention.
Fig. 2 is a diagram illustrating the steps in the method for producing a resin composition according to a second embodiment of aspect A of the invention.
Fig. 3 is a diagram illustrating the steps in the method for producing a resin composition according to a third embodiment of aspect A of the invention.
Fig. 4 is a diagram illustrating the steps in the method for producing a resin composition according to a first embodiment of aspect B which is part of the invention when combined with aspect A.
Fig. 5 is a diagram illustrating change behavior of tensile elongation and flexural modulus in the method according to the first embodiment of aspect B which is part of the invention when combined with aspect A.
Fig. 6 is a diagram illustrating the steps in the method for producing a resin composition according to a second embodiment of aspect B which is part of the invention when combined with aspect A.
Fig. 7 is a diagram illustrating change behavior of tensile elongation and flexural modulus in the method according to the second embodiment of aspect B which is part of the invention when combined with aspect A.
Fig. 8 is a diagram illustrating the steps in the method for producing a resin composition according to aspect C which is part of the invention when combined with aspect A.

DESCRIPTION OF EMBODIMENTS

An embodiment of the invention (hereunder referred to as "the embodiment") will now be explained as an example, with the understanding that the invention is not in any way limited to this embodiment. Unless otherwise specified, the property values mentioned throughout the present disclosure are values measured by the methods described herein under "Examples" or methods known to be equivalent to them by those skilled in the art.

The invention provides alternative methods for producing a resin composition that includes a first component and a second component. According to one aspect, the first component is a polymer and the second component is organic fibers, or a combination of organic fibers with a polymer different from the first component. According to yet another aspect, the first component forms a continuous phase in the resin composition. According to yet another aspect, the organic fibers to be included in the second component are dispersed in the first component within the resin composition. According to yet another aspect, the polymer to be included in the second component is present as a dispersed phase in the continuous phase of the first component within the resin composition.

The methods of the disclosure include a kneading step in which the first component and the second component are kneaded with an extruder provided with a kneading zone. In order to achieve uniform microdispersion of the second component in the first component during production of the resin composition by kneading the first component and second component in the extruder, it is necessary both to micronize the second component itself and to improve the dispersed state of the second component in the first component. For micronization of the second component it is necessary to apply a certain level of strong force to the mixture, and in some cases such force can cause damage to the second component (such as fracture due to bending of organic fibers which may be included in the second component). It is therefore desirable to design the kneading conditions so as to be a level necessary for micronization of the second component but without creating excess burden on the second component. In the methods of the disclosure, the first component and second component are kneaded in a kneading zone controlled to specific kneading conditions.

For example, in the method according to aspect A described below as an exemplary embodiment of the disclosure, a partial region within the kneading zone is designated as the zone for application of large force to the mixture.

In the method according to aspect B described below as an exemplary embodiment of the disclosure, for the tensile elongation and flexural modulus of the mixture, the dispersive mixing zone is provided with a region in which primarily the tensile elongation is improved and a region in which primarily the flexural modulus is improved.

In the method according to aspect C described below as an exemplary embodiment of the disclosure, the first component and second component are dispersively mixed and distributively mixed according to a specific aspect.

For the present disclosure, "dispersively mixed" means a mixing state in which the size of the second component

substantially changes (due to aggregated mass disintegration, fracture or defibration), while "distributively mixed" means a mixing state the dispersed state of the second component in the first component changes but without any substantial change in the size of the second component. According to one aspect, a substantial change in size is a change in size of 30% or greater with respect to 100% as the original size, based on at least one size indicator.

In the methods according to the invention, the contribution of the specific kneading form described above can avoid damage to the second component while uniformly microdispersing the second component in the first component.

During melt mixing of the first component and the second component using an extruder in the methods of the disclosure, the second component may be melt kneaded with the first component in either a dry or slurry form (such as an aqueous dispersion). According to a preferred aspect, the second component is supplied to the extruder in dry form. The heating temperature throughout the melt kneading is preferably a temperature at or above the glass transition point of the first component, but generally without greatly rising above the glass transition point and/or melting point.

For the present disclosure, the glass transition point is the peak top temperature of the peak at which the reduction in storage modulus is large and the loss modulus is maximum, during measurement with an applied frequency of 10 Hz while increasing the temperature from -23°C at a temperature-elevating rate of 2°C/min, using a dynamic viscoelasticity measuring apparatus. When two or more loss modulus peaks appear, it represents the peak top temperature of the peak that is furthest at the high-temperature end. The melting point, for the purpose of the disclosure, is the peak top temperature of the endothermic peak appearing upon temperature increase from 23°C at a temperature-elevating rate of 10°C/min using a differential scanning calorimeter (DSC), or when two or more endothermic peaks are present, it is the peak top temperature of the endothermic peak furthest at the high-temperature end.

The moisture content of the polymer supplied to melt kneading is preferably 0.2 mass% or lower, 0.1 mass% or lower or 0.07 mass% or lower. The moisture content may be 0.001 mass% or greater from the viewpoint of facilitating process control.

A single-screw extruder or twin-screw extruder may be used for the melt kneading, with a twin-screw extruder being preferred to control the dispersibility of the second component. The ratio L/D of the cylinder length (L) of the extruder divided by the screw diameter (D) is preferably 40 or greater and most preferably 50 or greater. The screw rotational speed during kneading is preferably in the range of 100 to 800 rpm and more preferably in the range of 150 to 600 rpm. These parameters can be varied by the screw design.

Each of the screws in the cylinder of the extruder is optimized by combination of the kneading elements, i.e. an elliptical double-threaded full flight screw and a kneading disc. Optimization may also be achieved by forming notches or diversion structures in the screw elements. A block structure known as a seal ring may also be situated in the screw structure. For one aspect, the screw cross-section may have a multiple flight structure, such as 0, single, double, triple or quadruple flight. The screw cross-sections may also be eccentric.

Aspects A to C will now be described.

[Aspect A]

In the method according to aspect A, a partial region in the kneading zone is defined as a zone where large force is to be applied to the mixture (also referred to herein as "high load zone", and more specifically the narrow gap zone, pressure drop zone or high-pressure zone described below). By providing a high load zone and other zones in the kneading zone, it is possible in the high load zone to achieve micronization of the second component, which can significantly contribute to the desired improvement in physical properties of the resin composition, while in the other zones it is possible to create more moderate mixing conditions so as to minimize force applied on the second component, and thus avoid damage to the second component. With such a process it is possible to avoid damage to the second component while uniformly microdispersing the second component in the first component, so that this aspect allows production of a resin composition that can form a molded article with excellent tensile elongation and/or flexural modulus, and more preferably a molded article with high and stable tensile elongation and flexural modulus.

Aspect A includes, more specifically, the following first to third embodiments.

<First embodiment>

The first embodiment provides a method that includes a kneading step in which the first component and the second component are kneaded using an extruder provided with a kneading zone including a plurality of narrow gap zones wherein the gap between the cylinder inner wall and the screw is 2 mm or smaller, wherein the ratio [G1/G2] of the gap [G1] in the narrowest gap zone having the minimum gap among the plurality of narrow gap zones, with respect to the average value [G2] for the gaps of the narrow gap zones other than the narrowest gap zone, is 0.001 or greater and less than 1.

Fig. 1 is a diagram illustrating the steps in the method for producing a resin composition according to the first embodiment. For the first embodiment, the extruder 100 comprises a kneading zone 101, and may optionally comprise a melting zone 102. For example, the method of the first embodiment may further include, before the kneading step in the

kneading zone 101, a step in which the second component a2 is added to the melt obtained by melting the first component a1 in the melting zone 102, to obtain a pre-mixture, and the pre-mixture may be supplied to the kneading zone 101. Since ordinary kneading using an extruder subjects the mixture to strong shear in the first melting zone, it is possible to reduce heat degradation of the second component if the second component is added to the molten first component through an addition port (side feeder) after the first component has passed through the melting zone. The mixture is kneaded in the kneading zone 101 and drawn out as a resin composition b.

According to one aspect, the kneading zone 101 includes a plurality of narrow gap zones N1, N2, N3 wherein the gap between the cylinder inner wall and the screw (also referred to herein as the "cylinder gap") is 2 mm or smaller. The cylinder gap, for this purpose, is the gap of the widest flow channel among the flow channels through which the mixture can pass from the upstream end to the downstream end of the extruder. For example, for a screw element such as a double-flight screw, the cylinder gap is the gap in the short axis direction of the cross-section in the direction of the screw diameter. Alternatively, for a screw element such as a seal ring, for example, the cylinder gap is the gap between the screw and cylinder. Fig. 1 shows an example with three narrow gap zones, but the number of narrow gap zones in the kneading zone may be selected according to the purpose, and it may be 2 or more or 3 or more, and 10 or less or 5 or less, for example.

Among the plurality of narrow gap zones N1, N2, N3, the ratio [G1/G2] of the cylinder gap [G1] in the narrowest gap zone where the cylinder gap is minimum (hereunder also referred to simply as [G1]) with respect to the average value [G2] for the cylinder gaps of the narrow gap zones other than the narrowest gap zone, is 0.001 or greater, 0.01 or greater or 0.1 or greater, from the viewpoint of satisfactorily promoting micronization of the second component, and less than 1, 0.5 or less or 0.3 or less, from the viewpoint of inhibiting damage to the second component. The average value [G2] is the cylinder gap value for one zone if there is only one zone, or it is the arithmetic mean of cylinder gap values, for two or more zones.

The ratio [G1/G3] of [G1] with respect to each cylinder gap [G3] of the narrow gap zones other than the narrowest gap zone, is 0.001 or greater, 0.01 or greater or 0.1 or greater, according to one aspect, from the viewpoint of satisfactorily promoting micronization of the second component, and less than 1, 0.5 or less and or 0.3 or less, according to one aspect, from the viewpoint of inhibiting damage to the second component.

[G1] is preferably 0.001 mm or greater, 0.01 mm or greater or 0.05 mm or greater, and preferably 2 mm or smaller, 1 mm or smaller or 0.5 mm or smaller.

[G2] is preferably 0.001 mm or greater, 0.01 mm or greater or 0.05 mm or greater, and preferably 2 mm or smaller, 1 mm or smaller or 0.5 mm or smaller.

[G3] is preferably 0.001 mm or greater, 0.01 mm or greater or 0.05 mm or greater, and preferably 2 mm or smaller, 1 mm or smaller or 0.5 mm or smaller.

The organic fibers supplied to the extruder according to one aspect have mean fiber lengths of 1 μm to 10,000 μm. The mean fiber length, for the purpose of the disclosure, is the value measured using a scanning electron microscope (SEM) as described below. The mean fiber length is 1 μm or larger, 10 μm or larger or 50 μm or larger, according to one aspect, and 10,000 μm or smaller, 1000 μm or smaller, 750 μm or smaller or 600 μm or smaller, according to another aspect. According to one aspect, the ratio of [G1] with respect to the mean fiber length is preferably 0.001 or higher, 0.01 or higher or 0.1 or higher, from the viewpoint of inhibiting damage to the organic fibers, and preferably 10 or lower, 5 or lower or 1 or lower, from the viewpoint of satisfactorily promoting micronization of the organic fibers.

The organic fibers supplied to the extruder according to one aspect form particles having mean particle sizes of 1 μm to 10,000 μm. The mean particle size of the particles is 1 μm or larger, 10 μm or larger or 50 μm or larger, according to one aspect, and 10,000 μm or smaller, 1000 μm or smaller, 750 μm or smaller or 500 μm or smaller, according to another aspect. According to one aspect, the ratio of [G1] with respect to the mean particle size of the particles is preferably 0.001 or higher, 0.01 or higher or 0.1 or higher, from the viewpoint of inhibiting damage to the organic fibers, and preferably 10 or lower, 5 or lower or 1 or lower, from the viewpoint of satisfactorily promoting micronization of the organic fibers.

The mean particle size, for the purpose of the disclosure, is the d50 particle diameter measured using a powder tester (for example, a Model PT-X Powder Tester by Hosokawa Micron Group).

The content of the second component in the influent to each narrow gap zone is preferably 15 mass% or greater, 20 mass% or greater or 30 mass% or greater, from the viewpoint of adding the second component to the resin composition to the desired concentration to obtain a satisfactory effect of improving the physical properties by the second component, and preferably 90 mass% or lower, 80 mass% or lower or 70 mass% or lower, from the viewpoint of satisfactorily promoting micronization of the second component.

The pressure of influent into each narrow gap zone is preferably 0.5 MPa or higher, 1 MPa or higher or 3 MPa or higher, from the viewpoint of satisfactorily promoting micronization of the second component, and preferably 20 MPa or lower, 15 MPa or lower or 10 MPa or lower, from the viewpoint of inhibiting damage to the second component. According to one aspect, the pressure of influent into each narrow gap zone is essentially equal to the mixture pressure in each narrow gap zone.

The proportion of the pressure of effluent from the narrow gap zone with respect to the pressure of influent into the narrow gap zone, for each narrow gap zone, is preferably 0.2 or lower, 0.15 or lower or 0.1 or lower, to increase the pressure of influent into the narrow gap zone and allow micronization of the second component to proceed satisfactorily, and

preferably 0.0001 or higher, 0.001 or higher or 0.01 or higher, from the viewpoint of inhibiting damage to the second component by drastic pressure change in the mixture. According to one aspect, the pressure of effluent from each narrow gap zone is essentially equal to the mixture pressure in the downstream zone adjacent to each narrow gap zone. The influent into each zone or the effluent from each zone may be the mixture entering into each zone or exiting from each zone, and the effluent is not limited to effluent from the discharge channel out of the extruder in the construction of the extruder, for example.

The pressure of effluent from the narrow gap zone, for each narrow gap zone, may be 0 MPa or higher, 0.001 MPa or higher or 0.01 MPa or higher, according to one aspect, and 4 MPa or lower, 2 MPa or lower or 1 MPa or lower, according to another aspect.

<Second embodiment>

The second embodiment provides a method that includes a kneading step in which the first component and the second component are kneaded using an extruder provided with a kneading zone including a pressure drop zone. The method of the second embodiment has the following features, optionally in combination with one or more of the features mentioned above for the first embodiment.

The pressure drop zone is a zone in which the pressure of influent into the pressure drop zone is 0.5 to 20 MPa and the ratio of the pressure of effluent from the pressure drop zone with respect to the pressure of influent into the pressure drop zone is 0.2 or lower.

The pressure of influent into the pressure drop zone is preferably 0.5 MPa or higher, 1 MPa or higher or 3 MPa or higher, from the viewpoint of satisfactorily promoting micronization of the second component, and preferably 20 MPa or lower, 15 MPa or lower or 10 MPa or lower, from the viewpoint of inhibiting damage to the second component. According to one aspect, the pressure of influent into the pressure drop zone is essentially equal to the mixture pressure in the pressure drop zone.

The content of the second component in the influent to the pressure drop zone is 15 to 90 mass%, and/or during the kneading step, additional polymer at a lower temperature than the mixture is added to the mixture that has passed through the pressure drop zone, to cool the mixture.

According to a first aspect, the content of the second component in the influent to the pressure drop zone is 15 to 90 mass%, the pressure of influent into the pressure drop zone is 0.5 to 20 MPa, and the ratio of the pressure of effluent from the pressure drop zone with respect to the pressure of influent into the pressure drop zone is 0.2 or lower.

According to a second aspect, the pressure of influent into the pressure drop zone is 0.5 to 20 MPa, the ratio of the pressure of effluent from the pressure drop zone with respect to the pressure of influent into the pressure drop zone is 0.2 or lower, and in the kneading step, additional polymer at a lower temperature than the mixture is added to the mixture that has passed through the pressure drop zone, to cool the mixture.

Referring to Fig. 2 for the second embodiment, the extruder 200 comprises a kneading zone 201, and may optionally comprise a melting zone 202. For example, the method of the second embodiment may further include, before the kneading step in the kneading zone 201, a step in which the second component a2 is added to the melt obtained by melting the first component a1 in the melting zone 202, to obtain a pre-mixture, the pre-mixture then optionally being supplied to the kneading zone 201. Since ordinary kneading using an extruder subjects the mixture to strong shear in the first melting zone, it is possible to reduce heat degradation of the second component if the second component is added to the molten resin through an addition port (side feeder) after the resin as the first component has passed through the melting zone. The mixture is kneaded in the kneading zone 201 and drawn out as a resin composition b.

The kneading zone 201 for the second embodiment includes a pressure drop zone D1. Fig. 2 shows an example with a single pressure drop zone D1, but according to the second embodiment the number of pressure drop zones may be selected according to the purpose, being one or more, 2 or more or 3 or more according to one aspect, and 10 or less or 5 or less, according to another aspect.

According to one aspect, the pressure drop zone according to the second embodiment may be the narrow gap zone explained for the first embodiment. The cylinder gap in the narrow gap zone may be the same as explained for the first embodiment. The pressure drop zone may be formed by adjusting one or more parameters selected from the group consisting of zone length/cylinder inner diameter ratio, mixture fill factor, temperature, pressure, screw rotational speed, feed volume, resin composition and spatial volume ratio.

<Third embodiment>

Fig. 3 is a diagram illustrating the steps in the method for producing a resin composition according to the third embodiment. The method of the third embodiment has the following features, optionally in combination with one or more of the features mentioned above for the first or second embodiment.

Referring to Fig. 3 for the third embodiment, the extruder 300 comprises a kneading zone 301, and may optionally

comprise a melting zone 302. For example, the method of the third embodiment may further include, before the kneading step in the kneading zone 301, a step in which the second component a2 is added to the melt obtained by melting the first component a1 in the melting zone 202, by side feeding, for example, to obtain a pre-mixture, the pre-mixture then optionally being supplied to the kneading zone 301. This manner of addition is preferred from the viewpoint of inhibiting heat degradation of the second component. The mixture is kneaded in the kneading zone 301 and drawn out as a resin composition b.

The kneading zone 301 includes a plurality of high-pressure zones H1, H2, H3 wherein the pressure is 0.1 MPa or higher. Fig. 3 shows an example with three high-pressure zones, but the number of high-pressure zones in the kneading zone may be selected according to the purpose, and it may be 2 or more or 3 or more, and 10 or less or 5 or less, for example.

Among the plurality of high-pressure zones H1, H2, H3, the ratio [P1/P2] of the pressure [P1] in the highest-pressure zone where the pressure is maximum (hereunder also referred to simply as [P1]) with respect to the average value [P2] for the pressure in the high-pressure zones other than the highest-pressure zone, is greater than 1, 1.5 or greater or 2 or greater, from the viewpoint of satisfactorily promoting micronization of the second component, and 100 or lower, 50 or lower or 20 or lower, from the viewpoint of inhibiting damage to the second component. The average value [P2] is the pressure value for one zone if there is only one zone, or it is the arithmetic mean of pressure values, for two or more zones.

The ratio [P1/P3] of [P1] with respect to each pressure [P3] of each of the high-pressure zones other than the highest-pressure zone, is greater than 1, 1.5 or greater or 2 or greater, from the viewpoint of satisfactorily promoting micronization of the second component, and 100 or lower, 50 or lower and or 20 or lower, from the viewpoint of inhibiting damage to the second component.

[P1] is 0.5 MPa or higher, preferably 1 MPa or higher or 2 MPa or higher, and preferably 20 MPa or lower, 15 MPa or lower or 10 MPa or lower.

[P2] is preferably 0.1 MPa or higher, 0.3 MPa or higher or 0.5 MPa or higher, and preferably 20 MPa or lower, 15 MPa or lower or 10 MPa or lower.

[P3] is preferably 0.1 MPa or higher, 0.3 MPa or higher or 0.5 MPa or higher, and preferably 20 MPa or lower, 15 MPa or lower or 10 MPa or lower.

The zone length/cylinder inner diameter ratio of each of the plurality of high-pressure zones is 1 or greater, 2 or greater or 4 or greater according to one aspect, from the viewpoint of satisfactorily promoting micronization of the second component, and 30 or lower, 20 or lower and or 15 or lower, according to another aspect, from the viewpoint of inhibiting damage to the second component.

The ratio of the zone length/cylinder inner diameter ratio of the highest-pressure zone with respect to the zone length/cylinder inner diameter ratio of each of the high-pressure zones other than the highest-pressure zone is 1 or greater, 2 or greater or 4 or greater according to one aspect, from the viewpoint of satisfactorily promoting micronization of the second component, and 30 or lower, 20 or lower and or 15 or lower, according to another aspect, from the viewpoint of inhibiting damage to the second component.

The pressure in the highest-pressure zone is 0.5 MPa or higher or 1 MPa or higher according to one aspect, from the viewpoint of satisfactorily promoting micronization of the second component, and 50 MPa or lower, 20 MPa or lower or 15 MPa or lower, according to another aspect, from the viewpoint of inhibiting damage to the second component.

<Other zones>

Referring to Figs. 1 to 3, the kneading zones 101, 201, 301 may each have a dispersive mixing zone and a distributive mixing zone. The narrow gap zones N1, N2, N3, the pressure drop zone D1 and the high-pressure zones H1, H2, H3 are dispersive mixing zones. Each of the other zones 11, 12, 13, 14, 21, 22, 31, 32, 33, 34 may be dispersive mixing zones or distributive mixing zones. The kneading conditions in the other zones may be arbitrarily designed with the same or different conditions, as desired. According to a preferred aspect, the zone that is furthest downstream in the kneading zone is another zone (for example, other zones 14, 22, 24 in Figs. 1 to 3), and is preferably a distributive mixing zone.

<Addition of additional polymer>

Referring to Figs. 1 to 3, in the method of aspect A, the additional polymer is added to the mixture in the kneading zones 101, 201, 301 (by side feeding, for example), as a polymer that is the same type as or different type from that in the mixture. According to a typical aspect, the location for adding the additional polymer may be downstream from all of the narrow gap zones N1, N2, N3 of the kneading zone 101, or downstream from the pressure drop zone D1 of the kneading zone 201, or downstream from all of the high-pressure zones H1, H2, H3 of the kneading zone 301.

The amount of additional polymer added may be decided based on the kneading conditions and the desired concentration of the second component in the resin composition, and for example, it may be 10 parts by mass or greater, 20

parts by mass or greater, 30 parts by mass or greater or 50 parts by mass or greater, and 1000 parts by mass or lower, 500 parts by mass or lower, 400 parts by mass or lower or 300 parts by mass or lower, with respect to 100 parts by mass of the mixture. According to one aspect, the concentration of the second component in the mixture before addition of additional polymer is 10 mass% or greater, 15 mass% or greater, 20 mass% or greater, 25 mass% or greater or 30 mass% or greater, and/or 90 mass% or lower, 80 mass% or lower, 70 mass% or lower, 60 mass% or lower or 50 mass% or lower, and the concentration of the second component in the mixture after addition of the additional polymer (equal to the concentration of the second component in the resin composition, for this aspect) is 1 mass% or greater, 2 mass% or greater, 3 mass% or greater or 5 mass% or greater, and/or 50 mass% or lower, 40 mass% or lower, 30 mass% or lower or 20 mass% or lower.

(Cooling by additional polymer)

The additional polymer may be at a lower temperature than the mixture. Specifically, in the kneading step, the additional polymer at a lower temperature than the mixture may be added to the mixture after having passed through all of the plurality of narrow gap zones for the first embodiment, or the pressure drop zone for the second embodiment (or all of the zones, according to one aspect, if more than one are present), or all of the plurality of high-pressure zones for the third embodiment, in order to cool the mixture. The temperature of the additional polymer which is added for cooling is 0°C or higher, 10°C or higher or 20°C or higher, according to one aspect, and 300°C or lower, 200°C or lower, 100°C or lower or 50°C or lower, according to another aspect. The temperature of the mixture to which the additional polymer is added is 100°C or higher, 150°C or higher or 200°C or higher, according to one aspect, and 450°C or lower, 400°C or lower or 350°C or lower, according to another aspect.

<Change in flexural modulus>

In the method according to aspect A, the rate of improvement in the flexural modulus per unit mass of the mixture in each high load zone (that is, the ratio of the flexural modulus of the effluent from each zone with respect to the flexural modulus of the influent into each zone), is greater than the maximum rate of improvement in the flexural modulus per unit mass of the mixture of each zone other than the high load zone (that is, the ratio of the flexural modulus of the effluent from each zone with respect to the flexural modulus of the influent into each zone). This provides a satisfactory effect of improving the flexural modulus in each high load zone while also inhibiting damage to the second component in the other zones.

<Change in thixotropy index>

In the method of aspect A, the ratio of the thixotropy index of the effluent from the kneading zone with respect to the thixotropy index of the influent into the kneading zone is preferably 1 or greater, 2 or greater or 3 or greater, from the viewpoint of obtaining a uniform microdispersion of the second component by the kneading zone, and preferably 100 or lower, 50 or lower or 10 or lower, from the viewpoint of inhibiting damage to the second component.

[Aspect B]

The method according to aspect B includes a dispersive mixing step in which the first component and the second component are dispersively mixed in the dispersive mixing zone of the extruder. The method of aspect B has the following features, in combination with the features mentioned above for aspect A. According to one aspect, the dispersive mixing zone of aspect B comprises the high load zone according to aspect A (more specifically, a narrow gap zone, pressure drop zone or high-pressure zone).

The method according to aspect B forms part of the invention where it is combined with the subject matter of aspect A.

In the method according to aspect B, for the tensile elongation and flexural modulus of the mixture, the dispersive mixing zone is provided with a region in which primarily the tensile elongation is improved (also referred to herein as "tensile elongation-improving region") and a region in which primarily the flexural modulus is improved (also referred to herein as "flexural modulus-improving region"). In the tensile elongation-improving region, the coarse aggregated masses of the second component are pulverized, thus allowing the tensile elongation of the mixture to be increased, whereas pulverization of the coarse aggregated masses contributes little to increase in the flexural modulus (or rigidity) of the mixture. In the flexural modulus-improving region, the second component is microdispersed in the first component, allowing the flexural modulus of the mixture to be increased, but the microdispersion contributes little to increase in the tensile elongation of the mixture.

In the method of aspect B it is not attempted to simultaneously increase the tensile elongation and flexural modulus, but rather emphasis is on increasing the tensile elongation and flexural modulus alone in the tensile elongation-improving region and flexural modulus-improving region, respectively. It was unexpectedly found that with the resin composition obtained by this process, it is possible to achieve high and stable levels of tensile elongation and flexural modulus compared to a resin composition obtained by a process in which it is attempted to simultaneously increase the tensile elongation and flexural modulus. This advantage is even more notable when the second component includes organic fibers, and especially cellulose fibers.

Aspect B includes, more specifically, the following first and second embodiments.

<First embodiment>

Fig. 4 is a diagram illustrating the steps in the method for producing a resin composition according to the first embodiment, and Fig. 5 is a diagram illustrating change behavior of tensile elongation and flexural modulus in the method according to the first embodiment. Referring to Fig. 4, the extruder 400 of the first embodiment has a dispersive mixing zone 401. The extruder 400 may also have a distributive mixing zone 402. The extruder 400 may still further have a melting zone 403 upstream from the dispersive mixing zone 401 and/or a melting zone 404 downstream from the dispersive mixing zone 401. For example, the method of the disclosure may further include, before the dispersive mixing step in the dispersive mixing zone 401, a step in which the second component a2 is added to the melt obtained by melting the first component a1 in the melting zone 403, to obtain a pre-mixture, and the pre-mixture may be supplied to the dispersive mixing zone 401. Since ordinary kneading using an extruder subjects the mixture to strong shear in the first melting zone, it is possible to reduce heat degradation of the second component if the second component is added to the molten first component through an addition port (side feeder) after the resin has passed through the melting zone. The mixture is dispersively mixed in the extruder 400, with optional distributive mixing, and drawn out as resin composition b.

The method of aspect B may also further include, after the dispersive mixing step and before the distributive mixing step, a step in which an additional polymer that is the same as or different from, and preferably the same as, the first component in the dispersively mixed product, is added to the dispersively mixed product to obtain an additional polymer blend, with the additional polymer blend being supplied to the distributive mixing zone. For example, after the additional polymer has been added to the effluent from the dispersive mixing zone 401 (for example, by additional polymer side feeding in the melting zone 404 of Fig. 4), it is supplied to the distributive mixing zone 402. The amount of additional polymer added may be decided based on the kneading conditions and the desired concentration of the second component in the resin composition, and for example, it may be 10 parts by mass or greater, 20 parts by mass or greater, 30 parts by mass or greater or 50 parts by mass or greater, and 1000 parts by mass or lower, 500 parts by mass or lower, 400 parts by mass or lower or 300 parts by mass or lower, with respect to 100 parts by mass of the dispersively mixed product. According to one aspect, the concentration of the second component in the dispersively mixed product is 10 mass% or greater, 20 mass% or greater, 25 mass% or greater or 30 mass% or greater, and/or 80 mass% or lower, 70 mass% or lower, 60 mass% or lower or 50 mass% or lower, and the concentration of the second component in the additional polymer blend (equal to the concentration of the second component in the resin composition, for this aspect) is 1 mass% or greater, 2 mass% or greater, 3 mass% or greater or 5 mass% or greater, and/or 50 mass% or lower, 40 mass% or lower, 30 mass% or lower or 20 mass% or lower.

(Cooling by additional polymer)

The additional polymer may be at lower temperature than the dispersively mixed product, allowing the dispersively mixed product to be cooled by it. The temperature of the additional polymer which is added for cooling is 0°C or higher, 10°C or higher or 20°C or higher, according to one aspect, and 300°C or lower, 200°C or lower, 100°C or lower or 50°C or lower, according to another aspect. The temperature of the dispersively mixed product to which the additional polymer is added is 100°C or higher, 150°C or higher or 200°C or higher, according to one aspect, and 450°C or lower, 400°C or lower or 350°C or lower, according to another aspect.

The dispersive mixing zone 401 comprises a first dispersive mixing zone 41 and a second dispersive mixing zone 42, with mutually differing process conditions. According to one aspect, the first dispersive mixing zone 41 and the second dispersive mixing zone 42 are directly connected together. According to one aspect, an additional dispersive mixing zone may be present upstream from the first dispersive mixing zone 41, between the first dispersive mixing zone 41 and the second dispersive mixing zone 42, and/or downstream from the second dispersive mixing zone 42. One example is a construction in which a third dispersive mixing zone (not shown) having a similar or different construction from the first dispersive mixing zone 41 or second dispersive mixing zone 42 is situated downstream from the second dispersive mixing zone 42, and effluent from the third dispersive mixing zone is collected as resin composition b.

According to one aspect, the process conditions are one or more aspects selected from the group consisting of the zone length/cylinder inner diameter ratio, mixture fill factor, temperature, pressure and spatial volume ratio.

The zone length is the total length of the screw element forming the dispersive mixing zone and distributive mixing zone, and it depends on the construction of the screw.

The mixture fill factor is the ratio of the actual filling volume of the mixture with respect to the space volume of the extruder, the mixture fill factor being calculated by first abruptly stopping screw rotation and material supply, withdrawing the screw, sampling and measuring the mixture adhering to the surface of the screw, dividing the measured value by the density of the mixture to calculate the volume of the filling mixture, and subsequently dividing the volume of the filling mixture by the space volume (described below). The mixture fill factor depends on the screw construction and the extrusion conditions.

The spatial volume ratio is calculated by subtracting the screw volume (the total of the element volume and shaft volume) from the cylinder volume of the extruder to calculate the space volume, and dividing the space volume by the cylinder volume. The spatial volume ratio depends on the screw construction.

Referring to Figs. 4 and 5, the increase [E1] in the tensile elongation of the effluent from the first dispersive mixing zone 41b with respect to the tensile elongation of the influent into the first dispersive mixing zone 41a, and the increase [E2] in the tensile elongation of the effluent from the second dispersive mixing zone 42b with respect to the tensile elongation of the influent into the second dispersive mixing zone 42a, satisfy the relationship [E1] > [E2]. In addition, the increase [M1] in the flexural modulus of the effluent from the first dispersive mixing zone 41b with respect to the flexural modulus of the influent into the first dispersive mixing zone 41a, and the increase [M2] in the flexural modulus of the effluent from the second dispersive mixing zone 42b with respect to the flexural modulus of the influent into the second dispersive mixing zone 42a, satisfy the relationship [M1] < [M2]. In other words, the first dispersive mixing zone is a tensile elongation-improving region, while the second dispersive mixing zone is a flexural modulus-improving region.

According to one aspect, the first dispersive mixing zone 41 and the second dispersive mixing zone 42 are connected (directly connected, according to one aspect), so that the first dispersive mixing zone 41 is at the upstream end, as shown in Fig. 4. This arrangement is advantageous from the viewpoint of further increasing the elastic modulus.

According to another aspect, the first and second dispersive mixing zones may be connected (directly connected, according to one aspect), so that the second dispersive mixing zone is at the upstream end. This arrangement is advantageous from the viewpoint of further increasing the ductility.

The influent into each zone or the effluent from each zone may be the mixture entering into each zone or exiting from each zone, and the effluent is not limited to effluent from the discharge channel out of the extruder in the construction of the extruder, for example.

According to one aspect where the second component includes organic fibers, the mass ratio of components with diameters of 50 μm or larger in the organic fibers within the influent into the first dispersive mixing zone 41a is preferably 10% or greater, 20% or greater, 30% or greater or 40% or greater, and preferably 90% or lower, 80% or lower, 70% or lower or 60% or lower. In other words, the influent 41a may include an equivalent amount of coarse particles.

According to one aspect, the ratio (1b/1a) of the mass ratio (1b) of components with diameters of 50 μm or larger in the organic fibers within the effluent from the first dispersive mixing zone 41b with respect to the mass ratio (1a) of components with diameters of 50 μm or larger in the organic fibers within the influent into the first dispersive mixing zone 41a, is preferably 0 or greater, 0.1 or greater or 0.2 or greater, and preferably 0.6 or lower, 0.5 or lower or 0.3 or lower. This significantly reduces coarse particles in the effluent 41b as the coarse particles are pulverized in the first dispersive mixing zone 41.

According to one aspect, the ratio (2b/2a) of the mass ratio (2b) of components with diameters of 50 μm or larger in the organic fibers within the effluent from the second dispersive mixing zone 42b with respect to the mass ratio (2a) of components with diameters of 50 μm or larger in the organic fibers within the influent into the second dispersive mixing zone 42a, is preferably 0.6 or greater, 0.7 or greater or 0.8 or greater, and preferably 1 or lower or 0.9 or lower. This promotes microdispersion in the second dispersive mixing zone 42 while resulting in minimal reduction in coarse particles from the influent 42a to the effluent 42b. For the purpose of the disclosure, the ratio (2b/2a) is considered to be 1 if the mass ratios (2a) and (2b) are both 0%.

According to one aspect, [E1] is preferably 1% or greater, 2% or greater or 3% or greater and preferably 100% or lower, 50% or lower or 30% or lower, [E2] is preferably 0% or greater and preferably 10% or lower, 5% or lower or 3% or lower, [M1] is preferably 0 GPa or greater, 0.1 GPa or greater or 0.3 GPa or greater, and preferably 1 GPa or lower, 0.7 GPa or lower or 0.5 GPa or lower, [M2] is preferably 0.1 GPa or greater, 0.5 GPa or greater or 1 GPa or greater and preferably 20 GPa or lower, 10 GPa or lower or 5 GPa or lower, the absolute value of the difference between [E1] and [E2] is preferably 0.1% or greater, 1% or greater or 5% or greater and preferably 100% or lower, 50% or lower or 30% or lower, and the absolute value of the difference between [M1] and [M2] is preferably 0.1 GPa or greater, 0.5 GPa or greater or 1 GPa or greater and preferably 20 GPa or lower, 10 GPa or lower or 5 GPa or lower.

According to one aspect, the zone length/cylinder inner diameter ratios in the first and second dispersive mixing zones are each preferably one or greater, 3 or greater or 4 or greater, and preferably 30 or lower, 20 or lower or 10 or lower.

According to one aspect, the mixture fill factors in the first and second dispersive mixing zones are each preferably one or greater, 10% or greater, 50% or greater or 70% or greater, and preferably 100% or lower, 99% or lower or 95% or lower.

According to one aspect, the temperatures in the first and second dispersive mixing zones are each preferably

100°C or higher, 150°C or higher or 200°C or higher, and preferably 400°C or lower, 350°C or lower or 300°C or lower.

According to one aspect, the mixture pressures in the first and second dispersive mixing zones are each preferably one or greater, 0 MPa or higher, 0.1 MPa or higher, 0.3 MPa or higher or 1 MPa or higher, and preferably 15 MPa or lower, 10 MPa or lower, 5 MPa or lower or 3 MPa or lower.

According to one aspect, the spatial volume ratios in the first and second dispersive mixing zones are each preferably one or greater, 10% or greater, 20% or greater or 30% or greater, and preferably 70% or lower, 60% or lower or 50% or lower.

The resin composition that has been dispersively mixed in the dispersive mixing zone 401 may be further distributively mixed after being introduced into the distributive mixing zone 402 either after being passed through or without passing through other zones (such as the melting zone 404). The mixing conditions in the distributive mixing zone are not particularly restricted, and distributive mixing may be carried out by any desired combination of kneading discs such as a forward kneading disc and neutral kneading disc.

<Second embodiment>

Fig. 6 is a diagram illustrating the steps in the method for producing a resin composition according to the second embodiment, and Fig. 7 is a diagram illustrating change behavior of tensile elongation and flexural modulus in the method according to the second embodiment. The method of the second embodiment has the following features, while the same procedure and conditions as described above for the first embodiment may be employed for its other features.

According to the second embodiment, referring to Fig. 6, the extruder 600 has a dispersive mixing zone 601, and may optionally further have a distributive mixing zone 602, as well as a melting zone 603 upstream from the dispersive mixing zone 601 and/or a melting zone 604 downstream from the dispersive mixing zone 601. For example, the method of aspect B may further include, before the dispersive mixing step in the dispersive mixing zone 601, a step in which the second component a2 is added to the melt obtained by melting the first component a1 in the melting zone 603, to obtain a pre-mixture, and the pre-mixture may be supplied to the dispersive mixing zone 601. Adding the second component a2 to the molten first component through an addition port (side feeder) after the first component a1 has passed through the melting zone 603 is preferred to help inhibit heat degradation of the second component. The mixture is dispersively mixed in the extruder 600, with optional distributive mixing, and drawn out as resin composition b.

Referring to Figs. 6 and 7, the dispersive mixing zone 601 changes the ratio [ΔE/ΔM] of the change in tensile elongation ΔE (%) per (l/d), which is the value of the cylinder inner travel length l of the mixture (that is, the flow length of the mixture in the lengthwise direction of the cylinder L as it flows in the dispersive mixing zone 601) (mm) divided by the cylinder inner diameter d (mm), with respect to the change in flexural modulus ΔM (GPa) per l/d in the lengthwise direction of the cylinder L, by using different process conditions. According to one aspect, the process conditions are one or more aspects selected from the group consisting of the zone length/cylinder inner diameter ratio, mixture fill factor, temperature, pressure and spatial volume ratio.

According to one aspect, the ratio [ΔE/ΔM] gradually decreases from the upstream end toward the downstream end of the cylinder. According to this aspect, the upstream end from the cylinder corresponds to the tensile elongation-improving region while the downstream end corresponds to the flexural modulus-improving region, which is advantageous for obtaining a resin composition with high rigidity. According to this aspect, ΔM may gradually increase as ΔE gradually decreases, from the upstream end toward the downstream end of the cylinder. For example, from the entrance to the exit of the dispersive mixing zone 601, ΔE may gradually decrease from a range of 0.1% or greater, 1% or greater or 10% or greater and 300% or lower, 200% or lower or 100% or lower, to a range of 0.01% or greater, 0.1% or greater or 0.5% or greater and 10% or lower, 5% or lower or 2% or lower, and ΔM may gradually increase from a range of 0.001 GPa or greater, 0.01 GPa or greater or 0.05 GPa or greater and 10 GPa or lower, 5 GPa or lower or 2 GPa or lower, to a range of 0.02 GPa or greater, 0.05 GPa or greater or 0.1 GPa or greater and 50 GPa or lower, 10 GPa or lower or 5 GPa or lower.

According to another aspect, the ratio [ΔE/ΔM] gradually increases from the upstream end toward the downstream end of the cylinder. According to this aspect, the upstream end from the cylinder corresponds to the flexural modulus-improving region while the downstream end corresponds to the tensile elongation-improving region, which is advantageous for obtaining a resin composition with high ductility. According to this aspect, ΔM may gradually decrease as ΔE gradually increases, from the upstream end toward the downstream end of the cylinder. For example, from the entrance to the exit of the dispersive mixing zone, ΔE may gradually increase from a range of 0.01% or greater, 0.1% or greater or 0.5% or greater and 10% or lower, 5% or lower or 2% or lower, to a range of 0.1% or greater, 1% or greater or 10% or greater and 300% or lower, 200% or lower or 100% or lower, and ΔM may gradually decrease from a range of 0.02 GPa or greater, 0.05 GPa or greater or 0.1 GPa or greater and 50 GPa or lower, 10 GPa or lower or 5 GPa or lower, to a range of 0.001 GPa or greater, 0.01 GPa or greater or 0.05 GPa or greater and 10 GPa or lower, 5 GPa or lower or 2 GPa or lower.

<Aspect C>

The method according to aspect C of the disclosure includes a dispersive mixing step in which the first component and second component are dispersively mixed in the dispersive mixing zone of the extruder to obtain a dispersively mixed

product, and a distributive mixing step in which at least the dispersively mixed product is distributively mixed in the distributive mixing zone of the extruder to obtain a resin composition. The method of aspect C has the following features, optionally in combination with one or more of the features mentioned above for aspect A. According to one aspect, the dispersive mixing zone of aspect C may comprise a high load zone according to aspect A (more specifically, a narrow gap zone, pressure drop zone or high-pressure zone).

In the method of aspect C, it is not attempted to increase the tensile elongation and flexural modulus through dispersive mixing and distributive mixing, but rather a certain level of high force is applied to the second component to significantly increase the tensile elongation and flexural modulus of the mixture during dispersive mixing, while the mixing conditions are relaxed to minimize the force applied to the second component during distributive mixing, so that the increase in tensile elongation and flexural modulus is small but damage to the second component is avoided. It was unexpected that a molded article formed by the resin composition obtained through these process steps would exhibit high and stable levels of both tensile elongation and flexural modulus.

Fig. 8 is a diagram illustrating the steps in the method for producing a resin composition according to one aspect of the invention. Referring to Fig. 8, the extruder 800 has a dispersive mixing zone 801 and a distributive mixing zone 802. According to a typical aspect, the distributive mixing zone 802 is situated downstream from the dispersive mixing zone 801, as shown in Fig. 8. The extruder 800 may also have a melting zone 803 upstream from the dispersive mixing zone 801, and/or a melting zone 804 downstream end from the dispersive mixing zone 801 and upstream from the distributive mixing zone 802.

For example, the method of aspect C may further include, before the dispersive mixing step in the dispersive mixing zone 801, a step in which the second component a2 is added to the melt obtained by melting the first component a1 in the melting zone 803, to obtain a pre-mixture, the pre-mixture optionally being supplied to the dispersive mixing zone 801. Since ordinary kneading using an extruder subjects the mixture to strong shear in the first melting zone, it is possible to reduce heat degradation of the second component if the second component is added to the molten first component through an addition port (side feeder) after the first component has passed through the melting zone. The mixture is dispersively mixed and distributively mixed in the extruder 800, and drawn out as resin composition b.

The method of aspect C may also further include, after the dispersive mixing step and before the distributive mixing step, a step in which an additional polymer that is the same as or different from, and preferably the same as, the first component in the dispersively mixed product, is added to the dispersively mixed product to obtain an additional polymer blend, with the additional polymer blend being supplied to the distributive mixing zone. For example, after the additional polymer has been added to the effluent from the dispersive mixing zone 801 (for example, by additional polymer side feeding in the melting zone 804 of Fig. 8), it is supplied to the distributive mixing zone 802. The amount of additional polymer added may be decided based on the kneading conditions and the desired concentration of the second component in the resin composition, and for example, it may be 10 parts by mass or greater, 20 parts by mass or greater, 30 parts by mass or greater or 50 parts by mass or greater, and 1000 parts by mass or lower, 500 parts by mass or lower, 400 parts by mass or lower or 300 parts by mass or lower, with respect to 100 parts by mass of the dispersively mixed product. According to one aspect, the concentration of the second component in the dispersively mixed product is 10 mass% or greater, 20 mass% or greater, 25 mass% or greater or 30 mass% or greater, and/or 80 mass% or lower, 70 mass% or lower, 60 mass% or lower or 50 mass% or lower, and the concentration of the second component in the additional polymer blend (equal to the concentration of the second component in the resin composition, for this aspect) is 1 mass% or greater, 2 mass% or greater, 3 mass% or greater or 5 mass% or greater, and/or 50 mass% or lower, 40 mass% or lower, 30 mass% or lower or 20 mass% or lower.

(Cooling by additional polymer)

The additional polymer may be at lower temperature than the dispersively mixed product, allowing the dispersively mixed product to be cooled by it. The temperature of the additional polymer which is added for cooling is 0°C or higher, 10°C or higher or 20°C or higher, according to one aspect, and 300°C or lower, 200°C or lower, 100°C or lower or 50°C or lower, according to another aspect. The temperature of the dispersively mixed product to which the additional polymer is added is 100°C or higher, 150°C or higher or 200°C or higher, according to one aspect, and 450°C or lower, 400°C or lower or 350°C or lower, according to another aspect.

Aspect C includes, more specifically, the following first and second embodiments.

<First embodiment (controlled process conditions)>

Referring again to Fig. 8, the dispersive mixing zone 801 and distributive mixing zone 802 have different process conditions for the first embodiment. According to one aspect, the process conditions are one or more aspects selected from the group consisting of the zone length/cylinder inner diameter ratio, mixture fill factor, temperature, pressure and spatial volume ratio.

The zone length is the total length of the screw element forming the dispersive mixing zone and distributive mixing zone, and it depends on the construction of the screw.

The mixture fill factor is the ratio of the actual filling volume of the mixture with respect to the space volume of the extruder, the mixture fill factor being calculated by first abruptly stopping screw rotation and material supply, withdrawing the screw, sampling and measuring the mixture adhering to the surface of the screw, dividing the measured value by the density of the mixture to calculate the volume of the filling mixture, and subsequently dividing the volume of the filling mixture by the space volume (described below). The mixture fill factor depends on the screw construction and the extrusion conditions.

The spatial volume ratio is calculated by subtracting the screw volume (the total of the element volume and shaft volume) from the barrel volume of the extruder to calculate the space volume, and dividing the space volume by the barrel volume. The spatial volume ratio depends on the screw construction.

According to one aspect, the increase [EA] in the tensile elongation of the effluent from the dispersive mixing zone 801 with respect to the tensile elongation of the influent into the dispersive mixing zone 801, and the increase [EB] in the tensile elongation of the effluent from the distributive mixing zone 802 with respect to the tensile elongation of the influent into the distributive mixing zone 802, satisfy the relationship [EA] > [EB], while the increase [MA] in the flexural modulus of the effluent from the dispersive mixing zone 801 with respect to the flexural modulus of the influent into the dispersive mixing zone 801, and the increase [MB] in the flexural modulus of the effluent from the distributive mixing zone 802 with respect to the flexural modulus of the influent into the distributive mixing zone 802, satisfy the relationship [MA] > [MB].

The influent into each zone or the effluent from each zone may be the mixture entering into each zone or exiting from each zone, and the effluent is not limited to effluent from the discharge channel out of the extruder in the construction of the extruder, for example.

[EA] is preferably 1% or greater, 2% or greater or 3% or greater, and preferably 100% or lower, 50% or lower or 30% or lower. [EB] is preferably 0% or greater, 0.1% or greater or 0.5% or greater, and preferably 10% or lower, 5% or lower or 3% or lower.

[MA] is preferably 0.1 GPa or greater, 0.5 GPa or greater or 1 GPa or greater and preferably 20 GPa or lower, 10 GPa or lower or 5 GPa or lower. [MB] is preferably 0 GPa or greater, 0.1 GPa or greater or 0.3 GPa or greater and preferably 1 GPa or lower, 0.7 GPa or lower or 0.5 GPa or lower.

The difference between [EA] and [EB] ([EA] - [EB]) is preferably 0.01% or greater, 0.1% or greater or 1% or greater, and preferably 100% or less, 50% or less or 10% or less.

The difference between [MA] and [MB] ([MA] - [MB]) is preferably 0.001 GPa or greater, 0.01 GPa or greater or 0.1 GPa or greater and preferably 10 GPa or less, 5 GPa or less or 1 GPa or less.

According to one aspect, the zone length/cylinder inner diameter ratios in the dispersive mixing zone 801 and distributive mixing zone 802 are each preferably 1 or greater, 3 or greater or 4 or greater, and preferably 30 or lower, 20 or lower or 10 or lower.

According to one aspect, the mixture fill factors in the dispersive mixing zone 801 and distributive mixing zone 802 are each preferably 10% or greater, 50% or greater or 70% or greater, and preferably 100% or lower, 99% or lower or 95% or lower.

According to one aspect, the temperatures in the dispersive mixing zone 801 and distributive mixing zone 802 are each preferably 100°C or higher, 150°C or higher or 200°C or higher, and preferably 400°C or lower, 350°C or lower or 300°C or lower.

According to one aspect, the mixture pressures in the dispersive mixing zone 801 and distributive mixing zone 802 are each preferably 0 MPa or higher, 0.1 MPa or higher, 0.3 MPa or higher or 1 MPa or higher, and preferably 15 MPa or lower, 10 MPa or lower, 5 MPa or lower or 3 MPa or lower.

According to one aspect, the spatial volume ratios in the dispersive mixing zone 801 and distributive mixing zone 802 are each preferably 10% or greater, 20% or greater or 30% or greater, and preferably 70% or lower, 60% or lower or 50% or lower.

According to one aspect, in the region where the zone length/cylinder inner diameter ratio of the dispersive mixing zone 801 is one or more, 2 or greater or 5 or greater and the zone length/cylinder inner diameter ratio of the distributive mixing zone 802 is 5 or lower, 2 or lower or 1 or lower, the mixture pressure is 0.1 MPa or higher, 0.2 MPa or higher, 0.3 MPa or higher, 0.5 MPa or higher, 1 MPa or higher, 3 MPa or higher, 5 MPa or higher or 7 MPa or higher. The mixture pressure is preferably 20 MPa or lower, 15 MPa or lower or 10 MPa or lower from the viewpoint of inhibiting damage to the second component. In this case the region in which high pressure is applied to the mixture may be relatively wider in the dispersive mixing zone 801, and relatively narrower in the distributive mixing zone 802. This will allow micronization of the second component to proceed satisfactorily in the dispersive mixing zone 801 while avoiding damage to the second component in the distributive mixing zone 802 and helping to improve the dispersed state of the second component in the first component. The region in which the mixture pressure is in the aforementioned range may be a region of the dispersive mixing zone 801 where the zone length/cylinder inner diameter ratio is 30 or lower, 20 or lower or 10 or lower.

According to one aspect, the mixture pressure is 0.3 MPa or higher in the region of the dispersive mixing zone

where the zone length/cylinder inner diameter ratio is 1 or greater and the region of the distributive mixing zone where the zone length/cylinder inner diameter ratio is 5 or lower.

According to one aspect, the rate of improvement in the physical properties per unit mass of the second component in the mixture is greater in the distributive mixing zone than in the dispersive mixing zone, from the viewpoint of improving dispersion of the second component and obtaining more practical properties. The rate of improvement in the physical properties in the dispersive mixing zone is the ratio of the physical properties of the effluent from the dispersive mixing zone with respect to the physical properties of the influent into the dispersive mixing zone, and the rate of improvement in the physical properties in the distributive mixing zone is the ratio of the physical properties of the effluent from the distributive mixing zone with respect to the physical properties of the influent into the distributive mixing zone. According to one aspect, the physical properties are selected from among tensile elongation and flexural modulus. From the viewpoint described above, the ratio of the rate of improvement in the physical properties of the distributive mixing zone with respect to the dispersive mixing zone is preferably greater than 1, 1.2 or greater or 1.5 or greater, while from the viewpoint of easier design of the process conditions it may be 100 or lower, 10 or lower or 5 or lower.

<Second embodiment (control of second component concentration)>

Referring again to Fig. 8, according to the second embodiment the concentration [CA] of the second component in the dispersive mixing zone 801 is 10 mass% to 90 mass%, the concentration [CB] of the second component in the distributive mixing zone 802 is 1 mass% to 50 mass%, and the ratio [CA]/[CB] is 2 to 90. For example, the concentration of the second component can be adjusted to within the aforementioned range by a method of adding the additional polymer to the effluent from the dispersive mixing zone 801 (by side feeding of the additional polymer in the melting zone 804 of Fig. 8, for example), followed by supply to the distributive mixing zone 802. By adjusting the concentration of the second component in the dispersive mixing zone 801 and distributive mixing zone 802 in this manner, it is possible to achieve both micronization of the second component in the dispersive mixing zone 801, and improvement in the dispersed state of the second component while avoiding damage to the second component, in the distributive mixing zone 802.

The concentration [CA] is 10 mass% or greater, 15 mass% or greater or 20 mass% or greater, from the viewpoint of satisfactorily promoting micronization of the second component, and it is 90 mass% or lower, 80 mass% or lower or 70 mass% or lower, from the viewpoint of inhibiting damage to the second component.

The concentration [CB] is 1 mass% or greater, 5 mass% or greater or 10 mass% or greater, from the viewpoint of adjusting the concentration of the second component in the resin composition for different purposes, and it is 50 mass% or lower, 40 mass% or lower or 30 mass% or lower, from the viewpoint of inhibiting damage to the second component.

The ratio [CA]/[CB] is 2 or greater, 3 or greater or 4 or greater, from the viewpoint of promoting micronization of the second component in the dispersive mixing step and inhibiting its damage in the distributive mixing step, and according to another aspect it is 90 or lower, 50 or lower or 10 or lower, from the viewpoint of avoiding damage to the second component by an excessively high concentration [CA], or avoiding restrictions to application of the resin composition due to an excessively low concentration [CB].

<Change in thixotropy index>

According to one aspect, the increase [TA] in the thixotropy index of the effluent from the dispersive mixing zone 801 with respect to the thixotropy index of the influent into the dispersive mixing zone 801, and the increase [TB] of the thixotropy index of the effluent from the distributive mixing zone 802 with respect to the thixotropy index of the influent into the distributive mixing zone 802, satisfy the relationship [TA] > [TB]. A larger increase [TA] indicates greater micronization of the second component in the dispersive mixing zone 801, and a larger increase [TB] indicates greater micronization of the second component in the distributive mixing zone 802. The relationship [TA] > [TB] indicates that micronization of the second component in the dispersive mixing zone 801 proceeds preferentially over the distributive mixing zone 802.

The ratio [TA]/[TB] is preferably greater than 1, 2 or greater or 3 or greater, from the viewpoint of preferentially accomplishing micronization of the second component in the dispersive mixing zone 801, and preferably 100 or lower, 50 or lower or 10 or lower, from the viewpoint of inhibiting damage to the second component by excessive micronization of the second component in the dispersive mixing zone 801. The method for measuring the thixotropy index is described below.

The increase [TA] is preferably greater than 0.01 and 10 or lower, or 0.05 to 5, or 0.1 to 2.

The increase [TB] is preferably greater than 0.01 or greater and less than 10, or 0.05 to 5, or 0.1 to 2.

[Extrusion of resin composition]

In the method according to aspects A to C, the resin composition b that has exited the kneading zones 101, 201, 301 (aspect A), distributive mixing zones 402, 602 (aspect B) or distributive mixing zone 802 (aspect C) may be extruded out of the extruder in any desired form. A pellet form, for example, is preferred for easier post-treatment and transport. The

preferred form of pellets may be round, elliptical or cylindrical, depending on the system used for cutting during extrusion. The sizes of round pellets may be diameters of 1 mm to 3 mm, and the sizes of cylindrical pellets may be diameters of 1 mm to 3 mm and lengths of 2 mm to 10 mm. The diameter and length are preferably above these specified lower limits from the viewpoint of operational stability during extrusion, and they are preferably lower than the specified upper limits from the viewpoint of seizing in the molding machine in post-working.

[Production of molded article]

A resin composition produced by the method according to any of aspects A to C may be cast into a molded article in any of various forms such as a film, sheet, fibrous form, plate shapes, powder or three-dimensional structure. The molding method may be injection molding, extrusion molding, foam molding, insert molding, in-mold coating molding or die molding, for example. Various types of extrusion molding are suitable for molding into a sheet, film or fibers. The molding temperature may be appropriately selected according to the resin composition, and for example it may be at or above the melting point of the resin that is used, or at least 20°C higher than the melting point or at least 30°C higher than the melting point, and up to 90°C higher than the melting point, up to 80°C higher than the melting point or up to 70°C higher than the melting point.

[Material components of resin composition]

For the purpose of the disclosure, the resin composition produced by the method according to aspects A to C includes the first component as a polymer, organic fibers, and/or the second component as a polymer different from the first component. According to one aspect, the polymer different from the first component is a polymer having a different molecular structure and/or molecular weight than the first component. The polymer in the first component, the organic fibers in the second component and the polymer in the second component may each be of one type alone or a combination of two or more types. According to one aspect, at least one polymer composing each of the polymer in the first component and the polymer in the second component has a different molecular structure and/or molecular weight. According to one aspect the second component is organic fibers, according to another aspect it is a polymer, and according to yet another aspect it is a combination of organic fibers and a polymer. The following are examples of material components to be included in the resin composition, since they can be used for production of resin compositions.

<First component>

The first component is a polymer. The polymer is appropriately selected according to the purpose of use of the resin composition, and for example, it may be a crystalline thermoplastic resin having a melting point in the range of 100°C to 350°C, or an amorphous thermoplastic resin having a glass transition point in the range of 100 to 250°C. Examples of polymers include polyolefin-based resins, polyamide-based resins, polyester-based resins, polyacetal-based resins, polyphenylene ether-based resins and polyphenylenesulfide-based resins, as well as blends of two or more of these, and from the viewpoint of handleability and cost they are preferably polyolefin-based resins, polyamide-based resins, polyester-based resins or polyacetal-based resins, more preferably polyamide-based resins, polyolefin-based resins or polyacetal-based resins, and most preferably polyamide-based resins or polyacetal-based resins. From the viewpoint of increasing the heat resistance of the resin composition, the melting point of the thermoplastic resin (especially for a crystalline resin) is preferably 140°C or higher, 150°C or higher, 160°C or higher, 170°C or higher, 180°C or higher, 190°C or higher, 200°C or higher, 210°C or higher, 220°C or higher, 230°C or higher, 240°C or higher, 245°C or higher or 250°C or higher.

For a resin with a relatively low melting point (such as a polyolefin-based resin), for example, the melting point of the thermoplastic resin may be 150°C to 190°C or 160°C to 180°C, while for a resin with a relatively high melting point (such as a polyamide-based resin), for example, it may be 220°C to 350°C or 230°C to 320°C.

The melting point, for the purpose of the disclosure, is the peak top temperature of the endothermic peak appearing upon temperature increase from 23°C at a temperature-elevating rate of 10°C/min using a differential scanning calorimeter (DSC), or when two or more endothermic peaks are present, it is the peak top temperature of the endothermic peak furthest at the high-temperature end. The glass transition point, for the present purpose, is the temperature determined using a dynamic viscoelasticity measuring apparatus as described above.

Preferred polyolefin-based resins are polymers obtained by polymerizing olefins (such as $\alpha$-olefins) or alkenes as monomer units. Specific examples of polyolefin-based resins include ethylene-based (co)polymers such as low-density polyethylene (for example, linear low-density polyethylene), high-density polyethylene, ultralow-density polyethylene and ultrahigh molecular weight polyethylene, polypropylene-based (co)polymers such as polypropylene, ethylene-propylene copolymer and ethylene-propylene-diene copolymer, and copolymers with $\alpha$-olefins such as ethylene, including ethylene-acrylic acid copolymer, ethylene-methyl methacrylate copolymer and ethylene-glycidyl methacrylate copolymer.

The most preferred polyolefin-based resin is polypropylene. Particularly preferred is polypropylene, which has a melt mass-flow rate (MFR) of 3 g/10 min to 30 g/10 min, inclusive, as measured at 230°C with a load of 21.2 N, according to ISO1133. The lower limit for MFR is more preferably 5 g/10 min, even more preferably 6 g/10 min and most preferably 8 g/10 min. The upper limit for MFR is more preferably 25 g/10 min, even more preferably 20 g/10 min and most preferably 18 g/10 min. The MFR is preferably not above this upper limit from the viewpoint of increased toughness of the composition, and it is preferably not less than the lower limit from the viewpoint of the flow property of the composition.

An acid-modified polyolefin-based resin may also be used as appropriate to increase the affinity with cellulose. The acid may be appropriately selected from among maleic acid, fumaric acid, succinic acid, phthalic acid and their anhydrides, and polycarboxylic acids such as citric acid. Preferred among these are maleic acid or its anhydride, for an increased modification rate. While the modification method is not particularly restricted, a common method involves heating to above the melting point in the presence or in the absence of a peroxide, for melt kneading. The polyolefin resin to be acid-modified may be any of the aforementioned polyolefin-based resins, but polypropylene is most suitable for use. The acid-modified polypropylene may be used alone, but it is preferably used in admixture with a non-modified polypropylene in order to adjust the modification rate of the entire resin. The proportion of acid-modified polypropylene with respect to the total polypropylene is 0.5 mass% to 50 mass%. The lower limit is more preferably 1 mass%, even more preferably 2 mass%, yet more preferably 3 mass%, even yet more preferably 4 mass% and most preferably 5 mass%. The upper limit is more preferably 45 mass%, even more preferably 40 mass%, yet more preferably 35 mass%, even yet more preferably 30 mass% and most preferably 20 mass%. In order to maintain interfacial strength between the first component and the second component (according to one aspect, the interfacial strength between the resin and cellulose), it is preferably higher than the lower limit, and in order to maintain ductility as a resin it is preferably lower than the upper limit.

The melt mass-flow rate (MFR) of the acid-modified polypropylene as measured at 230°C with a load of 21.2 N according to ISO1133 is preferably 50 g/10 min or higher, in order to increase affinity with the interface between the first component and second component (such as the interface between the cellulose and resin). A more preferred lower limit is 100 g/10 min, with 150 g/10 min being more preferred and 200 g/10 min being most preferred. There is no particular upper limit, and it may be 500 g/10 min in order to maintain mechanical strength. An MFR within this range can provide an advantage of greater affinity at the interface between the first component and second component (according to one aspect, the interface between the cellulose and resin).

Examples of polyamide-based resins include polyamide 6, polyamide 11 and polyamide 12 obtained by polycondensation reaction of lactams, or polyamide 6,6, polyamide 6,10, polyamide 6,11, polyamide 6,12, polyamide 6,T, polyamide 6,I, polyamide 9,T, polyamide 10,T, polyamide 2M5,T, polyamide MXD,6, polyamide 6,C or polyamide 2M5,C obtained as copolymers between diamines such as 1,6-hexanediamine, 2-methyl-1,5-pentanediamine, 1,7-heptanediamine, 2-methyl-1-6-hexanediamine, 1,8-octanediamine, 2-methyl-1,7-heptanediamine, 1,9-nonanediamine, 2-methyl-1,8-octanediamine, 1,10-decanediamine, 1,11-undecanediamine, 1,12-dodecanediamine and m-xylylenediamine, and dicarboxylic acids such as butanedioic acid, pentanedioic acid, hexanedioic acid, heptanedioic acid, octanedioic acid, nonanedioic acid, decanedioic acid, benzene-1,2-dicarboxylic acid, benzene-1,3-dicarboxylic acid, benzene-1,4-dicarboxylic acid, cyclohexane-1,3-dicarboxylic acid and cyclohexane-1,4-dicarboxylic acid, as well as copolymers obtained by copolymerizing the foregoing, of which copolymers such as polyamide 6,T/6,I are examples.

More preferred among these polyamide-based resins are aliphatic polyamides such as polyamide 6, polyamide 11, polyamide 12, polyamide 6,6, polyamide 6,10, polyamide 6,11 and polyamide 6,12, and alicyclic polyamides such as polyamide 6,C and polyamide 2M5,C.

There are no particular restrictions on the terminal carboxyl group concentration of the polyamide-based resin, but it is preferably 20 μmol/g or greater or 25 μmol/g or greater, and preferably 150 μmol/g or lower or 100 μmol/g or lower.

The amino group concentration of the polyamide-based resin is preferably 20 μmol/g or greater or 30 μmol/g or greater, and preferably 150 μmol/g or lower or 100 μmol/g or lower.

There are no particular restrictions on the total concentration of terminal amino groups and terminal carboxyl groups in the polyamide-based resin, but it is preferably 10 μmol/g or greater, 50 μmol/g or greater, 100 μmol/g or greater or 135 μmol/g or greater, while from the viewpoint of preventing viscosity reduction due to excessively low molecular weight of the resin and inhibiting creation of burrs during molding, it is preferably 500 μmol/g or lower, 300 μmol/g or lower, 135 μmol/g or lower or 100 μmol/g or lower.

The ratio of amino terminal groups with respect to carboxyl-terminated groups ($[NH_2]/[COOH]$) in the polyamide-based resin is preferably greater than 1.00, 1.01 or greater, 1.05 or greater or 1.10 or greater. The upper limit for the amino terminal group ratio is not particularly restricted, but from the viewpoint of satisfactorily maintaining color tone of the resin composition it is preferably 10,000 or lower, 1000 or lower, 100 or lower or 10 or lower.

The method used to adjust the terminal group concentration of the polyamide-based resin may be a publicly known method. For example, the method may be addition of a terminal group adjuster that reacts with the terminal groups, such as a diamine compound, monoamine compound, dicarboxylic acid compound, monocarboxylic acid compound, acid anhydride, monoisocyanate, monoacid halide, monoester or monoalcohol, to the polymerization solution, so as to result in

the prescribed terminal group concentration during polymerization of the polyamide.

The concentration of the amino terminal groups and carboxyl terminal groups in the polyamide-based resin can be determined from the integral of the characteristic signal corresponding to each terminal group, according to $^{1}$H-NMR. The method described in Japanese Unexamined Patent Publication HEI No. 7-228775 is recommended.

The intrinsic viscosity [η] of the polyamide-based resin, measured in concentrated sulfuric acid at 30°C, is preferably 0.6 to 2.0 dL/g, more preferably 0.7 to 1.4 dL/g, even more preferably 0.7 to 1.2 dL/g and most preferably 0.7 to 1.0 dL/g. Using a polyamide having intrinsic viscosity in this range can provide an advantage of increasing the flow property of the resin composition in the die during injection molding, and improving the outer appearance of molded pieces.

As used herein, the term "intrinsic viscosity" is synonymous with the viscosity generally known as limiting viscosity, and it can be measured, for example, by the method described in Polymer Process Engineering (Prentice-Hall, Inc 1994), pp.291-294.

Polyester-based resins include one or more from among polyethylene terephthalate (PET), polybutylene terephthalate (PBT), polyethylene naphthalate (PEN), polybutylene succinate (PBS), polybutylene succinate adipate (PBSA), polybutylene adipate terephthalate (PBAT), polyhydroxyalkanoic acids (PHA), polylactic acid (PLA), polyallylate (PAR) and polycarbonate (PC). Preferred polyester-based resins include PET, PBS, PBSA, PBT and PEN, with PBS, PBSA and PBT being more preferred.

The terminal groups of the polyester-based resin can be freely altered by the monomer ratio during polymerization and by the presence or absence and amount of stabilizer at the ends, and more preferably the carboxyl terminal group ratio with respect to the total terminal groups of the polyester-based resin ([COOH]/[total terminal groups]) is 0.30 to 0.95. The lower limit for the carboxyl terminal group ratio is more preferably 0.35, even more preferably 0.40 and most preferably 0.45. The upper limit for the carboxyl terminal group ratio is more preferably 0.90, yet more preferably 0.85 and most preferably 0.80. The carboxyl terminal group ratio is preferably 0.30 or greater from the viewpoint of dispersibility of the cellulose in the composition, and it is preferably no greater than 0.95 from the viewpoint of the color tone of the obtained composition.

A polyacetal-based resin will usually be a homopolyacetal obtained from a formaldehyde starting material or a copolyacetal with trioxane as the main monomer and comprising 1,3-dioxolane as a comonomer component, and while both of these may be used, copolyacetals are preferably used from the viewpoint of thermal stability during working. The percentage of structure due to the comonomer component (for example, 1,3-dioxolane) is more preferably in the range of 0.01 to 4 mol%. The preferred lower limit for the percentage of structure due to the comonomer component is 0.05 mol%, more preferably 0.1 mol% and even more preferably 0.2 mol%. The preferred upper limit is 3.5 mol%, more preferably 3.0 mol%, even more preferably 2.5 mol% and most preferably 2.3 mol%.

The lower limit is preferably in the range specified above from the viewpoint of thermal stability during extrusion or shaping, and the upper limit is preferably in the range specified above from the viewpoint of mechanical strength.

Preferred examples of polymers are polymers having hydrophilic groups (such as one or more hydroxyl, amino and carboxy groups), from the viewpoint of affinity with cellulose. Preferred examples of polymers with hydrophilic groups include one or more selected from the group consisting of acid-modified polyolefin-based resins, polyacetal-based resins, polycarbonate-based resins, polyamide-based resins, polyester-based resins, polyphenylene ether-based resins and acrylic-based resins. Polyamide-based resins and maleated polypropylene are preferred among these.

<Second component>

The second component is organic fibers or a combination of organic fibers with a polymer different from the first component. According to one aspect, the second component is mixed with the first component for dispersion in the first component, allowing the properties of the resin composition (according to one aspect, one or more, and preferably all, selected from the group consisting of tensile elongation, flexural modulus, coefficient of thermal expansion and physical property stability), to be improved compared to when the second component is not present. The amount of the second component with respect to 100 mass% as the total resin composition, or the amount of the second component with respect to 100 mass% as the total of the first component and the second component, is preferably 0.1 mass% or greater, 0.5 mass% or greater, 1 mass% or greater or 3 mass% or greater, and preferably 30 mass% or lower, 25 mass% or lower, 20 mass% or lower or 15 mass% or lower. The amount of the second component is preferably within this range from the viewpoint of high tensile elongation, high flexural modulus, low coefficient of thermal expansion and/or satisfactory physical property stability.

Preferred examples for organic fibers and for a polymer will now be mentioned.

<Organic fibers>

Organic fibers are fibers composed of an organic material. According to one aspect, the organic fibers are polymer fibers, according to another aspect they are fibers having a hydrogen bond-forming structure (such as an OH

structure and/or an NH structure), and according to yet another aspect they are one or more selected from the group consisting of natural fibers (such as cellulose fibers, cellulose nanocrystals, chitin fibers, chitosan fibers or wool) and synthetic fibers (such as aramid fibers, nylon fibers, acrylic fibers, polyester fibers, vinylon fibers, rayon fibers and polyurethane fibers). As used herein, the term "cellulose fibers" means cellulose having an L/D of 30 or greater, and the term "cellulose nanocrystals" means cellulose having a mean fiber diameter of 1000 nm or smaller and an L/D of less than 30. Organic fibers with a hydrogen bond-forming structure have a natural tendency to aggregate by hydrogen bonding, and in the method of the disclosure it is also possible to satisfactorily microdisperse such organic fibers in the first component.

The amount of the organic fibers with respect to 100 mass% as the total resin composition is preferably 0.1 mass% or greater, 0.5 mass% or greater, 1 mass% or greater or 3 mass% or greater, and preferably 30 mass% or lower, 25 mass% or lower, 20 mass% or lower or 15 mass% or lower. The amount of the organic fibers is preferably within this range from the viewpoint of high tensile elongation, high flexural modulus, low coefficient of thermal expansion and/or satisfactory physical property stability.

[Cellulose fibers]

According to one aspect the organic fibers include cellulose fibers or consist of cellulose fibers. The starting material for the cellulose fibers may be natural cellulose fibers or regenerated cellulose fibers. Natural cellulose fibers may be either wood pulp obtained from a wood species (broadleaf tree or conifer) or nonwood pulp obtained from a non-wood species (bamboo, hemp fiber, bagasse, kenaf or linter), or refined pulp from the same (such as refined linter). Nonwood pulp may be cotton pulp containing cotton linter pulp, hemp pulp, bagasse pulp, kenaf pulp, bamboo pulp or straw pulp. The cellulose fibers may be obtained from a starting material which is cotton pulp, hemp pulp, bagasse pulp, kenaf pulp, bamboo pulp or straw pulp, or the refined pulp obtained from the respective starting materials of cotton lint, cotton linter, hemp abaca (from Ecuador or the Philippines, for example), sisal, bagasse, kenaf, bamboo or straw, by refining steps such as delignification by digestion treatment, and bleaching steps.

According to one aspect, the cellulose fibers are cellulose nanofibers. Cellulose nanofibers can be obtained by treatment of the pulp with hot water at 100°C or higher, hydrolysis of the hemicellulose portion to weaken it, and then defibrating by a pulverizing method using a high-pressure homogenizer, microfluidizer, ball mill or disk mill, for example.

According to one aspect, the number-average fiber diameter of the cellulose nanofibers is 2 to 1000 nm, preferably 4 nm or larger, 5 nm or larger, 10 nm or larger, 15 nm or larger, 20 nm or larger, 50 nm or larger or 100 nm or larger, and preferably 500 nm or smaller, 450 nm or smaller, 400 nm or smaller, 350 nm or smaller, 300 nm or smaller, 250 nm or smaller or 200 nm or smaller.

According to one aspect, the number-average fiber length/number-average fiber diameter ratio (L/D) of the cellulose nanofibers is 30 or greater, 50 or greater, 80 or greater or 100 or greater, and according to another aspect it is 5000 or lower, 4000 or lower or 3000 or lower.

For the purpose of the present disclosure, the L/D ratio of the number-average fiber diameter (D) and the number-average fiber length (L) of the cellulose fibers is the value measured using a scanning electron microscope (SEM), by the following procedure. The aqueous dispersion of cellulose fibers is exchanged with tert-butanol, diluted to 0.001 to 0.1 mass%, and dispersed using a high-shear homogenizer (such as an "ULTRA-TURRAX T18", trade name of IKA Corp.) with treatment conditions of 15,000 rpm $\times$ 3 min, cast onto an osmium-vapor deposited silicon substrate and air-dried, and then dried for use as a measuring sample and measured with a high-resolution scanning electron microscope (SEM). Specifically, with the observation field adjusted to a magnification allowing observation of at least 100 fibers, the lengths (L) and diameters (D) of 100 randomly selected fibers are measured and the ratio (L/D) is calculated. The number-average value for the length (L), the number-average value for the diameter (D) and the number-average value for the ratio (L/D) is calculated for the cellulose fiber.

The length, diameter and L/D ratio of the cellulose fibers in the resin composition and molded article can be determined by dissolving the polymer component in an organic or inorganic solvent that is able to dissolve the polymer component, separating the cellulose fibers, adequately rinsing with the solvent, and then replacing the solvent with tert-butanol, adjusting to a 0.001 to 0.1 mass% dispersion, and re-dispersing with a high-shear homogenizer (for example, a "ULTRA-TURRAX T18" by IKA Corp.), for use in measurement by the method described above.

The degree of crystallinity of the cellulose fibers is preferably 55% or greater, 60% or greater, 70% or greater or 80% or greater, from the viewpoint of obtaining a resin composition with excellent heat resistance, mechanical strength and dimensional stability. If the degree of crystallinity is within this range, the mechanical properties (heat resistance, strength and dimensional stability) of the cellulose fibers themselves will be high, so that when the cellulose fibers are dispersed in a polymer, the heat resistance, strength and dimensional stability of the resin composition will also tend to be high. Although a higher degree of crystallinity is preferred, from the viewpoint of productivity the preferred upper limit is 99%.

When the cellulose fibers are type I cellulose crystals (derived from natural cellulose), the degree of crystallinity referred to here is that determined by the following formula, from the diffraction pattern ($2\theta$/deg. = 10 to 30) obtained by

measurement of the sample by wide-angle X-ray diffraction, based on the Segal method.

Degree of crystallinity (%) = ([Diffraction intensity from (200) plane with 2θ/deg. = 22.5] - [diffraction intensity from amorphous matter with 2θ/deg. = 18])/[diffraction intensity from (200) plane with 2θ/deg. = 22.5] × 100

When the cellulose fibers are type II cellulose crystals (derived from regenerated cellulose), the degree of crystallinity is determined by the following formula, from the absolute peak intensity h0 at 2θ = 12.6° attributed to the (110) plane peak of the type II cellulose crystal, and the peak intensity h1 from the baseline for the plane spacing, in wide-angle X-ray diffraction.

$$\text{Degree of crystallinity (\%)} = \text{h1/h0} \times 100$$

The known crystalline forms of cellulose include type I, type II, type III and type IV, among which type I and type II are most commonly used, whereas type III and type IV are not commonly used on an industrial scale but have been obtained on a laboratory scale. The cellulose fibers of the disclosure are preferably cellulose fibers containing type I cellulose crystals and type II cellulose crystals, for relatively high mobility in terms of structure and to obtain a resin composition with a lower coefficient of linear expansion and more excellent strength and elongation when subjected to stretching or bending deformation, by dispersion of the cellulose fibers in the resin, and more preferably the cellulose fibers contain type I cellulose crystals and have a degree of crystallinity of 55% or higher.

The degree of polymerization of the cellulose fiber is preferably 100 or greater, more preferably 150 or greater, even more preferably 200 or greater, yet more preferably 300 or greater and most preferably 400 or greater, and preferably 3500 or lower, more preferably 3300 or lower, even more preferably 3200 or lower, yet more preferably 3100 or lower and most preferably 3000 or lower.

The degree of polymerization of the cellulose fibers is preferably within this range from the viewpoint of workability and mechanical properties. The degree of polymerization is preferably not too high from the viewpoint of workability, and it is preferably not too low from the viewpoint of exhibiting mechanical properties.

The degree of polymerization of the cellulose fibers is the mean polymerization degree measured by a reduced relative viscosity method using a copper-ethylenediamine solution, as described in Verification Test (3) of "Japanese Pharmacopeia, 15th Edition Reference Manual (Hirokawa Shoten)".

According to one aspect, the weight-average molecular weight (Mw) of the cellulose fibers is 100,000 or greater and preferably 200,000 or greater. The ratio (Mw/Mn) of the weight-average molecular weight and number-average molecular weight (Mn) is 6 or lower and preferably 5.4 or lower. A higher weight-average molecular weight means a lower number of terminal groups of the cellulose molecules. Since the ratio (Mw/Mn) of the weight-average molecular weight and number-average molecular weight represents the width of the molecular weight distribution, a smaller Mw/Mn means a lower number of ends of cellulose molecules. Since the ends of the cellulose molecules are origins for thermal decomposition, a high weight-average molecular weight of the cellulose molecules alone is not sufficient, but when a higher weight-average molecular weight is combined with a more narrow width of the molecular weight distribution, it is possible to obtain cellulose fibers with especially high heat resistance, and a resin composition comprising the cellulose fibers and resin. The weight-average molecular weight (Mw) of the cellulose fibers may be 600,000 or lower, or 500,000 or lower, for example, from the viewpoint of greater availability of the cellulose starting material. The ratio (Mw/Mn) of the weight-average molecular weight and number-average molecular weight (Mn) may be 1.5 or greater or 2 or greater, for example, from the viewpoint of easier production of the cellulose fibers. The Mw can be controlled to within this range by selecting a cellulose starting material having the corresponding Mw, or by carrying out appropriate physical treatment and/or chemical treatment of the cellulose starting material. The Mw/Mn ratio can also be controlled to within this range by selecting a cellulose starting material having the corresponding Mw/Mn ratio, or by carrying out appropriate physical treatment and/or chemical treatment of the cellulose starting material. Examples of physical treatment for control of both the Mw and Mw/Mn include physical treatment by application of mechanical force, such as dry grinding or wet grinding with a microfluidizer, ball mill or disk mill, for example, or impacting, shearing, sliding or abrasion with a crusher, homomixer, high-pressure homogenizer or ultrasonic device, for example, while examples of chemical treatment include digestion, bleaching, acid treatment and regenerated cellulose treatment.

The weight-average molecular weight and number-average molecular weight of the cellulose fibers referred to here are the values determined after dissolving the cellulose fibers in lithium chloride-added N,N-dimethylacetamide, and then performing gel permeation chromatography with N,N-dimethylacetamide as the solvent.

The method of controlling the degree of polymerization (i.e. mean polymerization degree) or molecular weight of the cellulose fibers may be hydrolysis. Hydrolysis promotes depolymerization of amorphous cellulose inside the cellulose and lowers the mean polymerization degree. Simultaneously, hydrolysis also results in removal of impurities such as hemicellulose and lignin in addition to the aforementioned amorphous cellulose, so that the interior of the fiber material

becomes porous. Thus, in steps in which mechanical shear force is applied to the cellulose, such as during the kneading step and other steps described below, the cellulose is more easily subjected to mechanical processing and the cellulose is more easily micronized.

Alkali-soluble polysaccharides in the cellulose fibers include β-cellulose and γ-cellulose, in addition to hemicellulose. Alkali-soluble polysaccharides are understood by those skilled in the art to consist of the components that are obtained as the alkali-soluble portion of holocellulose (that is, the components other than α-cellulose in the holocellulose), upon solvent extraction and chlorine treatment of a plant (such as wood). Since alkali-soluble polysaccharides consist of hydroxyl group-containing polysaccharides with poor heat resistance, which can lead to inconveniences such as decomposition when subjected to heat, yellowing due to heat aging and reduced strength of the cellulose fibers, it is preferred to have a lower alkali-soluble polysaccharide content in the cellulose fibers.

According to one aspect, the average content of alkali-soluble polysaccharides in the cellulose fibers is preferably 20 mass% or lower, 18 mass% or lower, 15 mass% or lower, 12 mass% or lower, 11 mass% or lower or 8 mass% or lower with respect to 100 mass% of the cellulose fibers, from the viewpoint of obtaining satisfactory dispersibility for the cellulose fibers. The content may also be 1 mass% or greater, 2 mass% or greater, 3 mass% or greater or 6 mass% or greater from the viewpoint of facilitating production of the cellulose fibers. According to one aspect, the average content of alkali-soluble polysaccharides in the cellulose starting material may be 13 mass% or lower, 12 mass% or lower, 11 mass% or lower or 8 mass% or lower, and it is most preferably 0 mass%, but may be 3 mass% or greater or 6 mass% or greater, for example, from the viewpoint of availability of the cellulose starting material.

The average content of alkali-soluble polysaccharides can be determined by a method described in non-patent literature (Mokushitsu Kagaku Jikken Manual, ed. The Japan Wood Research Society, pp.92-97, 2000), subtracting the α-cellulose content from the holocellulose content (Wise method). In the technical field this method is considered to be a method of measuring hemicellulose content. The alkali-soluble polysaccharide content is calculated 3 times for each sample, and the number average for the calculated alkali-soluble polysaccharide contents is recorded as the average alkali-soluble polysaccharide content.

According to one aspect, the average content of acid-insoluble components in the cellulose fibers is preferably 10 mass% or lower, 5 mass% or lower or 3 mass% or lower with respect to 100 mass% of the cellulose fibers, from the viewpoint of avoiding reduction in heat resistance and resulting discoloration of the cellulose fibers. The content may also be 0.1 mass% or greater, 0.2 mass% or greater or 0.3 mass% or greater from the viewpoint of facilitating production of the cellulose fibers.

The average content of the acid-insoluble component is quantified using the Klason method, described in non-patent literature (Mokushitsu Kagaku Jikken Manual, ed. The Japan Wood Research Society, pp.92-97, 2000). In the technical field this method is considered to be a method of measuring lignin content. The sample is stirred in a sulfuric acid solution to dissolve the cellulose and hemicellulose, and then filtered with glass fiber filter paper, and the obtained residue is used as the acid-insoluble component. The acid-insoluble component content is calculated from the weight of the acid-insoluble component, and the average of the acid-insoluble component content calculated for three samples is recorded as the average content of the acid-insoluble component.

The cellulose fibers may also be subjected to chemical treatment (such as oxidation or chemical modification using a modifying agent). As an example, Cellulose (1998)5, 153-164 describes using micronized cellulose fibers obtained by oxidizing cellulose with a 2,2,6,6-tetramethylpiperidin-1-oxyl radical and then subjecting them to washing and mechanical defibration.

[Hydrophobizing of cellulose fibers]

The cellulose fibers may be cellulose fibers that have been hydrophobized with a hydrophobic agent (also referred to herein as "chemically modified cellulose fibers"). Hydrophobizing has an effect of weakening the hydrogen bonds between the cellulose fibers and contributing to microdispersion, while increasing the heat resistance of the cellulose fibers and helping to inhibit deterioration caused by kneading with the resin, so that the cellulose fibers are less likely to form origins for physical property defects. The hydrophobic agent (also referred to herein as "modifying agent") used may be a compound that reacts with the hydroxyl groups of cellulose, and it may be an esterifying agent, an etherifying agent or a silylating agent. An esterifying agent is especially preferred. According to a preferred aspect, the hydrophobizing is acylation using an esterifying agent. Preferred esterifying agents are acid halides, acid anhydrides and vinyl carboxylate esters. According to an especially preferred aspect, the hydrophobizing is acetylation. Particularly preferred among these esterification reactants are one or more selected from the group consisting of acetic anhydride, propionic anhydride, butyric anhydride, vinyl acetate, vinyl propionate, vinyl butyrate and acetic acid, among which acetic anhydride and vinyl acetate are especially preferred from the viewpoint of reaction efficiency.

For obtaining hydrophobized cellulose nanofibers, the method for micronizing the natural cellulose starting material to reduce the fiber diameters is not particularly restricted, but it is preferred for the defibrating treatment conditions (creation of the shear field or the size of the shear field) to be as efficient as possible. In particular, when a defibrating

solution containing an aprotic solvent is impregnated with a cellulose starting material having a cellulose purity of 85 mass% or greater, swelling of the cellulose is rapidly induced and only a small degree of stirring and shear energy is applied during micronization of the cellulose. A cellulose modifying agent may also be added immediately after defibrating, to obtain hydrophobized cellulose nanofibers. This method is preferred from the viewpoint of production efficiency and refining efficiency (i.e. higher cellulose purity of the hydrophobized cellulose nanofibers), as well as the physical properties of the resin composition.

Examples of aprotic solvents include alkyl sulfoxides, alkyl amides and pyrrolidone, which may be used either alone or in combinations of two or more. Among these aprotic solvents, using DMSO (29.8), DMF (26.6), DMAc (27.8) and NMP (27.3) (the numerals in parentheses indicating the donor numbers), and especially DMSO, will allow hydrophobized cellulose nanofibers with a high thermal decomposition initiation temperature to be more efficiently produced. While the action mechanism is not completely understood, it is theorized to be due to homogeneous microswelling of the fiber starting material in the aprotic solvent.

The degree of hydrophobicity (degree of modification) of the cellulose fibers is represented as the average degree of substitution of hydroxyl groups (the average number of hydroxyl groups replaced per glucose molecule, as the basic structural unit of cellulose, or "DS"). According to one aspect, the DS of the chemically modified cellulose fibers is preferably 0.01 to 2.0. If the DS is 0.01 or greater it will be possible to obtain a resin composition containing chemically modified cellulose fibers with a high thermal decomposition initiation temperature. If it is 2.0 or lower, the unmodified cellulose backbone will remain in the chemically modified cellulose fibers, making it possible to obtain a resin composition containing chemically modified cellulose fibers which exhibits both the high tensile strength and dimensional stability of the cellulose fibers and the high thermal decomposition initiation temperature due to chemical modification. The DS is more preferably 0.05 or greater, more preferably 0.1 or greater, even more preferably 0.2 or greater and most preferably 0.3 or greater, and preferably 1.8 or lower, more preferably 1.5 or lower, even more preferably 1.2 or lower and most preferably 1.0 or lower.

In the reflective infrared absorption spectrum of the hydrophobized cellulose fibers, the peak locations of the absorption bands vary depending on the type of hydrophobized modifying groups. Based on variation in the peak locations it is possible to determine from which absorption bands the peaks are based, allowing identification of modifying groups. It is also possible to calculate the modification rate from the peak intensity ratio of peaks attributable to the modifying groups and peaks attributable to the cellulose backbone.

When the modifying group is an acyl group, the degree of acyl substitution (DS) can be calculated based on the reflective infrared absorption spectrum of the esterified cellulose fibers. The peak of the absorption band for C=O based on acyl groups appears at 1730 $cm^{-1}$, while the peak of the absorption band for C-O based on the cellulose backbone chain appears at 1030 $cm^{-1}$. The DS of esterified cellulose can be calculated using the calibration curve:

$$\text{Degree of substitution DS} = 4.13 \times \text{IR index } (1030),$$

derived from a correlation graph drawn between the DS obtained from solid NMR measurement of the esterified cellulose, and the modification rate (IR index 1030), defined by the ratio of the peak intensity of the absorption band for C=O based on acyl groups with respect to the peak intensity of the absorption band for C-O of the cellulose backbone chain.

When it is difficult to properly perform measurement based on the reflective infrared absorption spectrum, solid NMR may be used to determine the value by the following formula representing the area intensity (Inf) of the signal attributed to one carbon atom of the modifying group, with respect to the total area intensity (Inp) of the signals attributed to C1-C6 carbons of the pyranose rings of cellulose, appearing in the range of 50 ppm to 110 ppm.

$$\text{DS} = (\text{Inf}) \times 6/(\text{Inp})$$

For example, when the modifying group is acetyl, the signal at 23 ppm attributed to $-CH_3$ may be used.

[Cellulose nanocrystals]

Cellulose nanocrystals may be crystalline cellulose remaining after using pulp as starting material, cutting it and then dissolving the amorphous portion of the cellulose in an acid such as hydrochloric acid or sulfuric acid. According to one aspect, the length/diameter ratio (L/D ratio) of the cellulose nanocrystals is less than 30. According to one aspect, the mean diameter of the cellulose nanocrystals is 1000 nm or smaller, and preferably 500 nm or smaller or 200 nm or smaller, and preferably 10 nm or larger, 20 nm or larger or 30 nm or larger. The L/D ratio and mean diameter are values measured by the same method as for the mean fiber diameter of the cellulose fibers.

According to one aspect, the L/D ratio of the cellulose nanocrystals is less than 30, and preferably 25 or less, 20 or less, 15 or less, 10 or less or 5 or less. The lower limit is not particularly restricted, but may be greater than 1. Cellulose

nanocrystals can improve the tensile elongation of the resin composition. According to one aspect, the cellulose whiskers may have the same properties as mentioned above for the cellulose fibers (in unmodified or modified form), except for their size.

[Chitin fibers and chitosan fibers]

Chitin fibers are obtained from shells from a crustacean, for example, the starting material being separated and purified to obtain fibers composed mainly of an acetylglucosamine polymer, i.e. chitin. Chitosan fibers are fibers obtained by deacetylation of chitin fibers, and they may be fibers composed mainly of glucosamine polymer, i.e. chitosan. According to one aspect, the mean diameter of the chitin fibers and chitosan fibers is 2 to 1000 nm, and preferably 500 nm or smaller or 200 nm or smaller, and also preferably 10 nm or larger, 20 nm or larger or 30 nm or larger.

According to one aspect, the L/D of the chitin fibers and chitosan fibers is 30 or greater, and preferably 50 or greater or 100 or greater, while according to another aspect it is 100,000 or smaller, 50,000 or smaller, 10,000 or smaller or 5000 or smaller.

[Aramid fibers]

Aramid fibers are synthetic fibers composed mainly of an aromatic polyamide, and they are largely classified into para-aramid fibers or meta-aramid fibers, depending on the aromatic structure. According to one aspect, the mean diameter of the aramid fibers is 2 to 1000 nm, and preferably 500 nm or smaller or 200 nm or smaller, and also preferably 10 nm or larger, 20 nm or larger or 30 nm or larger.

According to one aspect, the L/D of the aramid fibers is 30 or greater, and preferably 50 or greater or 100 or greater, while according to another aspect it is 100,000 or smaller, 50,000 or smaller, 10,000 or smaller or 5000 or smaller.

The fiber lengths, fiber diameters and L/D of the organic fibers other than the cellulose fibers are measured by the same methods as for the cellulose fibers.

<Polymer>

According to one aspect, the second component includes a polymer. According to one aspect, at least one of the polymers composing the polymer in the first component and the polymer in the second component has a different molecular structure and/or molecular weight. A polymer as the second component may include, or may consist of, one or more selected from the group consisting of polyolefin-based resins, polyamide-based resins, polyester-based resins, polyacetal-based resins, polyphenylenesulfide-based resins, polyvinyl alcohol-based resins, polyvinylidene chloride-based resins, polystyrene-based resins, polyvinyl chloride-based resins, polycarbonate-based resins, polymethyl methacrylate-based resins, polyurethane-based resins, fluorine-based resins, polyacrylonitrile-based resins, polybutene-based resins, polyimide-based resins, polyallylate-based resins, cellulose-based resins, polyphenylene ether-based resins, elastomers and their modified forms (such as modified maleic anhydride).

[Polyphenylene ether]

A polyphenylene ether has the structure represented by the following general formula (1):

[Chemical Formula 1]

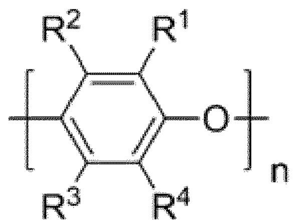

(1)

(where $R^1$, $R^2$, $R^3$ and $R^4$ each independently represent a monovalent group selected from the group consisting of hydrogen atoms, halogen atoms, alkyl groups of 1 to 7 carbon atoms, phenyl, haloalkyl, aminoalkyl and hydrocarbon oxy groups, and halohydrocarbon oxy groups with at least 2 carbon atoms separated by a halogen atom and oxygen atom, and n is an integer of 20 or greater). Using a polyphenylene ether as the second component is advantageous from the viewpoint of flexural properties of the resin composition.

In formula (1), halogen atoms represented by $R^1$, $R^2$, $R^3$ and $R^4$ may be fluorine atoms, chlorine atoms or bromine

atoms, with chlorine atoms and bromine atoms being preferred.

In formula (1), an "alkyl group" represented by $R^1$, $R^2$, $R^3$ and $R^4$ is a straight-chain or branched-chain alkyl group of preferably 1 to 6 and more preferably 1 to 3 carbon atoms, examples of which include methyl, ethyl, propyl, isopropyl, butyl, isobutyl, sec-butyl, *tert-butyl,* pentyl and hexyl. Methyl and ethyl are preferred, with methyl being more preferred.

In formula (1), alkyl groups represented by $R^1$, $R^2$, $R^3$ and $R^4$ may be optionally substituted with one or more substituents at substitutable positions. Such substituents include halogen atoms (for example, fluorine atom, chlorine atom or bromine atom), alkyl groups of 1 to 6 carbon atoms (for example, methyl, ethyl, propyl, isopropyl, butyl, isobutyl, sec-butyl, *tert-butyl,* pentyl or hexyl), aryl groups (for example, phenyl or naphthyl), alkenyl groups (for example, ethenyl, 1-propenyl or 2-propenyl), alkynyl groups (for example, ethynyl, 1-propynyl or 2-propynyl), aralkyl groups (for example, benzyl or phenethyl) and alkoxy groups (for example, methoxy or ethoxy).

The symbol n in formula (1) may be 20 or greater, 100 or greater or 200 or greater, and 2000 or less, 1000 or less or 400 or less.

The polyphenylene ether is not particularly restricted and any publicly known one may be used. Examples include poly(2,6-dimethyl-1,4-phenylene ether), poly(2-methyl-6-ethyl-1,4-phenylene ether), poly(2-methyl-6-phenyl-1,4-phenylene ether) and poly(2,6-dichloro-1,4-phenylene ether), as well as polyphenylene ether copolymers of 2,6-dimethylphenol and other phenols (such as 2,3,6-trimethylphenol or 2-methyl-6-butylphenol). Preferred among these are poly(2,6-dimethyl-1,4-phenylene ether) and copolymers of 2,6-dimethylphenol and 2,3,6-trimethylphenol, with poly(2,6-dimethyl-1,4-phenylene ether) being more preferred.

These polyphenylene ethers may be used alone, or two or more may be used in combination.

The limiting viscosity [η] of the polyphenylene ether is preferably 0.1 dl/g or greater, 0.2 dl/g or greater or 0.3 dl/g or greater, from the viewpoint of obtaining a resin composition with high rigidity, and preferably 1.0 dl/g or lower, 0.7 dl/g or lower, 0.6 dl/g or lower or 0.5 dl/g or lower, from the viewpoint of imparting a satisfactory flow property to the resin composition. The limiting viscosity is the value measured in chloroform at 25°C.

According to one aspect, the polyphenylene ether may be at least partially acid-modified. The acid modification may be by reacting a modifying agent (such as an α,β-unsaturated carboxylic acid or its derivative) with the polyphenylene ether.

The α,β-unsaturated carboxylic acid may be, for example, a monobasic acid such as (meth)acrylic acid, crotonic acid, isocrotonic acid, furanic acid, pentenoic acid, vinylacetic acid or angelic acid, a dibasic acid such as maleic acid, chloromaleic acid, fumaric acid, tetrahydrophthalic acid, itaconic acid, citraconic acid or endo-cis-bicyclo[2,2,1]hept-5-ene-2,3-dicarboxylic acid (nadic acid), or a tribasic acid such as citric acid or aconitic acid.

Examples of derivatives of α,β-unsaturated carboxylic acids include acid halides, amides, imides, acid anhydrides and esters of the aforementioned α,β-unsaturated carboxylic acids. Examples include malenyl chloride, acrylamide, maleimide, N-phenyl maleimide, N-methyl maleimide, N-ethyl maleimide, maleic anhydride, itaconic anhydride, glutaconic anhydride, citraconic anhydride, nadic anhydride, aconic anhydride, methyl (meth)acrylate, monomethyl maleate, dimethyl maleate, diethyl itaconate, dibutyl citraconate, glycidyl (meth)acrylate and diglycidyl maleate. Examples of preferred modifying agents include maleic acid, citric acid, itaconic acid, itaconic anhydride and maleic anhydride, with citric acid and maleic anhydride being more preferred.

The degree of acid modification of the polyphenylene ether is preferably 0.01% or greater, 0.1% or greater, 0.2% or greater or 0.25% or greater, from the viewpoint of satisfactorily dispersing the second component, and preferably 10% or lower, 5% or lower, 2% or lower, 1% or lower, 0.7% or lower or 0.6% or lower, from the viewpoint of satisfactorily obtaining the advantages of using the polyphenylene ether. The polyphenylene ether of the disclosure may also be a mixture of two or more different polymers with different degrees of acid modification. In this case it is preferred for the degree of the acid modification of the polyphenylene ether in the resin composition as a whole to be in the range specified above. The degree of acid modification is the rate of addition calculated from infrared spectroscopy measurement. When the acidic functional groups are from maleic anhydride, a mixture of polyphenylene ether and maleic anhydride is used to draw a calibration curve for the peak at 1790 $cm^{-1}$ attributed to maleic acid, and then the rate of addition is calculated from the peak intensity at 1790 $cm^{-1}$ for the maleic anhydride-modified polyphenylene ether.

The acid modification method for the polyphenylene ether may be a method of reacting a modifying agent with the polyphenylene ether in a fluid state (for example, a melt, or a dispersion or solution in a solvent), or a method of reacting a modifying agent with the powdered polyphenylene ether at a temperature below the glass transition point of the polyphenylene ether, in the co-presence of the modifying agent. Examples of methods of reacting a modifying agent with the polyphenylene ether in a fluid state include a method of melt kneading the polyphenylene ether and modifying agent in a roll mill, Banbury mixer or extruder at 250°C to 350°C for 5 seconds to 30 minutes, and a method of dissolving the polyphenylene ether in an organic solvent (such as toluene, xylene, decalin or tetralin) and then adding the modifying agent and heating the mixture. An example of a method of reacting a modifying agent with the powdered polyphenylene ether is a method of loading predetermined amounts of the polyphenylene ether and modifying agent into a high-speed stirrer, and using the shear heat release from high-speed stirring and/or heat transfer from the jacket to maintain an internal temperature at 160°C to 200°C for at least 30 seconds.

The reaction may also be carried out in the presence of a radical initiator. The radical initiator may be an organic peroxide (such as benzoyl peroxide, dicumyl peroxide, di-tert-butyl peroxide, tert-butylcumyl peroxide, cumene hydroperoxide, 2,5-dimethyl-2,5-di-(tert-butylperoxy)hexane or 2,5-dimethyl-2,5-di-(tert-butylperoxy)hexyne-3), or an azo compound (such as azobisisobutyronitrile or dimethylazoisobutyrate). The amount of radical initiator used may be 0.01 parts by mass to 10 parts by mass, for example, with respect to 100 parts by mass of the polyphenylene ether.

According to one aspect, the polyphenylene ether may be a mixture of a polyphenylene ether with an acidic functional group and a polyphenylene ether without an acidic functional group. The mixing ratio of the polyphenylene ether with an acidic functional group and the polyphenylene ether without an acidic functional group is preferably 10 mass% or greater, more preferably 20 mass% or greater, even more preferably 30 mass% or greater and most preferably 40 mass% or greater, with the total of both as 100 mass%, from the viewpoint of satisfactorily obtaining the advantage of the polyphenylene ether with an acidic functional group. The upper limit is not particularly restricted, and essentially all of the polyphenylene ether may be polyphenylene ether with an acidic functional group, but from the viewpoint of avoiding problems with the flow property during melting, it is preferably 80 mass% or lower.

According to one aspect, the polymer as the second component is an elastomer. As used herein, "elastomer" refers to a substance (specifically, a natural or synthetic polymer substance) that is an elastic solid at room temperature (23°C). The elastomer is advantageous from the viewpoint of toughness and elongation (especially elongation in low temperature environments) of the resin composition.

Specific examples of elastomers include natural rubber, conjugated diene compound polymers, aromatic compound-conjugated diene copolymers, hydrogenated aromatic compound-conjugated diene copolymers, polyolefins, polyester-based elastomers, polyurethane-based elastomers, polyamide-based elastomers and elastomers with core-shell structures. From the viewpoint of facilitating modification reaction of the acidic functional groups described below, an aromatic compound-conjugated diene copolymer or its hydrogenated form, a polyolefin, or an elastomer with a core-shell structure is preferred. An aromatic compound-conjugated diene copolymer or its hydrogenated form is preferably an aromatic compound-conjugated diene block copolymer or its hydrogenated form, and the polyolefin is preferably a copolymer of ethylene and an $\alpha$-olefin.

According to one aspect, the elastomer is one or more selected from the group consisting of ethylene-$\alpha$-olefin copolymers, block copolymers of aromatic vinyl compounds and conjugated diene compounds, and hydrogenated block copolymers of aromatic vinyl compounds and conjugated diene compounds.

The aromatic compound-conjugated diene block copolymer referred to herein is a block copolymer composed of a polymer block (A) of which an aromatic vinyl compound is the major component, and a polymer block (B) of which a conjugated diene compound is the major component. Block copolymers in which the bonding form of each block is an AB type, ABA type or ABAB type are preferred from the viewpoint of exhibiting impact strength, with ABA and ABAB types being more preferred.

The mass ratio of the aromatic vinyl compound units and conjugated diene compound units in the block copolymer is preferably 10/90 to 70/30. It is more preferably 15/85 to 55/45, and most preferably 20/80 to 45/55. Two or more copolymers with different mass ratios between the aromatic vinyl compound and conjugated diene compound may also be used as a blend. Specific examples of aromatic vinyl compounds include styrene, $\alpha$-methylstyrene and vinyltoluene, any one or more of which may be selected for use, with styrene being especially preferred.

Specific examples of conjugated diene compounds include butadiene, isoprene, piperylene and 1,3-pentadiene, any one or more of which may be selected for use, with butadiene, isoprene and their combinations being preferred, and butadiene being especially preferred. When butadiene is used as the conjugated diene compound of the block copolymer, the microstructure of the polybutadiene block portion has a total for the 1,2-vinyl content, 1,2-vinyl content and 3,4-vinyl content of preferably 5 to 80%, more preferably 10 to 50% and most preferably 15 to 40%, based on molar content, from the viewpoint of inhibiting crystallization of the soft segments.

The aromatic compound-conjugated diene block copolymer referred to here is a block copolymer composed of a polymer block of which an aromatic vinyl compound is the major component, and a polymer block of which a conjugated diene compound is the major component, and it is a block copolymer that is essentially free of hydrogenation. A hydrogenated block copolymer of an aromatic vinyl compound and conjugated diene compound is one wherein the aliphatic double bonds in the polymer blocks consisting mainly of the diene compound are controlled to the range of greater than 0% and up to 100%, by hydrogenation of a block copolymer of an aromatic vinyl compound and conjugated diene compound. The addition rate of hydrogen in a hydrogenated block copolymer is preferably 50% or greater, more preferably 80% or greater and most preferably 98% or greater, from the viewpoint of inhibiting heat degradation during processing, and is preferably 50% or lower, more preferably 20% or lower and most preferably 0% (that is, a block copolymer of an aromatic vinyl compound and a conjugated diene compound), from the viewpoint of low-temperature toughness.

The molecular weights of the block copolymer of the aromatic vinyl compound and conjugated diene compound and its hydrogenated form are each a number-average molecular weight (Mn) of 10,000 to 500,000 and most preferably 40,000 to 250,000, from the viewpoint of both impact strength and flow property. Unless otherwise specified, the number-average molecular weight referred to herein is the value measured in terms of standard polystyrene, using a gel

permeation chromatography apparatus, with a chloroform solvent at a measuring temperature of 40°C.

The aromatic vinyl compound-conjugated diene compound block copolymers may also be used in combinations of two or more having different bonding forms, different molecular weights, different aromatic vinyl compound types, different conjugated diene compound types, different totals for the 1,2-vinyl content, 1,2-vinyl content and 3,4-vinyl content, different aromatic vinyl compound component contents and different hydrogenation rates. The preferred hydrogenation rate for a mixture with different hydrogenation rates is as mentioned above.

An ethylene-α-olefin copolymer is preferred for use as the polyolefin from the viewpoint of exhibiting impact resistance. Monomers to be copolymerized with the ethylene unit include aliphatic-substituted vinyl monomers such as propylene, butene-1, pentene-1,4-methylpentene-1, hexene-1, heptene-1, octene-1, nonene-1, decene-1, undecene-1, dodecene-1, tridecene-1, tetradecene-1, pentadecene-1, hexadecene-1, heptadecene-1, octadecene-1, nonadecene-1 and eicosene-1, isobutylene, aromatic vinyl monomers such as styrene and substituted styrene, esteric vinyl monomers such as vinyl acetate, acrylic acid ester, methacrylic acid ester, glycidylacrylic acid ester, glycidylmethacrylic acid ester and hydroxyethylmethacrylic acid ester, nitrogen-containing vinyl monomers such as acrylamide, allylamine, vinyl-p-aminobenzene, acrylonitrile, and dienes such as butadiene, cyclopentadiene, 1,4-hexadiene and isoprene.

The copolymer is preferably a copolymer of ethylene and one or more α-olefins of 3 to 20 carbon atoms, more preferably a copolymer of ethylene and one or more α-olefins of 3 to 16 carbon atoms, and most preferably a copolymer of ethylene and one or more α-olefins of 3 to 12 carbon atoms. From the viewpoint of exhibiting impact resistance, the molecular weight of the ethylene-α-olefin copolymer is a number-average molecular weight (Mn) of preferably 10,000 or higher, more preferably 10,000 to 100,000 and even more preferably 20,000 to 60,000, measured with a gel permeation chromatography apparatus using 1,2,4-trichlorobenzene as the solvent, at 140°C in terms of standard polystyrene. From the viewpoint of both flow property and impact resistance, the molecular weight distribution (weight-average molecular weight/number-average molecular weight: Mw/Mn) is preferably 3 or lower, and more preferably 1.8 to 2.7.

From the viewpoint of handleability during processing, the preferred ethylene unit content for the ethylene-α-olefin copolymer is 30 to 95 mass% with respect to the total amount of the ethylene-α-olefin copolymer.

These preferred ethylene-α-olefin copolymers can be produced by the method described in Japanese Examined Patent Publication HEI No. 4-12283, Japanese Unexamined Patent Publication SHO No. 60-35006, Japanese Unexamined Patent Publication SHO No. 60-35007, Japanese Unexamined Patent Publication SHO No. 60-35008, Japanese Unexamined Patent Publication HEI No. 5-155930, Japanese Unexamined Patent Publication HEI No. 3-163088 or US Patent No. 5272236, for example.

For the purpose of the disclosure, elastomers having a core-shell structure include core-shell type elastomers having a core of particulate rubber and a shell of a glassy graft layer formed around the exterior of the core. The component of the rubber core is preferably butadiene-based rubber, acrylic rubber or silicone-acrylic composite rubber. A vitreous polymer such as styrene resin, acrylonitrile-styrene copolymer or acrylic resin is suitable for the shell. When the first component is a polyamide, for example, it is preferred to use an elastomer having a core-shell structure with a butadiene rubber core and an acrylic-based resin shell, from the viewpoint of compatibility with the polyamide.

According to one aspect, the elastomer has an acidic functional group as at least a portion of the elastomer. That the elastomer has an acidic functional group, for the purpose of the disclosure, means that an acidic functional group has been added via chemical bonding into the molecular skeleton of the elastomer. An "acidic functional group", for the purpose of the disclosure, means a functional group that can react with a basic functional group, and specific examples include hydroxyl, carboxyl, carboxylate, sulfo, and acid anhydride groups.

The amount of the acidic functional group added to the elastomer is preferably 0.01 mass% or greater, more preferably 0.1 mass% or greater and even more preferably 0.2 mass% or greater, and preferably 5 mass% or lower, more preferably 3 mass% or lower and even more preferably 2 mass% or lower, based on 100 mass% of the elastomer, from the viewpoint of compatibility between the second polymer with an acidic functional group and the polyphenylene ether with an acidic functional group. The number of acidic functional groups is the value obtained by measuring the sample against a calibration curve drawn using the characteristic absorption band for the acid, after measuring a calibration sample premixed with the acidic substance using an infrared absorption spectrometer.

Elastomers with acidic functional groups include elastomers having a core-shell structure wherein the shell is a layer formed using a copolymerizing component such as acrylic acid, and elastomers which are modified by grafting α,β-unsaturated dicarboxylic acids or their derivatives onto ethylene-α-olefin copolymers, polyolefins, aromatic compound-conjugated diene copolymers or hydrogenated aromatic compound-conjugated diene copolymers that include acrylic acid as a monomer, either in the presence or in the absence of a peroxide.

According to a preferred aspect, the elastomer is an acid anhydride-modified elastomer.

More preferred among these are modified forms with α,β-unsaturated dicarboxylic acids or their derivatives grafted onto polyolefins, aromatic compound-conjugated diene copolymers or hydrogenated aromatic compound-conjugated diene copolymers, either in the presence or in the absence of a peroxide, and particularly preferred are modified forms with α,β-unsaturated dicarboxylic acids or their derivatives grafted onto ethylene-α-olefin copolymers or hydrogenated aromatic compound-conjugated diene block copolymers, either in the presence or in the absence of a peroxide.

Specific examples of $\alpha,\beta$-unsaturated dicarboxylic acids and their derivatives include maleic acid, fumaric acid, maleic anhydride and fumaric anhydride, with maleic anhydride being particularly preferred.

According to one aspect, the elastomer may be a mixture of an elastomer with an acidic functional group and an elastomer without an acidic functional group. The mixing ratio of the elastomer with an acidic functional group and the elastomer without an acidic functional group is preferably 10 mass% or greater, more preferably 20 mass% or greater, even more preferably 30 mass% or greater and most preferably 40 mass% or greater, where 100 mass% is the total of both, from the viewpoint of satisfactorily maintaining high toughness and stable physical properties for the resin composition by the elastomer with an acidic functional group. There is no particular upper limit, and essentially all of the elastomer may be an elastomer with an acidic functional group, but from the viewpoint of avoiding flow property issues it is preferably 80 mass% or lower.

When the second component includes a polymer, the polymer may form a particulate dispersed phase (dispersed particles) in the resin composition. In this case, the dispersed particle size is preferably 3 $\mu$m or smaller, more preferably 2 $\mu$m or smaller and most preferably 1 $\mu$m or smaller, as the number-mean particle size. There is no particular restriction on the lower limit, and it may be 0.01 $\mu$m, for example. This range is preferred from the viewpoint of high toughness and physical property stability.

The amount of the polymer as the second component with respect to 100 mass% as the total resin composition is preferably 0.1 mass% or greater, 0.5 mass% or greater, 1 mass% or greater or 3 mass% or greater, and preferably 30 mass% or lower, 25 mass% or lower, 20 mass% or lower or 15 mass% or lower. The amount of the polymer is preferably within this range from the viewpoint of high tensile elongation, high flexural modulus, low coefficient of thermal expansion and/or satisfactory physical property stability.

<Additional components>

The resin composition according to aspects A to C may further include additional components as necessary, for improved performance. Such additional components include dispersing agents; filler components other than organic fibers; compatibilizers; plasticizers; polysaccharides such as starch and alginic acid; natural proteins such as gelatin, nikawa and casein; inorganic compounds such as zeolite, ceramics, talc, silica, metal oxides and metal powders; coloring agents; perfumes; pigments; flow adjusters; leveling agents; conductive agents; antioxidants; antistatic agents; ultraviolet absorbers; ultraviolet dispersing agents; and deodorants. The content ratio of optional additional components in the resin composition is appropriately selected in a range that does not interfere with the desired effect of the invention, and for example, it may be 0.01 to 50 mass% or 0.1 to 30 mass%.

A dispersing agent is preferably a compound that reacts or interacts with the second component. For example, when the second component has a hydrogen bond-forming structure (such as a hydroxyl group), the dispersing agent is preferably a compound that reacts with or forms hydrogen bonds with the hydrogen bond-forming structure. Preferred examples of dispersing agents include one or more selected from the group consisting of cellulose derivatives, polyalkylene oxides, amides and amines. The second component preferably includes cellulose, because a cellulose derivative, being a cellulosic substance, has high affinity with cellulose, and being a thermoplastic resin as well, a high effect of increasing dispersion stability cellulose in the resin composition is also obtained. The dispersing agent is preferably one having a higher boiling point than water. Having a higher boiling point than water means having a boiling point that is higher than the boiling point of water at each pressure on a vapor pressure curve (100°C at below 1 atmosphere, for example).

The amount of dispersing agent with respect to 100 parts by mass of the second component in the resin composition is preferably 1 part by mass or greater, 5 parts by mass or greater, 10 parts by mass or greater or 20 parts by mass or greater, from the viewpoint of satisfactory dispersion of the second component and formation of a network between fibers when the second component includes organic fibers, and preferably 500 parts by mass or lower, 300 parts by mass or lower or 200 parts by mass or lower, from the viewpoint of reducing variation in the resin composition performance.

<Resin composition properties>

The resin composition obtained by the method of aspects A to C can exhibit the following properties.

<Mean fiber diameter and L/D of organic fibers in resin composition>

According to one aspect, the mean fiber diameter of the organic fibers in the resin composition may be 1000 nm or smaller, 500 nm or smaller, 450 nm or smaller, 400 nm or smaller, 350 nm or smaller, 300 nm or smaller, 250 nm or smaller, 200 nm or smaller, 150 nm or smaller or 100 nm or smaller, and 2 nm or larger, 4 nm or larger, 5 nm or larger, 10 nm or larger, 15 nm or larger, 20 nm or larger, 30 nm or larger, 40 nm or larger, 50 nm or larger or 100 nm or larger.

According to one aspect, the mean fiber length/mean fiber diameter ratio (L/D) of the organic fibers in the resin composition is 30 or greater, 50 or greater, 80 or greater or 100 or greater, and according to another aspect it is 5000 or lower, 4000 or lower or 3000 or lower.

<Thixotropy index>

The second component can be uniformly dispersed in the resin composition obtained by the method of aspects A to C. The thixotropy index of the resin composition is an index of the uniformity of dispersion of the second component, with a higher uniformity of dispersion exhibiting a larger thixotropy index. This phenomenon is even more notable when the second component includes organic fibers, and especially cellulose fibers. The thixotropy index of the resin composition is preferably 2 or greater, 3 or greater or 4 or greater, from the viewpoint of satisfactory uniformity of dispersion of the second component, and preferably 10 or lower, 9 or lower or 8 or lower, from the viewpoint of facilitating production of the resin composition. The thixotropy index is the value determined using a dynamic viscoelasticity measuring apparatus, as the ratio of the viscosity at a shear rate of 1 $sec^{-1}$ with respect to the viscosity at a shear rate of 10 $sec^{-1}$, at the melting point of the thermoplastic resin in the resin composition (or the maximum melting point when multiple thermoplastic resins are used) + 25°C.

<Tensile elongation>

According to one aspect, the tensile elongation of the resin composition measured according to ISO527-1 may be 2% or greater, 3% or greater or 5% or greater, and 500% or lower, 300% or lower or 100% or lower, from the viewpoint of facilitating production of the resin composition.

<Flexural modulus>

According to one aspect, the flexural modulus of the resin composition measured according to ISO178 may be 1 GPa or greater, 2 GPa or greater or 3 GPa or greater, and 20 GPa or lower, 15 GPa or lower or 10 GPa or lower, from the viewpoint of facilitating production of the resin composition.

<Tensile strength>

According to one aspect, the tensile strength of the resin composition measured according to ISO527-1 may be 10 MPa or higher, 20 MPa or higher or 50 MPa or higher, and 300 MPa or lower, 250 MPa or lower or 150 MPa or lower, from the viewpoint of facilitating production of the resin composition.

<Coefficient of linear thermal expansion>

According to one aspect, the coefficient of linear thermal expansion of the resin composition, measured by thermomechanical analysis (TMA) according to ISO11359-2, may be 140 ppm/K or lower, 100 ppm/K or lower, 70 ppm/K or lower, 60 ppm/K or lower, 50 ppm/K or lower, 45 ppm/K or lower, 40 ppm/K or lower or 35 ppm/K or lower, in a temperature range of 20°C to 100°C, and it may be 5 ppm/K or higher or 10 ppm/K or higher, from the viewpoint of facilitating production of the resin composition.

<Use of resin composition>

The resin composition according to aspects A to C is useful as a substitute for steel sheets, fiber-reinforced plastics (such as carbon fiber reinforced plastics and glass fiber reinforced plastics), and inorganic filler-containing resin composites. Examples of preferred uses for the resin composition include industrial machinery parts, general machine parts, automobile/railway/vehicle/ship/aerospace-related parts, electronic and electrical components, construction and civil engineering materials, daily household items, sports and leisure goods, wind power generation case members, and container and packaging materials.

EXAMPLES

Exemplary aspects of the present invention will now be explained in greater detail using Examples.

(1) Example A (Example for aspect A of the disclosure)

<Evaluation methods>

<Gap between cylinder inner wall and screw>

A caliper was used for direct measurement. Specifically, the gap between the cylinder inner wall and the screw was measured at the location of the widest of the mixture flow channels. The gap between the sealing outer edge and cylinder inner wall during sealing was measured, while the gap between the short axis direction outer edge and cylinder inner wall was measured for the kneading disc and flight.

<Tensile elongation and flexural modulus of mixture and resin composition>

An injection molding machine was used for molding of a multipurpose test piece conforming to ISO294-3 from the obtained mixture or resin composition, under the conditions according to JIS K6920-2. The multipurpose test piece was measured for tensile breaking elongation according to ISO527 and flexural modulus according to ISO178. Since polyamide resins undergo changes due to moisture absorption, these were stored in an aluminum moisture-proof bag immediately after casting to minimize moisture absorption.

<Charpy impact strength of resin composition>

A multipurpose test piece fabricated in the same manner as described above was measured for Charpy impact strength by the method of ISO179-1.

<Organic fibers used, and mean fiber length, mean fiber diameter and L/D of organic fibers in resin composition>

The wet cake was diluted with *tert*-butanol to 0.01 mass% and dispersed using a high-shear homogenizer ("ULTRA-TURRAX T18", trade name of IKA Corp.) with treatment conditions of 25,000 rpm × 5 min, cast onto mica and air-dried, and the resulting dispersion was measured with a high-resolution scanning microscope. The measurement was carried out with adjustment of the magnification so that at least 100 organic fibers were observable, the lengths (L) and long diameters (D) of 100 randomly selected organic fibers and their ratios were determined, and the addition average for the 100 organic fibers was calculated.

For the organic fibers in the resin composition, the resin component was dissolved in hexafluoroisopropanol when the polymer was polyamide, or xylene when the polymer was polypropylene, thus separating out the organic fibers, and after thoroughly washing with solvent, the solvent was exchanged with *tert*-butanol to obtain a wet cake.

<Mean particle size of dried organic fibers>

The d50 particle diameter was measured using a Model PT-X powder tester by Hosokawa Micron Group.

<Weight-average molecular weight (Mw), number-average molecular weight (Mn) and Mw/Mn ratio of cellulose fibers and chitosan fibers>

[Fabrication of porous sheet]

The wet cake was first added to *tert*-butanol, and dispersed with a mixer until aggregates were no longer seen. The mixture was then prepared to a concentration of 0.5 mass% for 0.5 g of organic fiber solid weight. A 100 g portion of the obtained *tert*-butanol dispersion was filtered on filter paper and dried at 150°C, and then the filter paper was detached to obtain a sheet. Sheets with air permeability resistance up to 100 sec/100 ml per 10 g/$m^2$ basis weight of the sheet were considered to be porous sheets, and were used as measuring samples.

After measuring the basis weight W (g/$m^2$) of each sample that had been left to stand for 1 day in an environment of 23°C, 50% RH, an Oken-type air permeability resistance tester (Model EG01 by Asahi Seiko Co., Ltd.) was used to measure the air permeability resistance R (sec/100 ml). The value per 10 g/$m^2$ basis weight was calculated by the following formula.

$$\text{Air permeability resistance (sec/100 ml) per 10 g/m}^2\text{ basis weight} = R/W \times 10$$

[Measurement]

After weighing out 0.88 g of the porous sheet and chopping it into small pieces with scissors, the pieces were gently stirred and allowed to stand for one day after addition of 20 mL of purified water. The water and solid portion were then separated by centrifugation. After then adding 20 mL of acetone, the mixture was gently stirred and allowed to stand for 1 day. The acetone and solid portion were separated by centrifugation. After then adding 20 mL of N,N-dimethylacetamide, the mixture was gently stirred and allowed to stand for 1 day. Centrifugal separation was again carried out to separate the N,N-dimethylacetamide and solid content, and then 20 mL of N,N-dimethylacetamide was added and the mixture was gently stirred and allowed to stand for 1 day. The N,N-dimethylacetamide and solid content were separated by centrifugation, 19.2 g of a N,N-dimethylacetamide solution prepared to a lithium chloride content of 8 mass% was added to the solid portion, and the mixture was stirred with a stirrer while visually confirming dissolution. The organic fiber-dissolving solution was filtered with a 0.45 μm filter, and the filtrate was supplied as a sample for gel permeation chromatography. The apparatus and measuring conditions used were as follows.

Apparatus: Tosoh Corp. HLC-8120
Column:

$$\text{TSKgel SuperAWM-H (6.0 mm I.D.} \times \text{15 cm)} \times 2$$

Detector: RI detector
Eluent: N,N-dimethylacetamide (lithium chloride: 0.2%)
Flow rate: 0.6 mL/min
Calibration curve: Based on pullulan

<Degree of crystallinity of cellulose fibers>

The porous sheet was measured by X-ray diffraction and the degree of crystallinity was calculated by the following formula.

$$\text{Degree of crystallinity (\%)} = [I_{(200)} - I_{(amorphous)}]/I_{(200)} \times 100$$

$I_{(200)}$: Diffraction peak intensity at 200 plane (2θ = 22.5°) for type I cellulose crystal
$I_{(amorphous)}$: Amorphous halo peak intensity for type I cellulose crystal, peak intensity at angle of 4.5° lower than diffraction angle at 200 plane (2θ = 18.0°).

(X-ray diffraction measuring conditions)

Apparatus: MiniFlex (Rigaku Corp.)
Operating shaft: 2θ/θ
Source: CuKα
Measuring method: Continuous
Voltage: 40 kV
Current: 15 mA
Initial angle: 2θ = 5°
Final angle: 2θ = 30°
Sampling width: 0.020°
Scan speed: 2.0°/min
Sample: Porous sheet attached to specimen holder.

<Average alkali-soluble polysaccharide content of cellulose fibers>

The alkali-soluble polysaccharide content was determined by a method described in non-patent literature for cellulose (Mokushitsu Kagaku Jikken Manual, ed. The Japan Wood Research Society, pp.92-97, 2000), subtracting the α-cellulose content from the holocellulose content (Wise method). The alkali-soluble polysaccharide content was calculated 3 times for each sample, and the number average for the calculated alkali-soluble polysaccharide contents was recorded

as the average alkali-soluble polysaccharide content of the cellulose.

<Degree of substitution (DS) of cellulose fibers>

The infrared spectrum of the porous sheet was measured at 5 locations by ATR-IR, using a Fourier transform infrared spectrometer (FT/IR-6200 by Jasco Corp.). The infrared spectrum was measured under the following conditions.

Number of scans: 64,
Wavenumber resolution: 4 $cm^{-1}$,
Wavenumber range: 4000 to 600 $cm^{-1}$,
ATR crystal: diamond,
Incident angle: 45°

The IR index was calculated from the obtained IR spectrum using the following formula (1):

$$\text{IR index} = \text{H1730/H1030} \qquad (1).$$

In the formula, H1730 and H1030 are the absorbances at 1730 $cm^{-1}$ and 1030 $cm^{-1}$ (absorption bands for C-O stretching vibration of the cellulose backbone chain). The respective baselines used were a line connecting 1900 $cm^{-1}$ and 1500 $cm^{-1}$ and a line connecting 800 $cm^{-1}$ and 1500 $cm^{-1}$, each baseline being defined as the absorbance at absorbance = 0.

The average degree of substitution at each measured location was calculated from the IR index using the following formula (2), and the average value was recorded as DS.

$$\text{DS} = 4.13 \times \text{IR index} \qquad (2)$$

<Content of particles with diameters of 50 μm or larger in mixture and resin composition>

An injection molding machine was used for molding of a multipurpose test piece conforming to ISO294-3 from the mixture or resin composition, under the production conditions according to JIS K6920-2. An approximately 2 mm-square sample was cut out from the test piece and the aggregates were analyzed using an X-CT (X-ray CT apparatus) (Skyscan1272 by Bruker Corp. Japan). The measuring conditions were as follows.

Tube voltage: 40 kV
Tube current: 100 μA
Pixel resolution: 1.2 μm
Detector pixel count:

$$2452 \times 1640 \text{ pixel}$$

Number of scans: 4
Measuring angle step: 0.2 degree
Scan range: 0 to 180 degrees

For improved image quality, the measurement data were smoothed through a Kuwahara filter over 2 pixels in 3D directions.

The obtained 3D data were automatically binarized by the triangle method and pixels for the aggregates alone were extracted. The content (vol%) of particles with diameters of 50 μm or larger in the mixture or resin composition was calculated based on the ratio of the total pixels of aggregates with sphere-equivalent volume of $\geq (4/3) \times \pi \times 253\ \mu m^3$ with respect to the total pixels in the observable region, and the value obtained by dividing the content (vol%) of particles with diameters of 50 μm or larger by the total content (vol%) of organic fibers calculated from the amount of organic fibers added to the mixture or resin composition was recorded as the content (mass%) of particles with diameters of 50 μm or larger in the organic fiber.

<Particle diameters in dispersed phase of resin composition>

A cross-section of the resin composition was observed using a scanning electron microscope and the particle diameters in the dispersed phase were measured. The styrene-based thermoplastic elastomer was dyed by impregnating

in an aqueous ruthenium tetroxide solution. The polyamide resin was dyed by impregnating in an aqueous phosphotungstic acid solution.

<Materials>

<First component>

Polyamide 6 (PA6): (1013B, Ube Industries, Ltd.)
Polypropylene (PP): (J105G, Prime Polymer Co., Ltd.)
Polyacetal (POM): (HC450, Asahi Kasei Corp.)

<Second component>

[Acid-modified polyphenylene ether (m-PPE)]
R4919, Asahi Kasei Corp.
[Styrene-ethylene-butadiene-styrene copolymer (SEBS)]
TUFTEC H1052, Asahi Kasei Corp.

[CNF-A]

Commercially available CELISH KY100G (Daicel Fine Chemicals) was used as CNF-A cake.

[CNF-B] (Acetylated CNF)

Using 1 part by mass of cotton linter pulp and a uniaxial stirrer (DKV-1 φ125 mm Dissolver by Aimex Corp.), stirring was carried out for 1 hour at ordinary temperature, 500 rpm in 30 parts by mass of dimethyl sulfoxide (DMSO). The mixture was then fed to a bead mill (NVM-1.5 by Aimex Corp.) with a hose pump and circulated for 180 minutes with DMSO alone to prepare a microcellulose fiber slurry, thereby obtaining slurry S1 (DMSO solvent) with a solid content of 3.2 mass%.

During the circulation, the rotational speed of the bead mill was 2500 rpm and the circumferential speed was 12 m/s, while the beads used were made of zirconia with a size of φ2.0 mm and the fill factor was 70% (the slit gap of the bead mill was 0.6 mm). Also during the circulation, the slurry temperature was controlled to 40°C with a chiller, for absorption of the heat release by abrasion.

The slurry S1 was loaded into an explosion-proof disperser tank, and then 3.2 parts by mass of vinyl acetate and 0.49 parts by mass of sodium hydrogen carbonate were added and the mixture was stirred for 120 minutes with the tank internal temperature at 50°C, to obtain a slurry (DMSO solvent) with a solid content of 2.9 mass%.

To suspend the reaction, 30 parts by mass of purified water was added, and the mixture was thoroughly stirred, placed in a dehydrator and concentrated. A rinsing procedure of redispersing, stirring and concentrating the obtained wet cake in 30 parts by mass of purified water was repeated a total of 5 times to remove the unreacted reagent and solvent, obtaining 10 parts by mass of an acetylated microcellulose fiber cake (CNF-B cake) (water solvent) with a solid content of 10 mass%. A porous sheet was produced from the cake, and the degree of acyl substitution (DS) was determined to be DS = 1.0.

[CNF-C] (Disc refiner treated CNF)

After immersing 3 parts by mass of cotton linter pulp in 27 parts by mass of water, the mixture was heat treated for 4 hours in an autoclave at 130°C. The obtained swollen pulp was washed with water to obtain refined pulp containing water (30 parts by mass). Next, 30 parts by mass of the water-containing refined pulp was added to 170 parts by mass of water and dispersed in the water (solid content: 1.5 mass%), and a Model SDR14 Lab Refiner (pressurized DISK type) by Aikawa Iron Works Co. was used as a disc refiner apparatus for beating treatment of the aqueous dispersion for 20 minutes with a disc clearance of 1 mm. The mixture was then concentrated to a solid content of 10 mass% using a dehydrator, to obtain a CNF-C cake (water solvent).

[CNF-D] (CNF-C further defibrated with high-pressure homogenizer)

The CNF-C cake was thoroughly beaten under conditions with clearance reduced to a level of near zero, to obtain a beaten aqueous dispersion (solid concentration: 1.5 mass%). The obtained beaten aqueous dispersion was directly subjected to micronization treatment 15 times using a high-pressure homogenizer (NSO15H by Niro Soavi) at an operating pressure of 100 MPa, to obtain a cellulose fiber slurry (solid concentration: 1.5 mass%). The mixture was then concentrated to a solid content of 10 mass% using a dehydrator, to obtain a CNF-D cake (water solvent).

[CNF-E] (Acetylated CNF)

This was produced in the same manner as CNF-B, except that the reaction time was 60 minutes. A porous sheet was produced from the cake, and the degree of acyl substitution (DS) was determined to be DS = 0.5.

[Cellulose nanocrystals]

A CEOLUS FD-301 (Asahi Kasei Corp.) was used.

[Chitosan fibers]

A Binfis Efo-08002 (Sugino Machine, Ltd.) was used.

[Aramid fibers]

A Tiara KY400S (Daicel Fine Chemicals) was used.
The properties of the organic fibers are shown in Table 1.

<Dispersing agent>

Polyethylene oxide-polypropylene oxide copolymer (PEG-PPG) (GL-3000, Sanyo Chemical Industries, Ltd.)

<Kneading method>

<Extruder screw construction>

Screws 1 to 6 were designed with arrangement of a high load zone 1, high load zone 2, high load zone 3 and distributive mixing zone, as listed in Table 2. The design was such that kneading elements including a shunt flight screw, notched screw, kneading disc, eccentric multi-thread disc or eccentric multi-thread screw were arranged at the front end of the high load zone, while a seal ring with a prescribed gap was arranged downstream, blocking the mixture. In the distributive mixing zone, two neutral kneading discs and one counter-clockwise screw were arranged in that order in the cylinder 11.

<Mixing procedure>

[Example A1]

Preparation of dried cellulose fibers and mixing of the dried cellulose fibers with a resin were carried out by the following procedure to produce a resin composition.

(Production of dried cellulose fibers)

A dispersing agent was added to cellulose fiber cake (solid weight: 10%) in an amount for 43 parts by mass with respect to 100 parts by solid mass of cellulose, and the mixture was thoroughly stirred to obtain a dispersing agent-added cellulose fiber cake. The starting materials were loaded into a drier and dried at a prescribed shear rate, pressure reduction and heating temperature (jacket temperature or hot air temperature). The moisture content was measured using an infrared heating moisture meter (MX-50 by A&D Co., Ltd.), with the drying end point being when the moisture content fell below 7 mass% (solid content: ≥93 mass%). The conditions were as follows.

Planetary mixer (PM)

Apparatus: planetary mixer (Model ACM-5LVT:, hook type) by Kodaira Seisakusho Co., Ltd. Conditions: jacket temperature: 60°C, mixing at 307 rpm, pressure reduction to -90 kPa using vacuum pump. Reduced pressure drying was carried out until the product temperature reached 50°C.
The clearance was the minimum distance measured between the hook wing (100 mm diameter) and jacket.
The drying time under these conditions was 180 minutes.
The drying temperature was the surface temperature of the jacket measured at 3 points and averaged.

(Dispersive mixing)

Polyamide 6 was loaded into an extruder at 2 kg/h while dried cellulose fibers were loaded at 2.86 kg/h (2 kg/h as cellulose), and the mixture was hot melt kneaded in the dispersive mixing zone to obtain a dispersively mixed product.

(Distributive mixing)

After adding polyamide 6 at 15.14 kg/h by side feeding to the dispersively mixed product at 4.86 kg/h, the mixture was hot melt kneaded in the distributive mixing zone to obtain a resin composition. The obtained resin composition was formed into pellets using a pelletizer. The extrusion property during extrusion was evaluated as "poor" operational stability when clogging of the screen mesh occurred within 1 hour from the start of extruder operation, or "good" operational stability when clogging did not occur.

[Examples A2 to A19, Comparative Examples A1 to A3]

A resin composition was produced by the same procedure as Example A1, except that the resin composition and extruder conditions were as shown in Tables 3 to 5, and the same evaluations were conducted. The results are shown in Tables 3 to 5. Examples A14 to A19 are Reference Examples.

[Table 1]

Table 1

| Organic fibers | CNF-A | CNF-B | CNF-C | CNF-D | CNF-E | CNC | Chitosan fibers | Aramid fibers |
|---|---|---|---|---|---|---|---|---|
| Mean fiber diameter (nm) | 53 | 67 | 28 | 27 | 82 | 200 | 40 | 100 |
| Mw | 340,000 | 380,000 | 340,000 | 790,000 | 410,000 | - | 80,000 | - |
| Mw/Mn | 8.6 | 4.7 | 3.2 | 4.5 | 3.2 | - | - | - |
| Degree of crystallinity (%) | 82 | 77 | 85 | 85 | 80 | 78 | - | - |
| Alkali-soluble polysaccharide content (%) | 10 | 3.6 | 3.8 | 3.7 | 3.7 | 10 | - | - |
| Degree of substitution | 0 | 1 | 0 | 0 | 0.5 | - | - | - |

[Table 2]

Table 2

| Screw configuration | | Screw 1 | Screw 2 | Screw 3 | Screw 4 | Screw 5 | Screw 6 |
|---|---|---|---|---|---|---|---|
| High load zone 1 | Zone length/cylinder inner diameter ratio | 4.3 | 4.3 | 4.3 | 4.3 | 4.3 | 4.3 |
| | Cylinder gap (mm) | 0.3 | 0.3 | 0.3 | 0.3 | 1.5 | 6.5 |
| | Upstream cylinder gap (mm) | 6.5 | 6.5 | 6.5 | 6.5 | 6.5 | 6.5 |
| | Downstream cylinder gap (mm) | 6.5 | 6.5 | 6.5 | 6.5 | 6.5 | 6.5 |
| High load zone 2 | Zone length/cylinder inner diameter ratio | 6.3 | 6.3 | 6.3 | 6.3 | 4.3 | 6.3 |
| | Cylinder gap (mm) | 0.05 | 0.1 | 0.3 | 0.5 | 0.3 | 6.5 |
| | Upstream cylinder gap (mm) | 6.5 | 6.5 | 6.5 | 6.5 | 6.5 | 6.5 |
| | Downstream cylinder gap (mm) | 6.5 | 6.5 | 6.5 | 6.5 | 6.5 | 6.5 |
| High load zone 3 | Zone length/cylinder inner diameter ratio | - | - | - | - | 6.3 | - |
| | Cylinder gap (mm) | - | - | - | - | 0.1 | - |
| | Upstream cylinder gap (mm) | - | - | - | - | 6.5 | - |
| | Downstream cylinder gap (mm) | - | - | - | - | 6.5 | - |
| Distributive mixing zone | Zone length/cylinder inner diameter ratio | 3.3 | 3.3 | 3.3 | 3.3 | 3.3 | 3.3 |
| | Cylinder gap (mm) | 6.5 | 6.5 | 6.5 | 6.5 | 6.5 | 6.5 |
| | Upstream cylinder gap (mm) | 6.5 | 6.5 | 6.5 | 6.5 | 6.5 | 6.5 |
| | Downstream cylinder gap (mm) | 6.5 | 6.5 | 6.5 | 6.5 | 6.5 | 6.5 |
| [G1]/[G2] | | 0.17 | 0.33 | Not applicable | 0.60 | 0.11 | Not applicable |
| [G1]/[G3] | | 0.17 | 0.33 | Not applicable | 0.60 | 0.33, 0.07 | Not applicable |

[Table 3]

Table 3

| | | | Example A1 | Example A2 | Example A3 | Example A4 | Example A5 | Comp. Example A1 | Example A6 | Example A7 |
|---|---|---|---|---|---|---|---|---|---|---|
| Production conditions | Screw configuration | | Screw 1 | Screw 2 | Screw 3 | Screw 4 | Screw 5 | Screw 6 | Screw 2 | Screw 2 |
| | Pre-mixture preparation step (with/without) | | With | With | With | With | With | With | With | With |
| | Organic fiber concentration (mass%) | Dispersive mixing zone | 50 | 50 | 50 | 50 | 50 | 50 | 50 | 50 |
| | | Distributive mixing zone | 10 | 10 | 10 | 10 | 10 | 10 | 10 | 10 |
| | Mean fiber length (μm) of organic fibers supplied to extruder | | 550 | 550 | 550 | 550 | 550 | 550 | 550 | 400 |
| | Mean particle size (μm) of dry organic fibers supplied to extruder | | 150 | 150 | 150 | 150 | 150 | 150 | 150 | 80 |
| | [G1]/mean fiber length | | 0.1 | 0.2 | 0.5 | 0.5 | 0.2 | - | 0.2 | 0.3 |
| | [G1]/mean fiber diameter | | 0.3 | 0.7 | 2.0 | 2.0 | 0.7 | - | 0.7 | 1.3 |
| | Pressure (MPa) | High load zone 1 | 3 | 3 | 3 | 3 | 0.5 | 0.1 | 2 | 2 |
| | | Inlet pressure (MPa) | 3 | 3 | 3 | 3 | 0.5 | 0.1 | 2 | 2 |
| | | Outlet pressure (MPa) | 0.1 | 0.1 | 0.1 | 0.1 | 0.1 | 0.1 | 0.1 | 0.1 |
| | | Outlet/inlet pressure ratio | 0.03 | 0.03 | 0.03 | 0.03 | 0.20 | 1.00 | 0.05 | 0.05 |
| | | High load zone 2 | 15 | 8 | 2.5 | 0.5 | 1 | 0.1 | 5 | 5 |
| | | Inlet pressure (MPa) | 15 | 8 | 2.5 | 0.5 | 1 | 0.1 | 5 | 5 |
| | | Outlet pressure (MPa) | 0.1 | 0.1 | 0.1 | 0.1 | 0.1 | 0.1 | 0.1 | 0.1 |
| | | Outlet/inlet pressure ratio | 0.01 | 0.01 | 0.04 | 0.20 | 0.10 | 1.00 | 0.02 | 0.02 |
| | | High load zone 3 | - | - | - | - | 3 | - | - | - |
| | | Inlet pressure (MPa) | - | - | - | - | 3 | - | - | - |

(continued)

| | | | Example A1 | Example A2 | Example A3 | Example A4 | Example A5 | Comp. Example A1 | Example A6 | Example A7 |
|---|---|---|---|---|---|---|---|---|---|---|
| | | Outlet pressure (MPa) | - | - | - | - | 0.1 | - | - | - |
| | | Outlet/inlet pressure ratio | - | - | - | - | 0.03 | - | - | - |
| | | Distributive mixing zone | 0.1 | 0.1 | 0.1 | 0.1 | 0.1 | 0.1 | 0.1 | 0.1 |
| | | Inlet pressure (MPa) | 0.1 | 0.1 | 0.1 | 0.1 | 0.1 | 0.1 | 0.1 | 0.1 |
| | | Outlet pressure (MPa) | 0.1 | 0.1 | 0.1 | 0.1 | 0.1 | 0.1 | 0.1 | 0.1 |
| | | Outlet/inlet pressure ratio | 1.00 | 1.00 | 1.00 | 1.00 | 1.00 | 1.00 | 1.00 | 1.00 |
| | [P1]/[P2] | | 9.7 | 5.2 | 2.3 | 10.0 | 5.6 | Not applicable | 5.2 | 5.2 |
| | [P1]/[P3] | | 5.0, 150 | 2.7, 80 | 1.2, 30 | 6.0, 30 | 6.0, 3.0, 30 | Not applicable | 2.7, 80 | 2.7, 80 |
| Resin composition (parts by mass) | First component | PA6 (including heat stabilizer) | 90 | 90 | 90 | 90 | 90 | 90 | | 90 |
| | | PP | | | | | | | 90 | |
| | Second component | CNF-B | 10 | 10 | 10 | 10 | 10 | 10 | 10 | |
| | | CNF-D | | | | | | | | 10 |
| Mixture properties | Tensile elongation (%) (effluent) | High load zone 1 | 1 | 1 | 1 | 1 | 1 | 1 | 3 | 1 |
| | | High load zone 2 | 4 | 3 | 1 | 1 | 2 | 1 | 7 | 2 |
| | | High load zone 3 | - | - | - | - | 3 | - | - | - |
| | | Distributive mixing zone | 12 | 7 | 3 | 4 | 7 | 3 | 20 | 5 |
| | | High load zone 1 | 9 | 9 | 9 | 9 | 9 | 7 | 5 | 10 |

(continued)

| | | | Example A1 | Example A2 | Example A3 | Example A4 | Example A5 | Comp. Example A1 | Example A6 | Example A7 |
|---|---|---|---|---|---|---|---|---|---|---|
| | Flexural modulus (GPa) (effluent) | High load zone 2 | 8 | 15 | 12 | 9 | 10 | 8 | 8 | 15 |
| | | High load zone 3 | - | - | - | - | 12 | - | - | - |
| | | Distributive mixing zone | 4 | 6 | 5.5 | 5 | 5.5 | 4 | 4 | 6 |
| | Flexural modulus improvement rate | High load zone 1 | 1.3 | 1.3 | 1.3 | 1.3 | 1.3 | 1.1 | 1.1 | 1.3 |
| | | High load zone 2 | 0.9 | 1.6 | 1.3 | 1.1 | 1.1 | 1.2 | 1.6 | 1.5 |
| | | High load zone 3 | - | - | - | - | 1.2 | - | - | - |
| | | Distributive mixing zone | 1.0 | 1.0 | 1.0 | 1.0 | 1.0 | 1.0 | 1.0 | 1.0 |
| Extrusion property | Operational stability | | Good | Good | Good | Good | Good | Poor | Good | Good |
| Resin composition properties | Mean fiber diameter (nm) of organic fibers in resin composition | | 50 | 60 | 60 | 60 | 60 | 60 | 60 | 25 |
| | L/D of organic fibers in resin composition | | 3000 | 6000 | 6000 | 6000 | 6000 | 6000 | 6000 | 9000 |
| | Percentage of particles with diameters of 50 μm or larger in resin composition (mass%) | | 0 | 2 | 15 | 10 | 2 | 30 | 1 | 2 |
| | Tensile elongation (%) | | 12 | 7 | 3 | 4 | 7 | 3 | 20 | 5 |
| | Flexural modulus (GPa) | | 4.0 | 6.0 | 5.5 | 5.0 | 5.5 | 4.0 | 4.0 | 6.0 |

[Table 4]

Table 4

| | | | Exampl e A8 | Example A9 | Example A10 | Example A11 | Example A12 | Example A13 |
|---|---|---|---|---|---|---|---|---|
| Production conditions | Screw configuration | | Screw 2 | Screw 1 | Screw 1 | Screw 1 | Screw 1 | Screw 2 |
| | Pre-mixture preparation step (with/without) | | With | With | With | With | With | With |
| | Organic fiber concentration (mass%) | Dispersive mixing zone | 60 | 60 | 50 | 50 | 50 | 50 |
| | | Distributive mixing zone | 10 | 10 | 10 | 10 | 10 | 10 |
| | Mean fiber length (μm) of organic fibers supplied to extruder | | 700 | 250 | 250 | 100 | 250 | 700 |
| | Mean particle size (μm) of dry organic fibers supplied to extruder | | 200 | 200 | 150 | 200 | 150 | 250 |
| | [G1]/mean fiber length | | 0.1 | 0.2 | 0.2 | 0.5 | 0.2 | 0.1 |
| | [G1]/mean fiber diameter | | 0.5 | 0.3 | 0.3 | 0.3 | 0.3 | 0.4 |
| | Pressure (MPa) | High load zone 1 | 3 | 3 | 3 | 2 | 3 | 3 |
| | | Inlet pressure (MPa) | 3 | 3 | 3 | 2 | 3 | 3 |
| | | Outlet pressure (MPa) | 0.1 | 0.1 | 0.1 | 0.2 | 0.1 | 0.2 |
| | | Outlet/inlet pressure ratio | 0.03 | 0.03 | 0.03 | 0.10 | 0.03 | 0.07 |
| | | High load zone 2 | 15 | 15 | 15 | 10 | 15 | 15 |
| | | Inlet pressure (MPa) | 15 | 15 | 15 | 10 | 15 | 15 |
| | | Outlet pressure (MPa) | 0.1 | 0.1 | 0.1 | 0.2 | 0.1 | 0.2 |
| | | Outlet/inlet pressure ratio | 0.01 | 0.01 | 0.01 | 0.02 | 0.01 | 0.01 |
| | | Distributive mixing zone | 0.1 | 0.1 | 0.1 | 0.1 | 0.1 | 0.1 |
| | | Inlet pressure (MPa) | 0.1 | 0.1 | 0.1 | 0.1 | 0.1 | 0.1 |
| | | Outlet pressure (MPa) | 0.1 | 0.1 | 0.1 | 0.1 | 0.1 | 0.1 |
| | | Outlet/inlet pressure ratio | 1.00 | 1.00 | 1.00 | 1.00 | 1.00 | 1.00 |

(continued)

| | | | Example A8 | Example A9 | Example A10 | Example A11 | Example A12 | Example A13 |
|---|---|---|---|---|---|---|---|---|
| | [P1]/[P2] | | 9.7 | 9.7 | 9.7 | 9.5 | 9.7 | 9.7 |
| | [P1]/[P3] | | 5.0, 150 | 5.0, 150 | 5.0, 150 | 5.0, 100 | 5.0, 150 | 5.0, 150 |
| Resin composition (parts by mass) | First component | PA6 (including heat stabilizer) | | 90 | 90 | 90 | 90 | |
| | | PP | | | | | | 90 |
| | | POM | 90 | | | | | |
| | Second component | CNF-A | | 10 | | | | |
| | | CNF-C | | | 10 | | | |
| | | CNF-E | 10 | | | | | |
| | | CNC | | | | 10 | | |
| | | Chitosan fibers | | | | | 10 | |
| | | Aramid fibers | | | | | | 10 |
| Mixture properties | Tensile elongation (%) (effluent) | High load zone 1 | 1 | 1 | 1 | 1 | 1 | 1 |
| | | High load zone 2 | 10 | 3 | 3 | 20 | 2 | 2 |
| | | Distributive mixing zone | 20 | 8 | 7 | 50 | 5 | 5 |
| | Flexural modulus (GPa) (effluent) | High load zone 1 | 10 | 8 | 8 | 6 | 7 | 8 |
| | | High load zone 2 | 12 | 12 | 12 | 8 | 10 | 11 |
| | | Distributive mixing zone | 6.0 | 5.5 | 5.9 | 4.0 | 5.0 | 5.5 |
| | Flexural modulus improvement rate | High load zone 1 | 1.3 | 1.3 | 1.3 | 1.1 | 1.1 | 1.2 |
| | | High load zone 2 | 1.2 | 1.5 | 1.5 | 1.1 | 1.4 | 1.4 |
| | | Distributive mixing zone | 1.0 | 1.0 | 1.0 | 1.0 | 1.0 | 1.0 |
| Extrusion property | Operational stability | | Good | Good | Good | Good | Good | Good |
| Resin composition properties | Mean fiber diameter (nm) of organic fibers in resin composition | | 60 | 70 | 40 | 100 | 60 | 120 |
| | L/D of organic fibers in resin composition | | 10,000 | 7000 | 7000 | 20 | 6000 | 2000 |
| | Percentage of particles with diameters of 50 μm or larger in resin composition (mass%) | | 1 | 0 | 0 | 0 | 1 | 1 |

(continued)

| | | Exampl e A8 | Example A9 | Example A10 | Example A11 | Example A12 | Example A13 |
|---|---|---|---|---|---|---|---|
| | Tensile elongation (%) | 20 | 8 | 7 | 50 | 5 | 5 |
| | Flexural modulus (GPa) | 6.0 | 5.5 | 5.9 | 4.0 | 5.0 | 5.5 |

[Table 5]

Table 5

| | | | Example A14 | Example A15 | Example A16 | Comp. Example A2 | Example A17 | Example A18 | Example A19 | Comp. Example A3 |
|---|---|---|---|---|---|---|---|---|---|---|
| Production conditions | Screw configuration | | Screw 1 | Screw 2 | Screw 5 | Screw 6 | Screw 1 | Screw 2 | Screw 5 | Screw 6 |
| | Pre-mixture preparation step (with/-without) | | With | With | With | With | With | With | With | With |
| | Dispersed phase concentration (mass%) | Dispersive mixing zone | 50 | 50 | 50 | 50 | 50 | 50 | 50 | 50 |
| | | Distributive mixing zone | 10 | 10 | 10 | 10 | 10 | 10 | 10 | 10 |
| | Pressure (MPa) | High load zone 1 | 4 | 4 | 1 | 0.2 | 2 | 2 | 0.5 | 0.2 |
| | | Inlet pressure (MPa) | 4 | 4 | 1 | 0.2 | 2 | 2 | 0.5 | 0.2 |
| | | Outlet pressure (MPa) | 0.8 | 0.8 | 0.2 | 0.2 | 0.3 | 0.3 | 0.1 | 0.1 |
| | | Outlet/inlet pressure ratio | 0.20 | 0.20 | 0.20 | 1.00 | 0.15 | 0.15 | 0.20 | 0.50 |
| | | High load zone 2 | 18 | 10 | 3 | 0.2 | 9 | 5 | 1.5 | 0.2 |
| | | Inlet pressure (MPa) | 18 | 10 | 3 | 0.2 | 9 | 5 | 1.5 | 0.2 |
| | | Outlet pressure (MPa) | 1 | 1 | 0.5 | 0.1 | 0.3 | 0.3 | 0.3 | 0.1 |
| | | Outlet/inlet pressure ratio | 0.06 | 0.10 | 0.17 | 0.50 | 0.03 | 0.06 | 0.20 | 0.50 |
| | | High load zone 3 | - | - | 5 | - | - | - | 2.5 | - |
| | | Inlet pressure (MPa) | - | - | 5 | - | - | - | 2.5 | - |
| | | Outlet pressure (MPa) | - | - | 1 | - | - | - | 0.3 | - |
| | | Outlet/inlet pressure ratio | - | - | 0.20 | - | - | - | 0.12 | - |

(continued)

| | | | Example A14 | Example A15 | Example A16 | Comp. Example A2 | Example A17 | Example A18 | Example A19 | Comp. Example A3 |
|---|---|---|---|---|---|---|---|---|---|---|
| | | Distributive mixing zone | 0.2 | 0.2 | 0.2 | 0.2 | 0.1 | 0.1 | 0.1 | 0.1 |
| | | Inlet pressure (MPa) | 0.2 | 0.2 | 0.2 | 0.2 | 0.1 | 0.1 | 0.1 | 0.1 |
| | | Outlet pressure (MPa) | 0.1 | 0.1 | 0.1 | 0.1 | 0.1 | 0.1 | 0.1 | 0.1 |
| | | Outlet/inlet pressure ratio | 0.50 | 0.50 | 0.50 | 0.50 | 1.00 | 1.00 | 1.00 | 1.00 |
| | [P1]/[P2] | | 8.6 | 4.8 | 3.6 | Not applicable | 8.6 | 4.8 | 5.0 | Not applicable |
| | [P1]/[P3] | | 4.5, 90 | 2.5, 50 | 5.0, 1.7, 25 | Not applicable | 4.5, 90 | 2.5, 50 | 5.0, 1.7, 25 | Not applicable |
| Resin composition (parts by mass) | First component | PA6 (including heat stabilizer) | 70 | 70 | 70 | 70 | | | | |
| | Second component | m-PPE | 30 | 30 | 30 | 30 | | | | |
| | First component | PP | | | | | 80 | 80 | 80 | 80 |
| | Second component | SEBS | | | | | 20 | 20 | 20 | 20 |
| Resin composition properties | Particle diameters (nm) in dispersed phase of resin composition | | 100 | 10,000 | 100 | 10 | 20 | 200 | 20 | 10 |
| | Tensile elongation (%) | | 20 | 4 | 20 | 100 | 530 | 400 | 530 | 590 |
| | Flexural modulus (GPa) | | 3 | 3 | 3 | 3 | 0.8 | 0.9 | 0.8 | 0.8 |
| | Charpy impact strength ($kJ/m^2$) | | - | - | - | - | 50 | 30 | 50 | 60 |

(2) Example B (Example for aspect B of the disclosure)

<Evaluation methods>

<Gap between cylinder inner wall and screw>

This was measured in the same manner as Example A.

<Mixture fill factor>

During extrusion, screw rotation and material supply were abruptly interrupted, the screw was withdrawn, and the mixture adhering to the screw surface was sampled and measured, dividing the measured value by the density of the mixture to calculate the volume of the filling mixture. The volume of the filling mixture was then divided by the space volume (described below) to calculate the mixture fill factor.

<Spatial volume ratio>

The screw volume (the total of the element volume and shaft volume) was subtracted from the cylinder volume of the extruder to calculate the space volume, and the space volume was divided by the cylinder volume to calculate the spatial volume ratio.

<Zone length>

The total length of the screw parts constituting the dispersive mixing zone and distributive mixing zone was used as the zone length.

<Tensile elongation and flexural modulus of mixture and resin composition>

An injection molding machine was used for molding of a multipurpose test piece conforming to ISO294-3 from the obtained mixture or resin composition, under the production conditions according to JIS K6920-2. The multipurpose test piece was measured for tensile breaking elongation according to ISO527-1 and the flexural modulus according to ISO178. Since polyamide resins undergo changes due to moisture absorption, these were stored in an aluminum moisture-proof bag immediately after casting to minimize moisture absorption.

<Content of particles with diameters of 50 μm or larger in mixture and resin composition>

This was measured in the same manner as Example A.

<Organic fibers used, and mean fiber diameter and L/D of organic fibers in resin composition>

This was measured in the same manner as Example A.

<Weight-average molecular weight (Mw), number-average molecular weight (Mn) and Mw/Mn ratio of cellulose fibers and chitosan fibers>

This was measured in the same manner as Example A.

<Degree of crystallinity of cellulose fibers>

A porous sheet was fabricated and measured in the same manner as Example A.

<Average alkali-soluble polysaccharide content of cellulose fibers>

This was measured in the same manner as Example A.

<Degree of substitution (DS) of cellulose fibers>

This was measured in the same manner as Example A.

<Materials>

The same materials were used as for Example A.

<Kneading method>

[Extruder configuration]

A twin-screw extruder with 15 cylinder blocks (OMEGA30H, L/D = 72, by Steer Corp.) was used for kneading. Vent ports were installed on the upper part of cylinder 14 to allow depressurized suction, and vacuum suction was carried out. A 50 mesh screen mesh was fitted between the die adapter and the die head.

<Extruder screw construction>

Screws 1 to 5 were designed with arrangement of a first dispersive mixing zone, second dispersive mixing zone and distributive mixing zone, as listed in Table 6. The design was such that in the first dispersive mixing zone and second dispersive mixing zone, kneading elements including a shunt flight screw, notched screw, kneading disc, eccentric multi-thread disc or eccentric multi-thread screw were arranged at the front end, while a seal ring and/or a counter-clockwise screw were combined at the back end, causing retention of the mixture. In the distributive mixing zone, two neutral kneading discs followed by one counter-clockwise screw were configured in that order in the cylinder 11.

<Mixing procedure>

[Example B1]

Preparation of dried cellulose fibers and mixing of the dried cellulose fibers with a resin were carried out by the following procedure to produce a resin composition.

(Production of dried cellulose fibers)

A dispersing agent was added to cellulose fiber cake (solid weight: 10%) in an amount for 43 parts by mass with respect to 100 parts by solid mass of cellulose, and the mixture was thoroughly stirred to obtain a dispersing agent-added cellulose fiber cake. The starting materials were loaded into a drier and dried at a prescribed shear rate, pressure reduction and heating temperature (jacket temperature or hot air temperature). The moisture content was measured using an infrared heating moisture meter (MX-50 by A&D Co., Ltd.), with the drying end point being when the moisture content fell below 7 mass% (solid content: ≥93 mass%). The conditions were as follows. After supporting the dried cellulose fibers in agar, they were subjected to X-CT analysis by the method described above and found to contain greater than 50 mass% of particles with diameters of 50 μm or larger consisting of aggregated cellulose nanofibers.

Planetary mixer (PM)

Apparatus: planetary mixer (Model ACM-5LVT:, hook type) by Kodaira Seisakusho Co., Ltd. Conditions: jacket temperature: 60°C, mixing at 307 rpm, pressure reduction to -90 kPa using vacuum pump. Reduced pressure drying was carried out until the product temperature reached 50°C.

The clearance was the minimum distance measured between the hook wing (100 mm diameter) and jacket.

The drying time under these conditions was 180 minutes.

The drying temperature was the surface temperature of the jacket measured at 3 points and averaged.

(Dispersive mixing)

Polyamide 6 was loaded into an extruder at 2 kg/h while dried cellulose fibers were loaded at 2.86 kg/h (2 kg/h as cellulose), and the mixture was hot melt kneaded in the first dispersive mixing zone to obtain a first dispersively mixed product. It was then hot melt kneaded in the second dispersive mixing zone to obtain a second dispersively mixed product.

(Distributive mixing)

After adding polyamide 6 at 15.14 kg/h by side feeding to the second dispersively mixed product at 4.86 kg/h, the mixture was hot melt kneaded in the distributive mixing zone to obtain a resin composition. The obtained resin composition

was formed into pellets using a pelletizer. The extrusion property during extrusion was evaluated as "poor" operational stability when clogging of the screen mesh occurred within 1 hour from the start of extruder operation, or "good" operational stability when clogging did not occur.

[Examples B2 to B7 and Comparative Example B1]

A resin composition was produced by the same procedure as Example B1, except that the resin composition and extruder conditions were as shown in Table 7, and the same evaluations were conducted. The results are shown in Table 7.

[Table 6]

Table 6

| Screw configuration | | Screw 1 | Screw 2 | Screw 3 | Screw 4 | Screw 5 |
|---|---|---|---|---|---|---|
| Arrangement of first and second dispersive mixing zones | | Upstream: 1st Downstream: 2nd | Upstream: 1st Downstream: 2nd | Upstream: 2nd Downstream: 1st | Upstream: 1st Downstream: 2nd | Upstream: 1st Downstream: 2nd |
| Zone length/-cylinder inner diameter ratio | First dispersive mixing zone | 4.5 | 6.5 | 4.5 | 8.5 | 8.5 |
| | Second dispersive mixing zone | 6.5 | 6.5 | 6.5 | 12.5 | 12.5 |
| | Distributive mixing zone | 3.3 | 3.3 | 3.3 | 6.6 | 6.6 |
| Spatial volume ratio (%) | First dispersive mixing zone | 45 | 40 | 45 | 45 | 45 |
| | Second dispersive mixing zone | 40 | 40 | 40 | 45 | 40 |
| | Distributive mixing zone | 45 | 45 | 45 | 45 | 45 |
| Cylinder gap (mm) | First dispersive mixing zone | 0.1 | 6.5 | 0.1 | 0.1 | 0.1 |
| | Second dispersive mixing zone | 0.1 | 6.5 | 0.1 | 6.5 | 0.1 |
| | Distributive mixing zone | 6.5 | 6.5 | 6.5 | 6.5 | 6.5 |

[Table 7]

Table 7

| | | | Example B1 | Example B2 | Example B3 | Example B4 | Example B5 | Comp. Example B1 | Example B6 | Example B7 |
|---|---|---|---|---|---|---|---|---|---|---|
| Production conditions | Screw configuration | | Screw 1 | Screw 1 | Screw 1 | Screw 1 | Screw 3 | Screw 2 | Screw 4 | Screw 5 |
| | Pre-mixture preparation step (with/without) | | With | With | With | With | With | With | With | With |
| | Cellulose fiber concentration (mass%) | Dispersive mixing zone inlet | 50 | 30 | 50 | 30 | 50 | 50 | 60 | 60 |
| | | Distributive mixing zone inlet | 10 | 10 | 10 | 10 | 10 | 10 | 10 | 10 |
| | Mixture fill factor (%) | First dispersive mixing zone | 80 | 90 | 80 | 90 | 100 | 80 | 100 | 100 |
| | | Second dispersive mixing zone | 100 | 100 | 100 | 100 | 80 | 100 | 90 | 100 |
| | | Distributive mixing zone | 50 | 50 | 50 | 50 | 50 | 50 | 50.0 | 50.0 |
| | Pressure (MPa) | First dispersive mixing zone | 0.3 | 0.5 | 0.2 | 0.5 | 3.0 | 0.3 | 5.0 | 15.0 |
| | | Second dispersive mixing zone | 3.0 | 5.0 | 2.0 | 5.0 | 0.3 | 0.3 | 2 | 10 |
| | | Pressure drop zone inlet | 3.0 | 5.0 | 2.0 | 5.0 | 3.0 | 0.3 | 2 | 10 |
| | | Pressure drop zone outlet | 0.1 | 0.1 | 0.1 | 0.1 | 0.1 | 0.1 | 0.2 | 0.2 |
| | | Outlet/inlet pressure ratio | 0.03 | 0.02 | 0.05 | 0.02 | 0.03 | 0.33 | 0.10 | 0.02 |
| | | Distributive mixing zone | 0.0 | 0.0 | 0.0 | 0.0 | 0.0 | 0.0 | 0 | 0 |

(continued)

| | | | Example B1 | Example B2 | Example B3 | Example B4 | Example B5 | Comp. Example B1 | Example B6 | Example B7 |
|---|---|---|---|---|---|---|---|---|---|---|
| Resin composition (parts by mass) | First component | PA6 (including heat stabilizer) | 90 | 90 | | 90 | 90 | 90 | 90 | 90 |
| | | PP | | | 90 | | | | | |
| | Second component | CNF-B | 10 | 10 | 10 | | 10 | 10 | 10 | 10 |
| | | CNF-D | | | | 10 | | | | |
| Mixture properties | Tensile elongation (%) | Dispersive mixing zone inlet | 1 | 1 | 1 | 1 | 1 | 1 | 1 | 1 |
| | | First dispersive mixing zone inlet | 1 | 1 | 1 | 1 | 3 | 1 | 1 | 1 |
| | | First dispersive mixing zone outlet | 6 | 3 | 6 | 3 | 7 | 1 | 2 | 2 |
| | | Second dispersive mixing zone inlet | 6 | 3 | 6 | 3 | 1 | 1 | 2 | 2 |
| | | Second dispersive mixing zone outlet | 6 | 3 | 7 | 3 | 3 | 1 | 2 | 2 |
| | | Dispersive mixing zone outlet | 6 | 3 | 7 | 3 | 10 | 1 | 2 | 2 |
| | | Distributive mixing zone outlet | 12 | 7 | 20 | 7 | 14 | 2 | 10 | 14 |
| | Flexural modulus (GPa) | Dispersive mixing zone inlet | 5 | 4 | 4 | 4 | 5 | 5 | 6 | 6 |
| | | First dispersive mixing zone inlet | 5 | 4 | 4 | 4 | 8 | 5 | 6 | 6 |
| | | First dispersive mixing zone outlet | 5 | 4 | 4 | 4 | 8 | 6 | 7 | 7 |
| | | Second dispersive mixing zone inlet | 5 | 4 | 4 | 4 | 5 | 7 | 7 | 7 |
| | | Second dispersive mixing zone outlet | 8 | 8 | 6 | 8 | 8 | 8 | 12 | 12 |

(continued)

| | | | Example B1 | Example B2 | Example B3 | Example B4 | Example B5 | Comp. Example B1 | Example B6 | Example B7 |
|---|---|---|---|---|---|---|---|---|---|---|
| | | Dispersive mixing zone outlet | 8 | 8 | 6 | 8 | 8 | 8 | 12 | 12 |
| | | Distributive mixing zone outlet | 5 | 6 | 4 | 6 | 5 | 4 | 6 | 6 |
| | Percentage of particles with diameters of 50 μm or larger (mass%) | First dispersive mixing zone inlet | 50 | 50 | 50 | 50 | 45 | 50 | 50 | 50 |
| | | First dispersive mixing zone outlet | 1 | 5 | 1 | 10 | 0 | 50 | 2 | 2 |
| | | Second dispersive mixing zone inlet | 1 | 5 | 1 | 10 | 50 | 50 | 2 | 2 |
| | | Second dispersive mixing zone outlet | 0 | 2 | 1 | 2 | 45 | 50 | 1 | 1 |
| Extrusion property | Operational stability | | Good | Good | Good | Good | Good | Poor | Good | Good |
| Resin composition properties | Mean fiber diameter (nm) of cellulose fibers in resin composition | | 50 | 60 | 60 | 30 | 50 | 50 | 30 | 30 |
| | L/D of cellulose fibers in resin composition | | 3000 | 6000 | 6000 | 10,000 | 3000 | 3000 | 10,000 | 10,000 |
| | Percentage of particles with diameters of 50 μm or larger in resin composition (mass%) | | 0 | 2 | 1 | 2 | 0 | 50 | 0 | 0 |
| | Tensile elongation (%) | | 12 | 7 | 20 | 7 | 14 | 2 | 10 | 14 |
| | Flexural modulus (GPa) | | 5 | 6 | 4 | 6 | 5 | 4 | 6 | 6 |

(3) Example C (Example for aspect C of the disclosure)

<Evaluation methods>

<Gap between cylinder inner wall and screw>

This was measured in the same manner as Example A.

<Mixture fill factor>

During extrusion, screw rotation and material supply were abruptly interrupted, the screw was withdrawn, and the mixture adhering to the screw surface was sampled and measured, dividing the measured value by the density of the mixture to calculate the volume of the filling mixture. The volume of the filling mixture was then divided by the space volume (described below) to calculate the mixture fill factor.

<Zone length/cylinder inner diameter ratio in region with mixture pressure of ≥0.3 MPa>

A plurality of resin pressure gauges were set in the cylinder of the extruder, and the resin pressure was monitored during extrusion to measure the resin pressure in each zone. The ratio was calculated by dividing the total length of the zones having mixture pressure of 0.3 MPa or higher by the cylinder inner diameter.

<Spatial volume ratio>

The spatial volume ratio was calculated by subtracting the screw volume (the total of the element volume and shaft volume) from the barrel volume of the extruder to calculate the space volume, and dividing the space volume by the barrel volume.

<Zone length>

The total length of the screw parts constituting the dispersive mixing zone and distributive mixing zone was used as the zone length.

<Tensile elongation and flexural modulus of mixture and resin composition>

An injection molding machine was used for molding of a multipurpose test piece conforming to ISO294-3 from the obtained mixture or resin composition, under the production conditions according to JIS K6920-2. The multipurpose test piece was measured for tensile breaking elongation according to ISO527-1 and the flexural modulus according to ISO178. Since polyamide resins undergo changes due to moisture absorption, these were stored in an aluminum moisture-proof bag immediately after casting to minimize moisture absorption.

<Thixotropy index>

The viscoelasticity of the multipurpose test piece was measured during melting under the following test conditions.

Apparatus: ARES G2 by TA Instruments, Japan
Measuring temperature: 250°C (polyamide melting point + 25°C), 185°C (polypropylene melting point + 25°C)
Shear rate: 1.0 to 40 $s^{-1}$
25 mm/40 mm parallel plates were used with a gap of 1 mm.

The thixotropic index was calculated from the measurement results according to the following formula.

$$\text{Thixotropic index} = (\text{Viscosity at shear rate of } 1\ s^{-1}/\text{viscosity at shear rate of } 10\ s^{-1})$$

<Rate of improvement in the physical properties per unit mass of cellulose fibers in mixture (rate of improvement in the flexural modulus)>

The cellulose fiber concentration in the mixture was determined from the ratio of the feed volume into the extruder during extrusion, and the rate of improvement in the physical properties per unit mass of the cellulose fibers in the mixture was calculated by the following formula.

(Flexural modulus of mixture - flexural modulus of base resin)/cellulose fiber concentration (mass%)

<Charpy impact strength>

This was measured in the same manner as Example A.

<Cellulose fibers used, and mean fiber length, mean fiber diameter and L/D of cellulose fibers in resin composition>

This was measured in the same manner as Example A.

<Weight-average molecular weight (Mw), number-average molecular weight (Mn) and Mw/Mn ratio of cellulose fibers>

This was measured in the same manner as Example A.

<Degree of crystallinity of cellulose fibers>

A porous sheet was fabricated and measured in the same manner as Example A.

<Average alkali-soluble polysaccharide content of cellulose fibers>

This was measured in the same manner as Example A.

<Content of particles with diameters of 50 μm or larger in resin composition>

This was measured in the same manner as Example A.

<Particle diameters in dispersed phase of resin composition>

This was measured in the same manner as Example A.

<Materials>

The polymer, organic fibers and dispersing agent used were the same as for Example A.

<Kneading method>

<Extruder screw construction>

Screws 1 to 5 were designed for zones 1 and 2, as listed in Table 8. Zone 1 with screw 1 was the dispersive mixing zone, having a design comprising a plurality of kneading zones combining a kneading element comprising a shunt flight screw, notched screw, kneading disc, eccentric multi-thread disc or eccentric multi-thread screw, with a retention element comprising a seal ring and/or a counter-clockwise screw. Zone 2 with screws 1 to 5 was a distributive mixing zone, with two neutral kneading discs followed by one counter-clockwise screw configured in that order in the cylinder 11.

Zone 1 with screw 2 was a distributive mixing zone, having a design with a combination of one and/or a plurality of kneading discs, and one and/or a plurality of counter-clockwise screws.

Zone 1 with screw 3 was a dispersive mixing zone, having a design with one more kneading zone than the screw 1.

The zone length/cylinder inner diameter ratio and spatial volume ratio for each screw configuration were as shown in Table 8.

<Mixing procedure>

[Example C1]

Preparation of dried cellulose fibers and mixing of the dried cellulose fibers with a polymer were carried out by the following procedure to produce a resin composition.

(Production of dried cellulose fibers)

A dispersing agent was added to cellulose fiber cake (solid weight: 10%) in an amount for 43 parts by mass with respect to 100 parts by solid mass of cellulose, and the mixture was thoroughly stirred to obtain a dispersing agent-added cellulose fiber cake. The starting materials were loaded into a drier and dried at a prescribed shear rate, pressure reduction and heating temperature (jacket temperature or hot air temperature). The moisture content was measured using an infrared heating moisture meter (MX-50 by A&D Co., Ltd.), with the drying end point being when the moisture content fell below 7 mass% (solid content: ≥93 mass%). The conditions were as follows.

Planetary mixer (PM)

Apparatus: planetary mixer (Model ACM-5LVT:, hook type) by Kodaira Seisakusho Co., Ltd. Conditions: jacket temperature: 60°C, mixing at 307 rpm, pressure reduction to -90 kPa using vacuum pump. Reduced pressure drying was carried out until the product temperature reached 50°C.
The clearance was the minimum distance measured between the hook wing (100 mm diameter) and jacket.
The drying time under these conditions was 180 minutes.
The drying temperature was the surface temperature of the jacket measured at 3 points and averaged.

(Dispersive mixing)

Polyamide 6 was loaded into an extruder at 2 kg/h while dried cellulose fibers were loaded at 2.86 kg/h (2 kg/h as cellulose), and the mixture was hot melt kneaded in the dispersive mixing zone to obtain a dispersively mixed product.

(Distributive mixing)

After adding polyamide 6 at 15.14 kg/h by side feeding to the dispersively mixed product at 4.86 kg/h, the mixture was hot melt kneaded in the distributive mixing zone to obtain a resin composition. The obtained resin composition was formed into pellets using a pelletizer. The extrusion property during extrusion was evaluated as "poor" operational stability when clogging of the screen mesh occurred within 1 hour from the start of extruder operation, or "good" operational stability when clogging did not occur.

[Examples C2 to C9 and Comparative Example C1]

A resin composition was produced by the same procedure as Example C1, except that the resin composition and extruder conditions were as shown in Tables 9 and 10, and the same evaluations were conducted. The results are shown in Tables 9 and 10. Examples C8 and C9 are Reference Examples.

[Table 8]

Table 8

| Screw configuration | Screw 1 | Screw 2 | Screw 3 | Screw 4 | Screw 5 |
|---|---|---|---|---|---|
| Mixture form | Zone 1: dispersive mixing<br>Zone 2: distributive mixing | Zone 1: distributive<br>mixing Zone 2: distributive mixing | Zone 1: dispersive mixing<br>Zone 2: distributive mixing | Zone 1: dispersive mixing<br>Zone 2: distributive mixing | Zone 1: dispersive mixing<br>Zone 2: distributive mixing |

(continued)

| Screw configuration | | Screw 1 | Screw 2 | Screw 3 | Screw 4 | Screw 5 |
|---|---|---|---|---|---|---|
| Zone length/cylinder inner diameter ratio | Zone 1 | 11.0 | 13.0 | 13.0 | 15.0 | 15.0 |
| | Zone 2 | 3.3 | 3.3 | 3.3 | 6.6 | 3.3 |
| Spatial volume ratio (%) | Zone 1 | 42 | 45 | 42 | 45 | 40 |
| | Zone 2 | 45 | 45 | 45 | 45 | 45 |
| Cylinder gap (mm) | Zone 1 | 0.1 | 6.5 | 0.1 | 0.1 | 0.1 |
| | Zone 2 | 6.5 | 6.5 | 6.5 | 6.5 | 6.5 |

[Table 9]

Table 9

| | | | Example C1 | Example C2 | Example C3 | Example C4 | Example C5 | Comp. Example C1 | Example C6 | Example C7 |
|---|---|---|---|---|---|---|---|---|---|---|
| Production conditions | Screw configuration | | Screw 1 | Screw 1 | Screw 1 | Screw 1 | Screw 3 | Screw 2 | Screw 4 | Screw 5 |
| | Pre-mixture preparation step (with/without) | | With | With | With | With | With | With | With | With |
| | Cellulose fiber concentration (mass%) | Zone 1 [CA] | 50 | 30 | 50 | 30 | 50 | 50 | 60 | 60 |
| | | Zone 2 [CB] | 10 | 10 | 10 | 10 | 10 | 10 | 10 | 10 |
| | Mixture fill factor (%) | Zone 1 | 90 | 95 | 90 | 95 | 90 | 90 | 90 | 100 |
| | | Zone 2 | 50 | 50 | 50 | 50 | 50 | 50 | 50 | 50 |
| | Pressure (MPa) | Zone 1 | 3.0 | 5.0 | 2.0 | 5.0 | 3.0 | 0.3 | 8.0 | 10 |
| | | Zone 2 | 0.1 | 0.1 | 0.1 | 0.1 | 0.1 | 0.1 | 0.1 | 0.1 |
| | | Pressure drop zone inlet | 3.0 | 5.0 | 2.0 | 5.0 | 3.0 | 0.3 | 8.0 | 10 |
| | | Pressure drop zone outlet | 0.1 | 0.1 | 0.1 | 0.1 | 0.1 | 0.1 | 0.1 | 0.1 |
| | | Outlet/inlet pressure ratio | 0.03 | 0.02 | 0.05 | 0.02 | 0.03 | 0.33 | 0.01 | 0.01 |
| | Zone length/cylinder inner diameter ratio in region with pressure of ≥0.3 MPa | Zone 1 | 5 | 8 | 5 | 8 | 4 | 1 | 10 | 11 |
| | | Zone 2 | 0 | 0 | 0 | 0 | 0 | 0 | 0 | 0 |
| Resin composition (parts by mass) | First component | PA6 (including heat stabilizer) | 90 | 90 | | 90 | 90 | 90 | 90 | 90 |
| | | PP | | | 90 | | | | | |
| | Second component | CNF-B | 10 | 10 | 10 | | 10 | 10 | 10 | 10 |
| | | CNF-D | | | | 10 | | | | |
| | | Zone 1 inlet | 1 | 1 | 1 | 1 | 1 | 1 | 1 | 1 |
| | | Zone 1 outlet | 6 | 3 | 7 | 3 | 10 | 1 | 3 | 3 |

(continued)

| | | | Example C1 | Example C2 | Example C3 | Example C4 | Example C5 | Comp. Example C1 | Example C6 | Example C7 |
|---|---|---|---|---|---|---|---|---|---|---|
| Mixture properties | Tensile elongation (%) | Zone 2 inlet | 12 | 7 | 20 | 7 | 14 | 2 | 12 | 15 |
| | | Zone 2 outlet | 12 | 7 | 20 | 7 | 14 | 2 | 12 | 15 |
| | | [EA](%) | 5 | 2 | 6 | 2 | 9 | 0 | 2 | 2 |
| | | [EB](%) | 0 | 0 | 0 | 0 | 0 | 0 | 0 | 0 |
| | Flexural modulus (GPa) | Zone 1 inlet | 5 | 4 | 4 | 4 | 5 | 5 | 6 | 6 |
| | | Zone 1 outlet | 8 | 8 | 6 | 8 | 8 | 8 | 10 | 10 |
| | | Zone 2 inlet | 5 | 6 | 4 | 6 | 5 | 4 | 6 | 6 |
| | | Zone 2 outlet | 5 | 6 | 4 | 6 | 5 | 4 | 6 | 6 |
| | | [MA](GPa) | 3 | 4 | 2 | 4 | 3 | 3 | 4 | 4 |
| | | [MB](GPa) | 0 | 0 | 0 | 0 | 0 | 0 | 0 | 0 |
| | Thixotropic index | Zone 1 inlet | 1.5 | 1.5 | 1.5 | 1.5 | 1.5 | 1.5 | 1.2 | 1.2 |
| | | Zone 1 outlet | 5.0 | 3.0 | 4.0 | 3.0 | 5.0 | 2.0 | 5.0 | 5.0 |
| | | Zone 2 inlet | 4.5 | 4.5 | 3.5 | 4.5 | 3.5 | 2.0 | 4.5 | 4.5 |
| | | Zone 2 outlet | 5.0 | 5.0 | 4.0 | 5.0 | 4.0 | 2.5 | 5.0 | 5.0 |
| | | [TA] | 3.5 | 1.5 | 2.5 | 1.5 | 3.5 | 0.5 | 3.8 | 3.8 |
| | | [TB] | 0.5 | 0.5 | 0.5 | 0.5 | 0.5 | 0.5 | 0.5 | 0.5 |
| | Improvement rate for physical properties (flexural modulus) | Zone 1 | 0.10 | 0.17 | 0.08 | 0.17 | 0.10 | 0.10 | | |
| | | Zone 2 | 0.20 | 0.30 | 0.20 | 0.30 | 0.20 | 0.10 | | |
| Extrusion property | Operational stability | | Good | Good | Good | Good | Good | Poor | Good | Good |

(continued)

| | | Example C1 | Example C2 | Example C3 | Example C4 | Example C5 | Comp. Example C1 | Example C6 | Example C7 |
|---|---|---|---|---|---|---|---|---|---|
| Resin composition properties | Mean fiber diameter (nm) of cellulose fibers in resin composition | 50 | 60 | 60 | 30 | 50 | 50 | 40 | 30 |
| | L/D of cellulose fibers in resin composition | 3000 | 6000 | 6000 | 10,000 | 3000 | 3000 | 6000 | 6000 |
| | Content of particles with diameters of 50 μm or larger in resin composition (mass%) | 0 | 2 | 1 | 2 | 0 | 50 | 0 | 0 |
| | Tensile elongation (%) | 12 | 7 | 20 | 7 | 14 | 2 | 12 | 15 |
| | Flexural modulus (GPa) | 5 | 6 | 4 | 6 | 5 | 4 | 6 | 6 |

[Table 10]

Table 10

<table>
<tr><td colspan="3"></td><td>Example C8</td><td>Example C9</td></tr>
<tr><td rowspan="11">Production conditions</td><td colspan="2">Screw configuration</td><td>Screw 3</td><td>Screw 3</td></tr>
<tr><td colspan="2">Pre-mixture preparation step (with/without)</td><td>With</td><td>With</td></tr>
<tr><td rowspan="2">Mixture fill factor (%)</td><td>Zone 1</td><td>60</td><td>60</td></tr>
<tr><td>Zone 2</td><td>30</td><td>20</td></tr>
<tr><td rowspan="5">Pressure (MPa)</td><td>Zone 1</td><td>5.0</td><td>8.0</td></tr>
<tr><td>Zone 2</td><td>0.2</td><td>0.2</td></tr>
<tr><td>Pressure drop zone inlet</td><td>5.0</td><td>8.0</td></tr>
<tr><td>Pressure drop zone outlet</td><td>0.2</td><td>0.2</td></tr>
<tr><td>Outlet/inlet pressure ratio</td><td>0.04</td><td>0.03</td></tr>
<tr><td rowspan="2">Zone length/cylinder inner diameter ratio in region with pressure of ≥0.3 MPa</td><td>Zone 1</td><td>8</td><td>7</td></tr>
<tr><td>Zone 2</td><td>0</td><td>0</td></tr>
<tr><td rowspan="4">Resin composition (parts by mass)</td><td>First component</td><td>PA6 (including heat stabilizer)</td><td>70</td><td></td></tr>
<tr><td>Second component</td><td>m-PPE</td><td>30</td><td></td></tr>
<tr><td>First component</td><td>PP</td><td></td><td>80</td></tr>
<tr><td>Second component</td><td>SEBS</td><td></td><td>20</td></tr>
<tr><td rowspan="4">Resin composition properties</td><td colspan="2">Particle diameters (nm) in dispersed phase of resin composition</td><td>20</td><td>10</td></tr>
<tr><td colspan="2">Tensile elongation (%)</td><td>50</td><td>580</td></tr>
<tr><td colspan="2">Flexural modulus (GPa)</td><td>3</td><td>0.8</td></tr>
<tr><td colspan="2">Charpy impact strength ($kJ/m^2$)</td><td>-</td><td>60</td></tr>
</table>

## INDUSTRIAL APPLICABILITY

The resin composition obtained by the methods for producing a resin composition according to the present disclosure can be suitably applied for a wide range of purposes including industrial machinery parts, general machine parts, automobile/railway/vehicle/ship/aerospace-related parts, electronic and electrical components, construction and civil engineering materials, daily household items, sports and leisure goods, wind power generation case members, and container and packaging materials.

## REFERENCE SIGNS LIST

100, 200, 300, 400, 600, 800 Extruder
101, 201, 301 Kneading zone
102, 202, 302 Melting zone
N1, N2, N3 Narrow gap zone
D1 Pressure drop zone
H1, H2, H3 High-pressure zone
11, 12, 13, 14, 21, 22, 31, 32, 33, 34 Other zone
401, 601, 801 Dispersive mixing zone
402, 602, 802 Distributive mixing zone
403, 404, 603, 604, 803, 804 Melting zone
41 First dispersive mixing zone

42 Second dispersive mixing zone
41a Influent into first dispersive mixing zone
41b Effluent from first dispersive mixing zone
42a Influent into second dispersive mixing zone
42b Effluent from second dispersive mixing zone
a1 First component
a2 Second component
b Resin composition
L Lengthwise direction of cylinder

## Claims

1. A method for producing a resin composition that includes a first component and a second component, wherein:

    the first component is a polymer and
    the second component is organic fibers, or a combination of organic fibers with a polymer different from the first component,
    the method including a kneading step in which the first component and the second component are kneaded with an extruder provided with a kneading zone including a plurality of narrow gap zones where the gap between the cylinder inner wall and the screw is 2 mm or smaller,

    wherein the ratio [G1/G2] of the gap [G1] in the narrowest gap zone having the minimum gap among the plurality of narrow gap zones, with respect to the average value [G2] for the gaps of the narrow gap zones other than the narrowest gap zone, is 0.001 or greater and less than 1.

2. The method according to claim 1, wherein the ratio [G1/G3] of the gap [G1] in the narrowest gap zone having the minimum gap among the plurality of narrow gap zones, with respect to each gap [G3] of the narrow gap zones other than the narrowest gap zone, is 0.001 or greater and less than 1.

3. The method according to claim 1 or 2, wherein

    the organic fibers supplied to the extruder have a mean fiber length of 1 μm to 10,000 μm, and
    the ratio of the gap [G1] in the narrowest gap zone having the minimum gap among the plurality of narrow gap zones with respect to the mean fiber length is 0.001 to 10, the mean fiber length being measured by a scanning electron microscope (SEM).

4. The method according to any one of claims 1 to 3, wherein

    the organic fibers supplied to the extruder form particles having a mean particle size of 1 μm to 10,000 μm, and
    the ratio of the gap [G1] in the narrowest gap zone having the minimum gap among the plurality of narrow gap zones with respect to the mean particle size is 0.001 to 10.

5. A method for producing a resin composition that includes a first component and a second component, wherein:

    the first component is a polymer, and
    the second component is organic fibers, or a combination of organic fibers with a polymer different from the first component,
    the method includes a kneading step in which the first component and the second component are kneaded with an extruder provided with a kneading zone including a pressure drop zone,
    the pressure drop zone is a location where the pressure of influent into the pressure drop zone is 0.5 to 20 MPa and the ratio of the pressure of effluent from the pressure drop zone with respect to the pressure of influent into the pressure drop zone is 0.2 or lower, and
    the content of the second component in the influent into the pressure drop zone is 15 to 90 mass%,

    wherein the organic fibers in the resin composition have a mean fiber diameter of 1000 nm or smaller and a mean fiber length/mean fiber diameter ratio of 30 or greater, the mean fiber diameter and the mean fiber length being measured by a scanning electron microscope (SEM).

**6.** A method for producing a resin composition that includes a first component and a second component, wherein:

the first component is a polymer, and
the second component is organic fibers, or a combination of organic fibers with a polymer different from the first component,
the method includes a kneading step in which the first component and the second component are kneaded with an extruder provided with a kneading zone including a pressure drop zone,
the pressure drop zone is a location where the pressure of influent into the pressure drop zone is 0.5 to 20 MPa and the ratio of the pressure of effluent from the pressure drop zone with respect to the pressure of influent into the pressure drop zone is 0.2 or lower, and
in the kneading step, an additional polymer at a lower temperature than the mixture that has passed through the pressure drop zone is added to the mixture to cool the mixture,

wherein the organic fibers in the resin composition have a mean fiber diameter of 1000 nm or smaller and a mean fiber length/mean fiber diameter ratio of 30 or greater, the mean fiber diameter and the mean fiber length being measured by a scanning electron microscope (SEM).

**7.** A method for producing a resin composition that includes a first component and a second component, wherein:

the first component is a polymer, and
the second component is organic fibers, or a combination of organic fibers with a polymer different from the first component,
the method includes a kneading step in which the first component and the second component are kneaded with an extruder provided with a kneading zone including a plurality of high-pressure zones at a pressure of 0.1 MPa or higher, and
the pressure [P1] in the highest-pressure zone having the maximum pressure among the plurality of high-pressure zones is 0.5 MPa or higher, and the ratio [P1/P2] of the pressure [P1] with respect to the average value [P2] for the pressure of the high-pressure zones other than the highest-pressure zone is greater than 1 and 100 or lower,

wherein the ratio [P1/P3] of the pressure [P1] with respect to the pressure [P3] of each high-pressure zone other than the highest-pressure zone is greater than 1 and 100 or lower.

**8.** The method according to claim 7, wherein for each high-pressure zone,

the pressure of influent into the high-pressure zone is 0.5 to 20 MPa, and
the ratio of the pressure of effluent from the high-pressure zone with respect to the pressure of influent into the high-pressure zone is 0.2 or lower.

**9.** The method according to claim 7 or 8, wherein for each high-pressure zone, the content of the second component in the influent to the high-pressure zone is 15 to 90 mass%.

**10.** The method according to any one of claims 7 to 9, wherein in the kneading step, an additional polymer at a lower temperature than the mixture that has passed through all of the plurality of high-pressure zones is added to the mixture to cool the mixture.

**11.** A method for producing a resin composition that includes a first component and a second component, wherein:

the first component is a polymer, and
the second component is organic fibers, or a combination of organic fibers with a polymer different from the first component,
the method includes:

a dispersive mixing step in which the first component and the second component are dispersively mixed in a dispersive mixing zone of an extruder to obtain a dispersively mixed product, wherein the dispersive mixing is a mixing state in which the size of the second component substantially changes, and
a distributive mixing step in which at least the dispersively mixed product is distributively mixed in a distributive mixing zone of the extruder to obtain a resin composition, wherein the distributive mixing is a

mixing state in which the dispersed state of the second component in the first component changes but without any substantial change in the size of the second component, and
the concentration [CA] of the second component in the dispersive mixing zone is 10 mass% to 90 mass%, the concentration [CB] of the second component in the distributive mixing zone is 1 mass% to 50 mass%, and the ratio [CA]/[CB] is 2 to 90.

**12.** The method according to any one of claims 1 to 10, wherein:
the method includes:

a dispersive mixing step in which the first component and the second component are dispersively mixed in a dispersive mixing zone of the extruder to obtain a dispersively mixed product, wherein the dispersive mixing is a mixing state in which the size of the second component substantially changes, and
a distributive mixing step in which at least the dispersively mixed product is distributively mixed in a distributive mixing zone of the extruder to obtain a resin composition, wherein the distributive mixing is a mixing state in which the dispersed state of the second component in the first component changes but without any substantial change in the size of the second component, and
the concentration [CA] of the second component in the dispersive mixing zone is 10 mass% to 90 mass%, the concentration [CB] of the second component in the distributive mixing zone is 1 mass% to 50 mass%, and the ratio [CA]/[CB] is 2 to 90.

**13.** The method according to claim 11 or 12, which further includes, prior to the dispersive mixing step, a step in which the second component is added to a melt of the first component to obtain a pre-mixture, and wherein the pre-mixture is supplied to the dispersive mixing zone.

**14.** The method according to any one of claims 1 to 13, wherein the organic fibers are cellulose fibers.

**15.** The method according to any one of claims 1 to 4 and 7 to 14, wherein the organic fibers in the resin composition have a mean fiber diameter of 1000 nm or smaller and a mean fiber length/mean fiber diameter ratio of 30 or greater, the mean fiber diameter and the mean fiber length being measured by a scanning electron microscope (SEM).

**16.** The method according to any one of claims 1 to 15, wherein the organic fibers are supplied to the extruder in dry form.

**Patentansprüche**

**1.** Verfahren zur Herstellung einer Harzzusammensetzung, die eine erste und eine zweite Komponente umfasst, wobei:

die erste Komponente ein Polymer ist und
die zweite Komponente organische Fasern oder eine Kombination organischer Fasern mit einem Polymer ist, das sich von der ersten Komponente unterscheidet,
das Verfahren einen Knetschritt umfasst, bei dem die erste und die zweite Komponente mit einem Extruder geknetet werden, der mit einer Knetzone versehen ist, die mehrere schmale Spaltzonen umfasst, wobei der Spalt zwischen der Zylinderinnenwand und der Schraube 2 mm oder kleiner ist;
wobei das Verhältnis [G1/G2] des Spalts [G1] in der schmalsten Spaltzone mit dem Mindestspalt unter den mehreren schmalen Spaltzonen bezüglich des Mittelwerts [G2] für die Spalte der schmalen Spaltzonen, die nicht die schmalste Spaltzone sind, 0,001 oder größer und kleiner als 1 ist.

**2.** Verfahren nach Anspruch 1, wobei das Verhältnis [G1/G3] des Spalts [G1] in der schmalsten Spaltzone mit dem Mindestspalt unter den mehreren schmalen Spaltzonen bezüglich jedes Spalts [G3] der schmalen Spaltzonen, die nicht die schmalste Spaltzone sind, 0,001 oder größer und kleiner als 1 ist.

**3.** Verfahren nach Anspruch 1 oder 2, wobei die organischen Fasern, die dem Extruder zugeführt werden, eine mittlere Faserlänge von 1 $\mu$m bis 10.000 $\mu$m aufweisen, und
das Verhältnis des Spalts [G1] in der schmalsten Spaltzone mit dem Mindestspalt unter den mehreren schmalen Spaltzonen bezüglich der mittleren Faserlänge 0,001 bis 10 beträgt, wobei die mittlere Faserlänge mit einem Rasterelektronenmikroskop (REM) gemessen wird.

**4.** Verfahren nach einem der Ansprüche 1 bis 3, wobei die organischen Fasern, die dem Extruder zugeführt werden,

Partikel mit einer mittleren Partikelgröße von 1 μm bis 10.000 μm bilden und
das Verhältnis des Spalts [G1] in der schmalsten Spaltzone mit dem Mindestspalt unter den mehreren schmalen Spaltzonen bezüglich der mittleren Partikelgröße 0,001 bis 10 beträgt.

**5.** Verfahren zur Herstellung einer Harzzusammensetzung, die eine erste und eine zweite Komponente umfasst, wobei:

die erste Komponente ein Polymer ist, und
die zweite Komponente organische Fasern oder eine Kombination organischer Fasern mit einem Polymer ist, das sich von der ersten Komponente unterscheidet,
das Verfahren einen Knetschritt umfasst, bei dem die erste und die zweite Komponente mit einem Extruder geknetet werden, der mit einer Knetzone einschließlich einer Druckabfallzone versehen ist,
die Druckabfallzone ein Ort ist, an dem der Druck des Zulaufs in die Druckabfallzone 0,5 bis 20 MPa beträgt und das Verhältnis des Drucks des Abflusses aus der Druckabfallzone bezüglich des Drucks des Zulaufs in die Druckabfallzone 0,2 oder niedriger ist, und
der Gehalt der zweiten Komponente im Zulauf in die Druckabfallzone 15 bis 90 Masse-% beträgt,
wobei die organischen Fasern in der Harzzusammensetzung einen mittleren Faserdurchmesser von 1000 nm oder kleiner und ein Verhältnis mittlere Faserlänge/mittlerer Faserdurchmesser von 30 oder mehr aufweisen, wobei der mittlere Faserdurchmesser und die mittlere Faserlänge mit einem Rasterelektronenmikroskop (REM) gemessen werden.

**6.** Verfahren zur Herstellung einer Harzzusammensetzung, die eine erste und eine zweite Komponente umfasst, wobei:

die erste Komponente ein Polymer ist, und
die zweite Komponente organische Fasern oder eine Kombination organischer Fasern mit einem Polymer ist, das sich von der ersten Komponente unterscheidet,
das Verfahren einen Knetschritt umfasst, bei dem die erste und die zweite Komponente mit einem Extruder geknetet werden, der mit einer Knetzone einschließlich einer Druckabfallzone versehen ist,
die Druckabfallzone ein Ort ist, an dem der Druck des Zulaufs in die Druckabfallzone 0,5 bis 20 MPa beträgt und das Verhältnis des Drucks des Abflusses aus der Druckabfallzone bezüglich des Drucks des Zulaufs in die Druckabfallzone 0,2 oder niedriger ist, und
beim Knetschritt dem Gemisch ein zusätzliches Polymer mit einer niedrigeren Temperatur als der des Gemischs, das die Druckabfallzone durchlaufen hat, zugegeben wird, um das Gemisch zu kühlen,
wobei die organischen Fasern in der Harzzusammensetzung einen mittleren Faserdurchmesser von 1000 nm oder kleiner und ein Verhältnis mittlere Faserlänge/mittlerer Faserdurchmesser von 30 oder mehr aufweisen, wobei der mittlere Faserdurchmesser und die mittlere Faserlänge mit einem Rasterelektronenmikroskop (REM) gemessen werden.

**7.** Verfahren zur Herstellung einer Harzzusammensetzung, die eine erste und eine zweite Komponente umfasst, wobei:

die erste Komponente ein Polymer ist, und
die zweite Komponente organische Fasern oder eine Kombination organischer Fasern mit einem Polymer ist, das sich von der ersten Komponente unterscheidet,
das Verfahren einen Knetschritt umfasst, bei dem die erste Komponente und die zweite Komponente mit einem Extruder geknetet werden, der mit einer Knetzone einschließlich mehrerer Hochdruckzonen bei einem Druck von 0,1 MPa oder mehr versehen ist, und
der Druck [P1] in der Zone mit dem höchsten Druck unter den mehreren Hochdruckzonen 0,5 MPa oder höher ist und das Verhältnis [P1/P2] des Drucks [P1] zum Mittelwert [P2] für den Druck in den Hochdruckzonen, die nicht die Zone mit dem höchsten Druck sind, größer als 1 und 100 oder niedriger ist,
wobei das Verhältnis [P1/P3] des Drucks [P1] zum Druck [P3] jeder Hochdruckzone, die nicht die Zone mit dem höchsten Druck ist, größer als 1 und 100 oder niedriger ist.

**8.** Verfahren nach Anspruch 7, wobei, für jede Hochdruckzone,

der Druck des Zulaufs in die Hochdruckzone 0,5 bis 20 MPa beträgt, und
das Verhältnis des Drucks des Abflusses aus der Hochdruckzone zum Druck des Zulaufs in die Hochdruckzone 0,2 oder weniger beträgt.

**9.** Verfahren nach Anspruch 7 oder 8, wobei für jede Hochdruckzone der Gehalt der zweiten Komponente im Zulauf zur

Hochdruckzone 15 bis 90 Masse-% beträgt.

**10.** Verfahren nach einem der Ansprüche 7 bis 9, wobei in dem Knetschritt ein zusätzliches Polymer bei einer niedrigeren Temperatur als der des Gemischs, das alle der mehreren Hochdruckzonen durchlaufen hat, zum Gemisch zugegeben wird, um das Gemisch zu kühlen.

**11.** Verfahren zur Herstellung einer Harzzusammensetzung, die eine erste und eine zweite Komponente umfasst, wobei:

die erste Komponente ein Polymer ist, und
die zweite Komponente organische Fasern oder eine Kombination organischer Fasern mit einem Polymer ist, das sich von der ersten Komponente unterscheidet,
das Verfahren Folgendes umfasst:

einen dispersiven Mischschritt, bei dem die erste Komponente und die zweite Komponente in einer dispersiven Mischzone eines Extruders dispersiv gemischt werden, um ein dispersiv gemischtes Produkt zu erhalten, wobei das dispersive Mischen ein Mischzustand ist, in dem sich die Größe der zweiten Komponente wesentlich ändert, und
einen verteilten Mischschritt, bei dem zumindest das dispersiv gemischte Produkt in einer Verteilungsmischzone des Extruders verteilt gemischt wird, um eine Harzzusammensetzung zu erhalten, wobei das verteilte Mischen ein Mischzustand ist, in dem sich der dispergierte Zustand der zweiten Komponente in der ersten Komponente ändert, jedoch ohne wesentliche Änderung der Größe der zweiten Komponente, und
die Konzentration [CA] der zweiten Komponente in der dispersiven Mischzone 10 Massen-% bis 90 Massen-% beträgt, die Konzentration [CB] der zweiten Komponente in der Verteilungsmischzone 1 Massen-% bis 50 Massen-% ist und das Verhältnis [CA]/[CB] 2 bis 90 ist.

**12.** Verfahren nach einem der Ansprüche 1 bis 10, wobei:
das Verfahren Folgendes umfasst:

einen dispersiven Mischschritt, bei dem die erste Komponente und die zweite Komponente in einer dispersiven Mischzone des Extruders dispersiv gemischt werden, um ein dispersiv gemischtes Produkt zu erhalten, wobei das dispersive Mischen ein Mischzustand ist, in dem sich die Größe der zweiten Komponente wesentlich ändert, und
einen verteilten Mischschritt, bei dem zumindest das dispersiv gemischte Produkt in einer Verteilungsmischzone des Extruders verteilt gemischt wird, um eine Harzzusammensetzung zu erhalten, wobei das verteilte Mischen ein Mischzustand ist, in dem sich der dispergierte Zustand der zweiten Komponente in der ersten Komponente ändert, jedoch ohne wesentliche Änderung der Größe der zweiten Komponente, und
die Konzentration [CA] der zweiten Komponente in der dispersiven Mischzone 10 Massen-% bis 90 Massen-% beträgt, die Konzentration [CB] der zweiten Komponente in der Verteilungsmischzone 1 Massen-% bis 50 Massen-% ist und das Verhältnis [CA]/[CB] 2 bis 90 ist.

**13.** Verfahren nach Anspruch 11 oder 12, das ferner, vor dem dispersiven Mischschritt, einen Schritt umfasst, bei dem die zweite Komponente einer Schmelze der ersten Komponente zugesetzt wird, um eine Vormischung zu erhalten, und wobei die Vormischung der dispersiven Mischzone zugeführt wird.

**14.** Verfahren nach einem der Ansprüche 1 bis 13, wobei die organischen Fasern Cellulosefasern sind.

**15.** Verfahren nach einem der Ansprüche 1 bis 4 und 7 bis 14, wobei die organischen Fasern in der Harzzusammensetzung einen mittleren Faserdurchmesser von 1000 nm oder kleiner und ein Verhältnis mittlere Faserlänge/mittlerer Faserdurchmesser von 30 oder mehr aufweisen, wobei der mittlere Faserdurchmesser und die mittlere Faserlänge mit einem Rasterelektronenmikroskop (REM) gemessen werden.

**16.** Verfahren nach einem der Ansprüche 1 bis 15, wobei die organischen Fasern dem Extruder in trockener Form zugeführt werden.

## Revendications

**1.** Procédé de production d'une composition de résine comportant un premier composant et un deuxième composant,

dans lequel :

le premier composant se présente sous forme d'un polymère et
le deuxième composant se présente sous forme de fibres organiques, ou d'une combinaison de fibres organiques avec un polymère différent du premier composant,
le procédé comportant une étape de malaxage au cours de laquelle le premier composant et le deuxième composant sont malaxés au moyen d'une extrudeuse pourvue d'une zone de malaxage comportant une pluralité de zones d'écartement étroites où l'écartement entre la paroi interne du cylindre et la vis est inférieur ou égal à 2 mm,
dans lequel le rapport [G1/G2] de l'écartement [G1] dans la zone d'écartement la plus étroite, présentant l'écartement minimal parmi la pluralité de zones d'écartement étroites, sur la valeur moyenne [G2] des écartements des zones d'écartement étroites autres que la zone d'écartement la plus étroite est supérieur ou égal à 0,001 et inférieur à 1.

**2.** Procédé selon la revendication 1, dans lequel le rapport [G1/G3] de l'écartement [G1] dans la zone d'écartement la plus étroite, présentant l'écartement minimal parmi la pluralité de zones d'écartement étroites, sur chaque écartement [G3] des zones d'écartement étroites autres que la zone d'écartement la plus étroite est supérieur ou égal à 0,001 et inférieur à 1.

**3.** Procédé selon la revendication 1 ou 2, dans lequel les fibres organiques fournies à l'extrudeuse présentent une longueur moyenne de fibres comprise entre 1 $\mu$m et 10 000 $\mu$m, et
le rapport de l'écartement [G1] dans la zone d'écartement la plus étroite, présentant l'écartement minimal parmi la pluralité de zones d'écartement étroites, sur la longueur moyenne de fibres est compris entre 0,001 et 10, la longueur moyenne de fibres étant mesurée par un microscope électronique à balayage (MEB).

**4.** Procédé selon l'une quelconque des revendications 1 à 3, dans lequel

les fibres organiques fournies à l'extrudeuse forment des particules présentant une taille moyenne de particules comprise entre 1 $\mu$m et 10 000 $\mu$m, et
le rapport de l'écartement [G1] dans la zone d'écartement la plus étroite, présentant l'écartement minimal parmi la pluralité de zones d'écartement étroites, sur la taille moyenne de particules est compris entre 0,001 et 10.

**5.** Procédé de production d'une composition de résine comportant un premier composant et un deuxième composant, dans lequel :

le premier composant se présente sous forme d'un polymère, et
le deuxième composant se présente sous forme de fibres organiques, ou d'une combinaison de fibres organiques avec un polymère différent du premier composant,
le procédé comporte une étape de malaxage au cours de laquelle le premier composant et le deuxième composant sont malaxés au moyen d'une extrudeuse pourvue d'une zone de malaxage comportant une zone de chute de pression,
la zone de chute de pression est un endroit où la pression du matériau entrant dans la zone de chute de pression est comprise entre 0,5 et 20 MPa et le rapport de la pression du matériau sortant de la zone de chute de pression sur la pression du matériau entrant dans la zone de chute de pression est inférieur ou égal à 0,2, et
la teneur en deuxième composant dans le matériau entrant dans la zone de chute de pression est comprise entre 15 et 90 % en masse,
dans lequel les fibres organiques dans la composition de résine présentent un diamètre moyen de fibres inférieur ou égal à 1000 nm et un rapport longueur moyenne de fibres/diamètre moyen de fibres supérieur ou égal à 30, le diamètre moyen de fibres et la longueur moyenne de fibres étant mesurés par un microscope électronique à balayage (MEB).

**6.** Procédé de production d'une composition de résine comportant un premier composant et un deuxième composant, dans lequel :

le premier composant se présente sous forme d'un polymère, et
le deuxième composant se présente sous forme de fibres organiques, ou d'une combinaison de fibres organiques avec un polymère différent du premier composant,
le procédé comporte une étape de malaxage au cours de laquelle le premier composant et le deuxième

composant sont malaxés au moyen d'une extrudeuse pourvue d'une zone de malaxage comportant une zone de chute de pression,

la zone de chute de pression est un endroit où la pression du matériau entrant dans la zone de chute de pression est comprise entre 0,5 et 20 MPa et le rapport de la pression du matériau sortant de la zone de chute de pression sur la pression du matériau entrant dans la zone de chute de pression est inférieur ou égal à 0,2, et

au cours de l'étape de malaxage, un polymère supplémentaire à une température inférieure à celle du mélange ayant traversé la zone de chute de pression est ajouté au mélange afin de refroidir le mélange,

dans lequel les fibres organiques dans la composition de résine présentent un diamètre moyen de fibres inférieur ou égal à 1000 nm et un rapport longueur moyenne de fibres/diamètre moyen de fibres supérieur ou égal à 30, le diamètre moyen de fibres et la longueur moyenne de fibres étant mesurés par un microscope électronique à balayage (MEB).

**7.** Procédé de production d'une composition de résine comportant un premier composant et un deuxième composant, dans lequel :

le premier composant se présente sous forme d'un polymère, et

le deuxième composant se présente sous forme de fibres organiques, ou d'une combinaison de fibres organiques avec un polymère différent du premier composant,

le procédé comporte une étape de malaxage au cours de laquelle le premier composant et le deuxième composant sont malaxés au moyen d'une extrudeuse pourvue d'une zone de malaxage comportant une pluralité de zones de haute pression à une pression supérieure ou égale à 0,1 MPa, et

la pression [P1] dans la zone de plus haute pression, présentant la pression maximale parmi la pluralité de zones de haute pression, est supérieure ou égale à 0,5 MPa, et le rapport [P1/P2] de la pression [P1] sur la valeur moyenne [P2] de la pression des zones de haute pression autres que la zone de plus haute pression est supérieur à 1 et inférieur ou égal à 100,

dans lequel le rapport [P1/P3] de la pression [P1] sur la pression [P3] de chaque zone de haute pression autre que la zone de plus haute pression est supérieur à 1 et inférieur ou égal à 100.

**8.** Procédé selon la revendication 7, dans lequel, pour chaque zone de haute pression,

la pression du matériau entrant dans la zone de haute pression est comprise entre 0,5 et 20 MPa, et

le rapport de la pression du matériau sortant de la zone de haute pression sur la pression du matériau entrant dans la zone de haute pression est inférieur ou égal à 0,2.

**9.** Procédé selon la revendication 7 ou 8, dans lequel, pour chaque zone de haute pression, la teneur en deuxième composant dans le matériau entrant dans la zone de haute pression est comprise entre 15 et 90 % en masse.

**10.** Procédé selon l'une quelconque des revendications 7 à 9, dans lequel, au cours de l'étape de malaxage, un polymère supplémentaire à une température inférieure à celle du mélange ayant traversé toute la pluralité de zones de haute pression est ajouté au mélange afin de refroidir le mélange.

**11.** Procédé de production d'une composition de résine comportant un premier composant et un deuxième composant, dans lequel :

le premier composant se présente sous forme d'un polymère, et

le deuxième composant se présente sous forme de fibres organiques, ou d'une combinaison de fibres organiques avec un polymère différent du premier composant,

le procédé comporte :

une étape de mélange dispersif au cours de laquelle le premier composant et le deuxième composant sont mélangés de manière dispersive dans une zone de mélange dispersif d'une extrudeuse afin d'obtenir un produit mélangé de manière dispersive, le mélange dispersif étant un état de mélange dans lequel la taille du deuxième composant varie sensiblement, et

une étape de mélange distributif au cours de laquelle au moins le produit mélangé de manière dispersive est mélangé de manière distributive dans une zone de mélange distributif de l'extrudeuse afin d'obtenir une composition de résine, le mélange distributif étant un état de mélange dans lequel l'état dispersé du deuxième composant dans le premier composant varie, mais sans variation sensible de la taille du deuxième composant, et

la concentration [CA] du deuxième composant dans la zone de mélange dispersif est comprise entre 10 % en masse et 90 % en masse, la concentration [CB] du deuxième composant dans la zone de mélange distributif est comprise entre 1 % en masse et 50 % en masse, et le rapport [CA]/[CB] est compris entre 2 et 90.

**12.** Procédé selon l'une quelconque des revendications 1 à 10, dans lequel :
le procédé comporte :

une étape de mélange dispersif au cours de laquelle le premier composant et le deuxième composant sont mélangés de manière dispersive dans une zone de mélange dispersif de l'extrudeuse afin d'obtenir un produit mélangé de manière dispersive, le mélange dispersif étant un état de mélange dans lequel la taille du deuxième composant varie sensiblement, et
une étape de mélange distributif au cours de laquelle au moins le produit mélangé de manière dispersive est mélangé de manière distributive dans une zone de mélange distributif de l'extrudeuse afin d'obtenir une composition de résine, le mélange distributif étant un état de mélange dans lequel l'état dispersé du deuxième composant dans le premier composant varie, mais sans variation sensible de la taille du deuxième composant, et
la concentration [CA] du deuxième composant dans la zone de mélange dispersif est comprise entre 10 % en masse et 90 % en masse, la concentration [CB] du deuxième composant dans la zone de mélange distributif est comprise entre 1 % en masse et 50 % en masse, et le rapport [CA]/[CB] est compris entre 2 et 90.

**13.** Procédé selon la revendication 11 ou 12, comportant en outre, avant l'étape de mélange dispersif, une étape au cours de laquelle le deuxième composant est ajouté à une masse fondue du premier composant afin d'obtenir un prémélange, et dans lequel le prémélange est fourni à la zone de mélange dispersif.

**14.** Procédé selon l'une quelconque des revendications 1 à 13, dans lequel les fibres organiques sont des fibres de cellulose.

**15.** Procédé selon l'une quelconque des revendications 1 à 4 et 7 à 14, dans lequel les fibres organiques dans la composition de résine présentent un diamètre moyen de fibres inférieur ou égal à 1000 nm et un rapport longueur moyenne de fibres/diamètre moyen de fibres supérieur ou égal à 30, le diamètre moyen de fibres et la longueur moyenne de fibres étant mesurés par un microscope électronique à balayage (MEB).

**16.** Procédé selon l'une quelconque des revendications 1 à 15, dans lequel les fibres organiques sont fournies à l'extrudeuse sous forme sèche.

FIG. 1

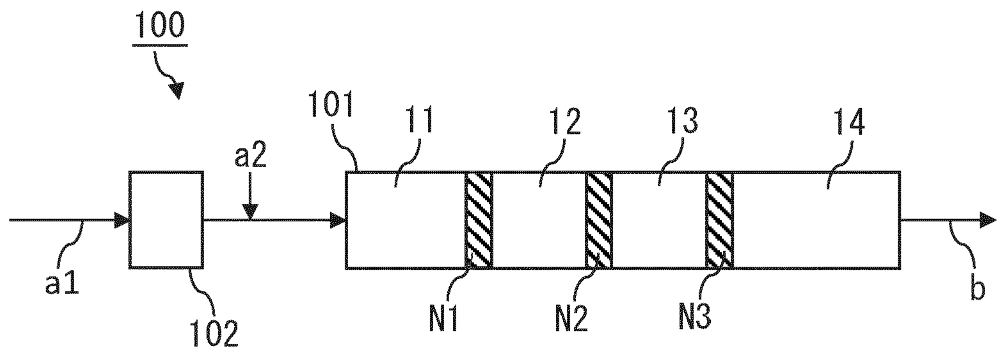


FIG. 2

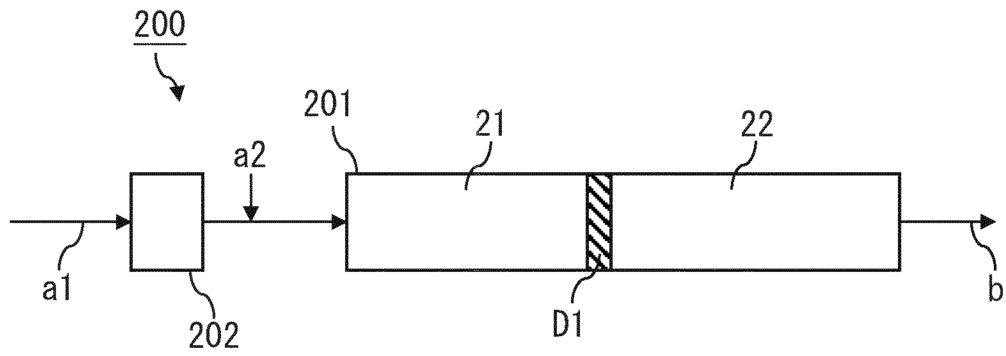


FIG. 3

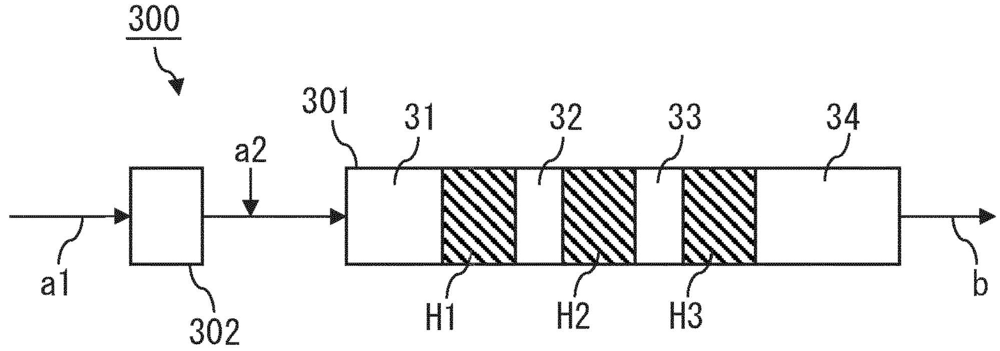

FIG. 4

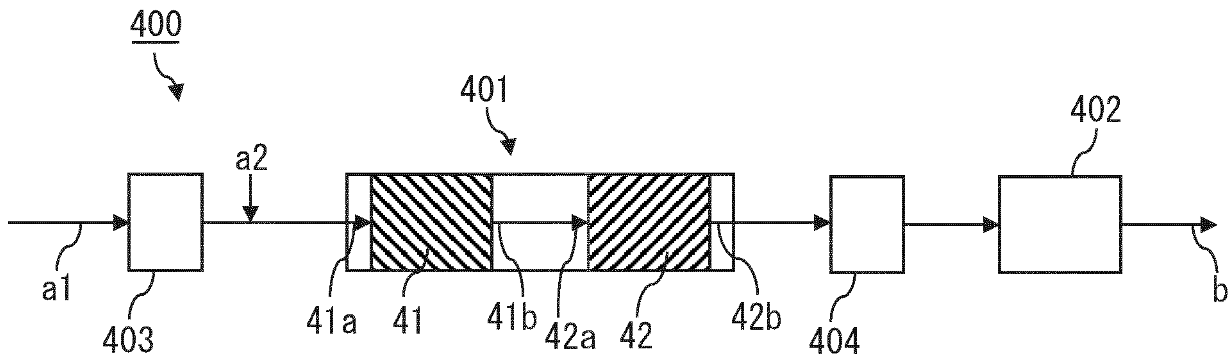
400
401
402
a2
a1
403
41a
41
41b
42a
42
42b
404
b

FIG. 5

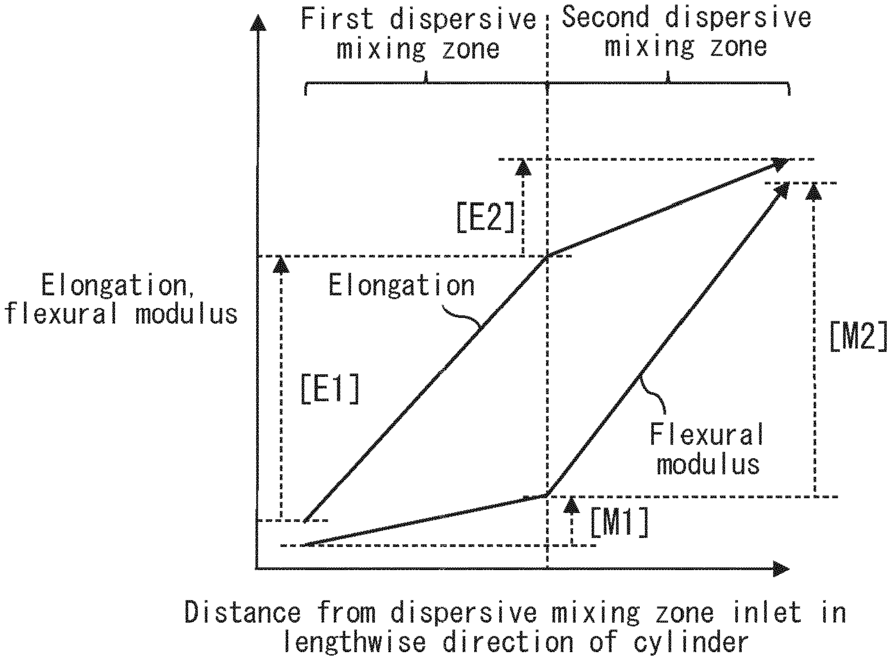
First dispersive mixing zone
Second dispersive mixing zone
[E2]
Elongation, flexural modulus
Elongation
[E1]
[M2]
Flexural modulus
[M1]
Distance from dispersive mixing zone inlet in lengthwise direction of cylinder

FIG. 6

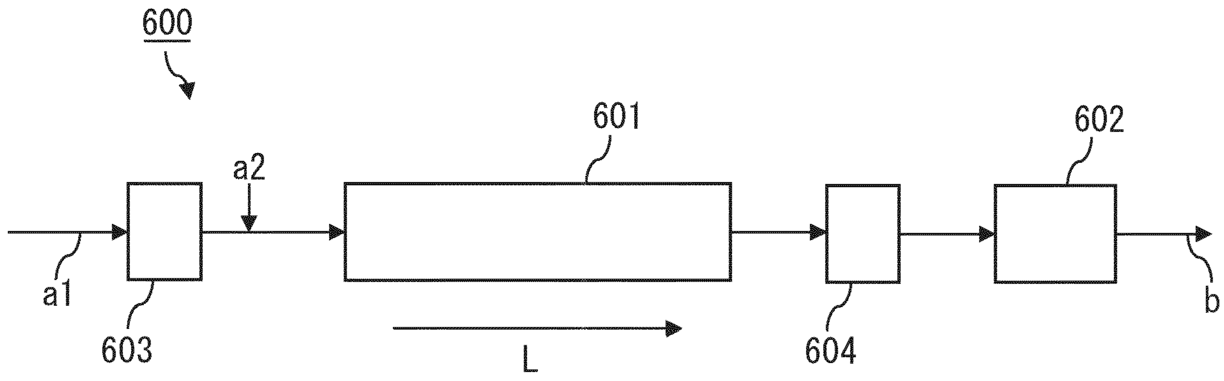
600
601
602
a2
a1
603
L
604
b

FIG. 7

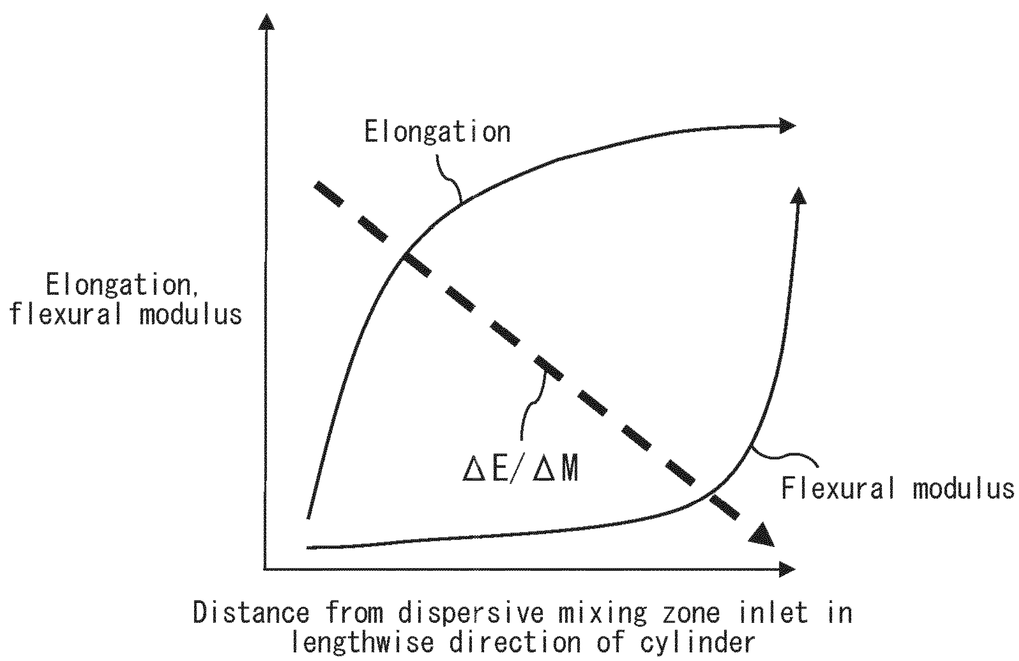
Elongation
Elongation,
flexural modulus
ΔE/ΔM
Flexural modulus
Distance from dispersive mixing zone inlet in
lengthwise direction of cylinder

FIG. 8

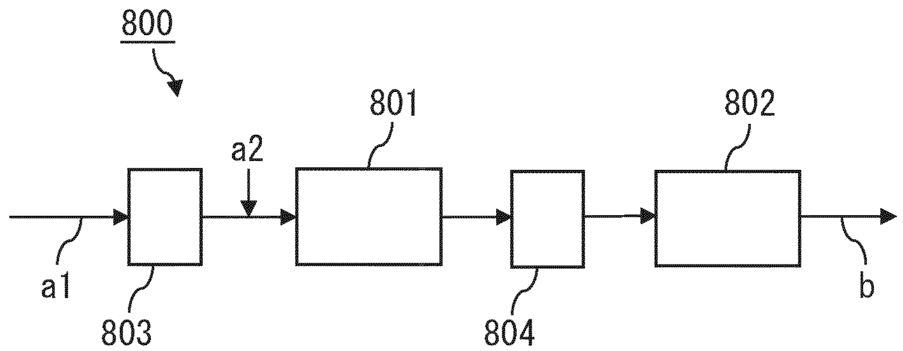

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4708623 A
- JP 2016108547 A
- JP 7228775 A
- JP 4012283 B
- JP 60035006 A
- JP 60035007 A
- JP 60035008 A
- JP 5155930 A
- JP 3163088 A
- US 5272236 A


### Non-patent literature cited in the description


- Polymer Process Engineering. Prentice-Hall, Inc, 1994, 291-294
- Japanese Pharmacopeia
- Mokushitsu Kagaku Jikken Manual. 2000, 92-97
- *Cellulose*, 1998, vol. 5, 153-164